(19)

Europäisches
Patentamt
European
Patent Office
Office européen
des brevets

(11)     EP 2 456 205 A1

(12)     EUROPEAN PATENT APPLICATION
published in accordance with Art. 153(4) EPC

(43) Date of publication:
23.05.2012  Bulletin 2012/21

(51) Int Cl.:
*H04N 7/32* (2006.01)

(21) Application number: 10799777.7

(86) International application number:
PCT/JP2010/061658

(22) Date of filing: 09.07.2010

(87) International publication number:
WO 2011/007719 (20.01.2011 Gazette 2011/03)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 17.07.2009  JP 2009168499

(71) Applicant: Sony Corporation
Tokyo 108-0075 (JP)

(72) Inventor: SATO Kazushi
Tokyo 108-0075 (JP)

(74) Representative: Robinson, Nigel Alexander Julian
et al
D Young & Co LLP
120 Holborn
London EC1N 2DY (GB)

(54)     **IMAGE PROCESSING APPARATUS AND METHOD**

(57)     The present invention relates to an image processing device and method enabling encoding efficiency to be improved with VLC format encoding.

A VLC table switching unit selects a k = 0 table in accordance with a quantization parameter lower than a predetermined value and selects a k = 1 table in accordance with a quantization parameter higher than the predetermined value. A code number assigning unit assigns an inter 16 x 16 mode to code number "0" in accordance with a quantization parameter lower than the predetermined value, and assigns a skip (or direct) mode to code number "0" in accordance with a quantization parameter higher than the predetermined value. The present invention can be applied to an image encoding device which performs encoding with the H.264/AVC format, for example.

FIG. 17

| Code Number | k=0 | k=1 |
|---|---|---|
| 0 | 1 | 10 |
| 1 | 01 | 11 |
| 2 | 001 | 010 |
| 3 | 0001 | 011 |
| 4 | 00001 | 0010 |
| 5 | 000001 | 0011 |
| 6 | 0000001 | 00010 |
| ... | ... | ... |

EP 2 456 205 A1

**Description**

The present invention relates to an image processing device and method, and specifically relates to an image processing device and method which improves encoding efficiency in VLC format encoding.

Background Art

In recent years, devices have come into widespread use which subject an image to compression encoding by employing an encoding system handling image information as digital signals, and at this time compress the image by orthogonal transform such as discrete cosine transform or the like and motion compensation, taking advantage of redundancy which is a feature of the image information, in order to perform highly efficient transmission and storage of information. Examples of this encoding method include MPEG (Moving Picture Experts Group) and so forth.

In particular, MPEG2 (ISO/IEC 13818-2) is defined as a general-purpose image encoding system, and is a standard encompassing both of interlaced scanning images and sequential-scanning images, and standard resolution images and high definition images. For example, MPEG2 has widely been employed now by broad range of applications for professional usage and for consumer usage. By employing the MPEG2 compression system, a code amount (bit rate) of 4 through 8 Mbps is allocated in the event of an interlaced scanning image of standard resolution having $720 \times 480$ pixels, for example. By employing the MPEG2 compression system, a code amount (bit rate) of 18 through 22 Mbps is allocated in the event of an interlaced scanning image of high resolution having $1920 \times 1088$ pixels, for example. Thus, a high compression rate and excellent image quality can be realized.

MPEG2 has principally been aimed at high image quality encoding adapted to broadcasting usage, but does not handle lower code amount (bit rate) than the code amount of MPEG1, i.e., an encoding system having a higher compression rate.

It is expected that demand for such an encoding system will increase from now on due to the spread of personal digital assistants, and in response to this, standardization of the MPEG4 encoding system has been performed. With regard to an image encoding system, the specification thereof was confirmed as international standard as ISO/IEC 14496-2 in December in 1998.

Further, in recent years, standardization of a standard called H.26L (ITU-T Q6/16 VCEG) has progressed with image encoding for television conference usage as the object. With H.26L, it has been known that though greater computation amount is requested for encoding and decoding thereof as compared to a conventional encoding system such as MPEG2 or MPEG4, higher encoding efficiency is realized. Also, currently, as part of activity of MPEG4, standardization for taking advantage of a function that is not supported by H.26L with this H.26L taken as base to realize higher encoding efficiency has been performed as Joint Model of Enhanced-Compression Video Coding. As a schedule of standardization, H.264 and MPEG-4 Part10 (Advanced Video Coding, hereafter referred to as H.264/AVC) become an international standard in March, 2003.

Further, as an expansion thereof, standardization of FRExt (Fidelity Range Extension), which includes encoding tools necessary for operations such as RGB, 4:2:2, 4:4:4, and so forth, and MPEG-2 stipulated 8x8DCT and quantization matrices, has been completed in February of 2005. Accordingly, an encoding format capable of expressing well firm noise included in movies using H.264/AVC was obtained, and is to be used in a wide range of applications such as Blu-Ray Disc (Registered Trademark).

However, as of recent, there are increased needs for even further high compression encoding, such as to compress images around $4000 \times 2000$ pixels, which is fourfold that of Hi-Vision images, or such as to distribute Hi-Vision images in an environment with limited transmission capacity, such as the Internet. Accordingly, the VCEG (= Video Coding Expert Group) under the ITU-T, described above, is continuing study relating to improved encoding efficiency.

The H.264/AVC format has standardized two formats for lossless encoding formats, which are CAVLC (Context-Adaptive Variable Length Coding) and CABAC (Context-Adaptive Binary Arithmetic Coding), as described in NPL 1.

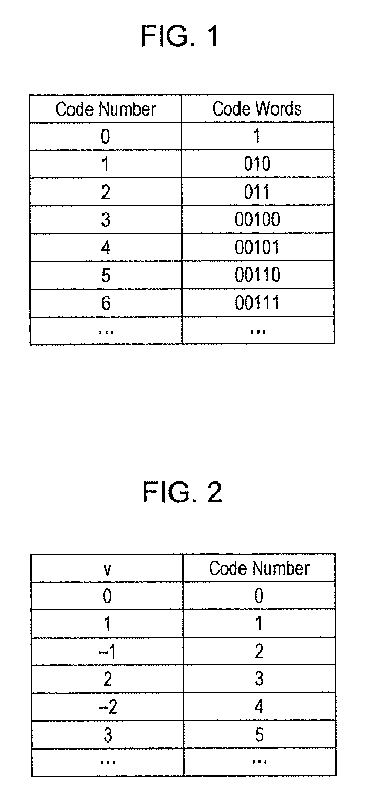

First, the CAVLC format will be described. With CAVLC, a VLC table switched in accordance with occurrence of orthogonal transform coefficients in nearby blocks is used for encoding of orthogonal transform coefficients. Exponential Golumb (Exponential Golumb) coding shown in Fig. 1 is used for encoding of other syntax elements.

With the Exponential Golumb coding in Fig. 1, for example, code number (Code Number) 0 and code word (Code Words) 1 correspond, code number 1 and code word 010 correspond, and code number 2 and code word 011 correspond. Also, code number 3 and code word 00100 correspond, code number 4 and code word 00101 correspond, code number 5 and code word 00110 correspond, and code number 6 and code word 00111 correspond.

Also, with regard to syntax elements such as motion vectors, there is the possibility that a negative value may occur. Accordingly, in the case of syntax elements regarding which there is the possibility that a negative value may occur, these are replaced with code numbers which have no sign based on the correlative relation shown in Fig. 2, and after having been replaced with code numbers which have no sign, the Exponential Golumb coding in Fig. 1 is used for the encoding thereof.

Fig. 2 illustrates the correlative relation between code number and syntax element v. That is to say, by being based on this correlative relation, for example, syntax element v = 0 is replaced with code number 0, syntax element v = 1 is replaced with code number 1, and syntax element v = -1 is replaced with code number 2. Also, syntax element v = 2 is replaced with code number 3, syntax element v = -2 is replaced with code number 4, and syntax element v = 3 is replaced with code number 5.

Next, the CABAC format will be described.

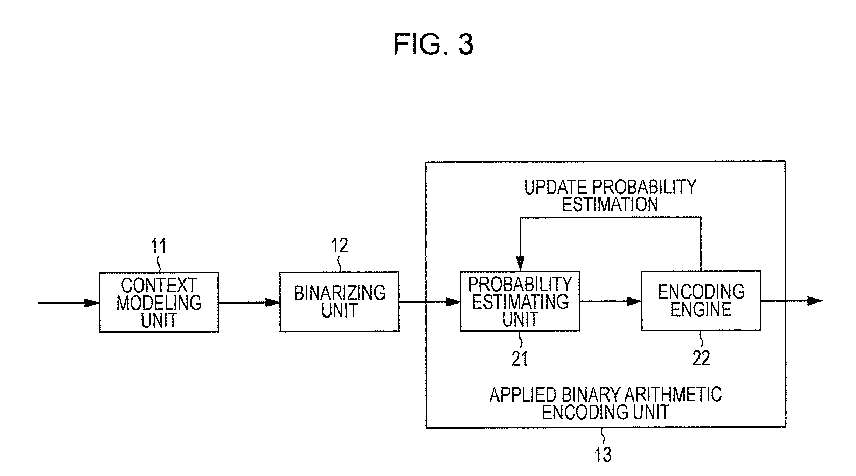

Fig. 3 illustrates an example of the configuration of a lossless encoding unit that performs CABAC encoding. In the example shown in Fig. 3, the lossless encoding unit is configured of a context modeling unit 11, a binarizing unit 12, and an adaptive binary arithmetic coding unit 13 including a probability estimating unit 21 and an encoding engine 22.

Relating to an arbitrary syntax element of a compressed image, the context modeling unit 11 first converts a symbol (symbol) of a syntax element into an appropriate context model, in accordance with past history. In CABAC coding, different syntax elements are encoded using different contexts. Also, even the same syntax elements are encoded using different contexts according to encoding information of nearby blocks or macro block.

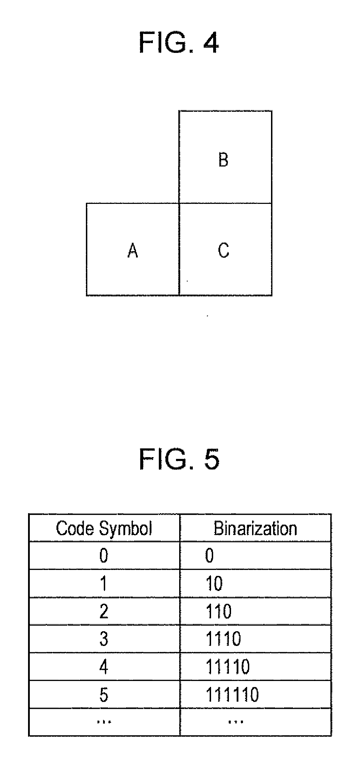

For example, a flag mb_skip_frag will be described with reference to Fig. 4 as an example, but this is the same for processing as to other syntax elements as well.

In the example in Fig. 4, a target macro block C yet to be encoded, and adjacent macro blocks A and B that have already been encoded and that are adjacent to the target macro block C, are shown. We will say that the flag mb_skip_frag is defined as to each of the macro blocks X (X = A, B, C) and is the following Expression (1).

[Mathematical Expression 1]

$$f(X) = \begin{cases} 0 \, (\text{if} \{X = \text{skip}\}) \\ 1 \, (\text{otherwise}) \end{cases} \qquad \cdots (1)$$

That is, in the event that the macro block X is a skipped macro block that uses pixels in a reference frame at spatially corresponding positions, f(X) = 1 is set, and otherwise, f(X) = 0 is set.

At this time, context Context (C) for the current macro block C is calculated as the sum of f(A) of the left adjacent macro block A and f(B) of the upper adjacent macro block B as in the following Expression (2).

$$\text{Context(C)} = f(A) + f(B) \qquad \ldots (2)$$

That is to say, the context Context(C) as to the target macro block C has one of the values of 0, 1, and 2, in accordance with the flag mb_skip_frag of the adjacent macro blocks A and B. That is, the flag mb_skip_frag as to the target macro block C is encoded using an encoding engine 22 differing for one of 0, 1, and 2.

For example, the binarizing unit 12 performs conversion of the symbol of an element which is non-binary data with regard to the syntax, as with the intra prediction mode, using the table shown in Fig. 5.

Illustrated in the table in Fig. 5 is that in the event that the code symbol is 0, the code symbol is binarized into 0, if code symbol is 1, binarized into 10, and if the code symbol is 2, binarized into 110. Also, in the event that the code symbol is 3, this is binarized into 1110, if the code symbol is 4, binarized into 11110, and if the code symbol is 5, binarized into 111110.

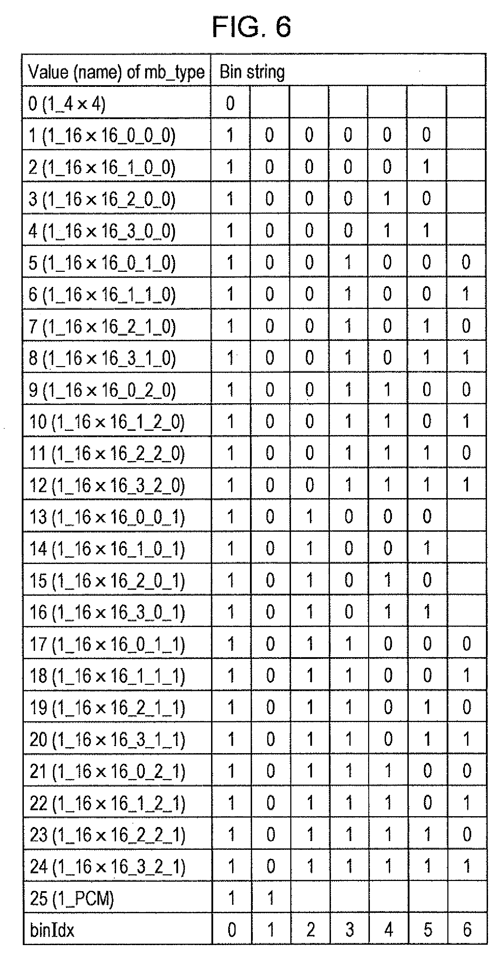

However, with regard to macro block types, binarization processing is performed based on separately-stipulated irregular tables shown in Fig. 6 through Fig. 8 for each of I-slice, P-slice, and B-slice, rather than using this table.

Fig. 6 illustrates a binarization table for macro block types in the case of I and SI slices. In the table in Fig. 6, the values of macro block types (Value(name)of mb_type) 0 through 25 and binary strings (Bin string) corresponding thereto are shown.

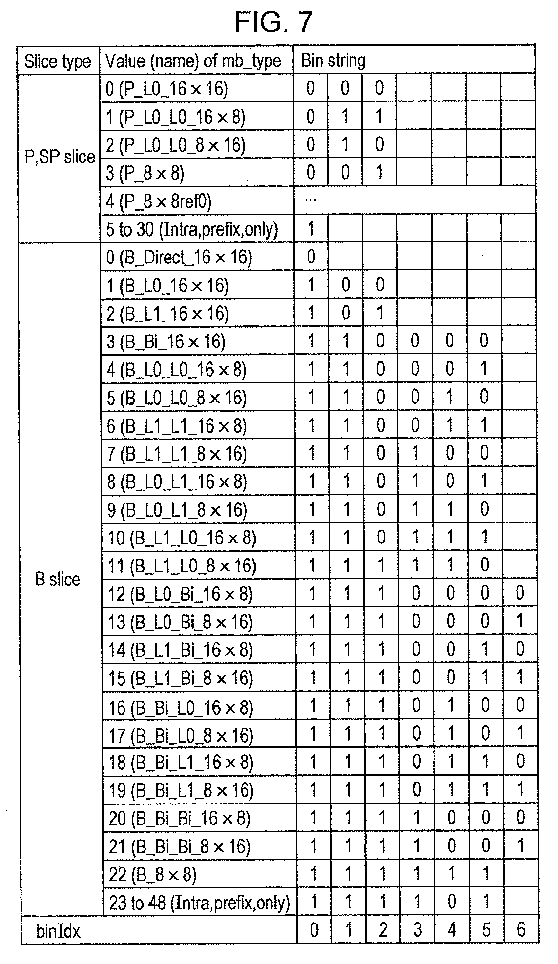

Fig. 7 illustrates a binarization table for macro block types in the case of P, SP, and B slices. Shown in the table in Fig. 7 are the values of macro block types 0 through 30 in the case of P and SP slices and binary strings corresponding thereto, and the values of macro block types 0 through 48 in the case of B slices and binary strings corresponding thereto.

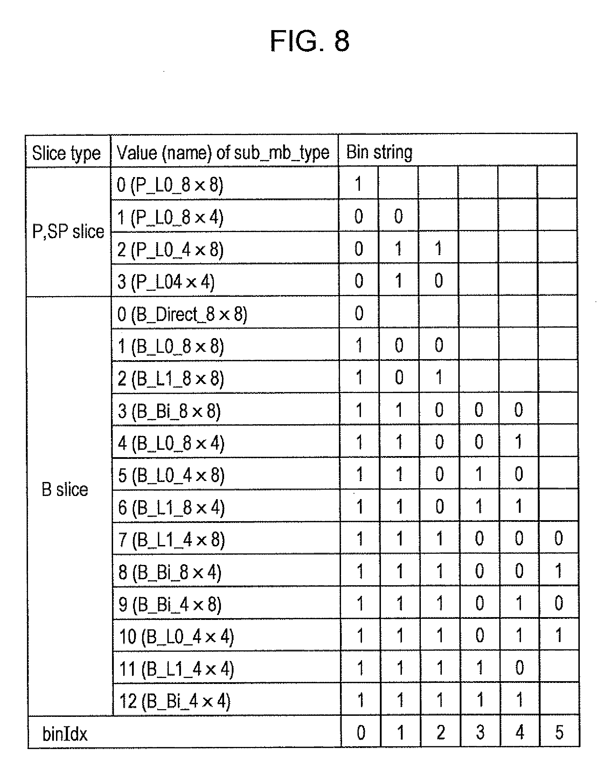

Fig. 8 illustrates a binarization table for sub macro block types in the case of P, SP, and B slices. Shown in the table in Fig. 8 are the values of macro block types 0 through 3 in the case of P and SP slices and binary strings corresponding thereto, and the values of macro block types 0 through 12 in the case of B slices and binary strings corresponding thereto.

The syntax elements binarized by binarization tables such as described above are encoded by the downstream adaptive binary arithmetic coding unit 13.

Returning to Fig. 3, at the adaptive binary arithmetic coding unit 13, the probability estimating unit 21 performs probability estimation regarding the binarized symbols, and binary arithmetic encoding based on the probability estimation is performed by the encoding engine 22. At this time, the probability of "0" and "1" is initialized at the start of the slice, and the probability table thereof is updated each time encoding of 1Bin is performed. That is to say, related models are updated after binary arithmetic encoding processing is performed, so each model can perform encoding processing corresponding to the statistics of actual image compression information.

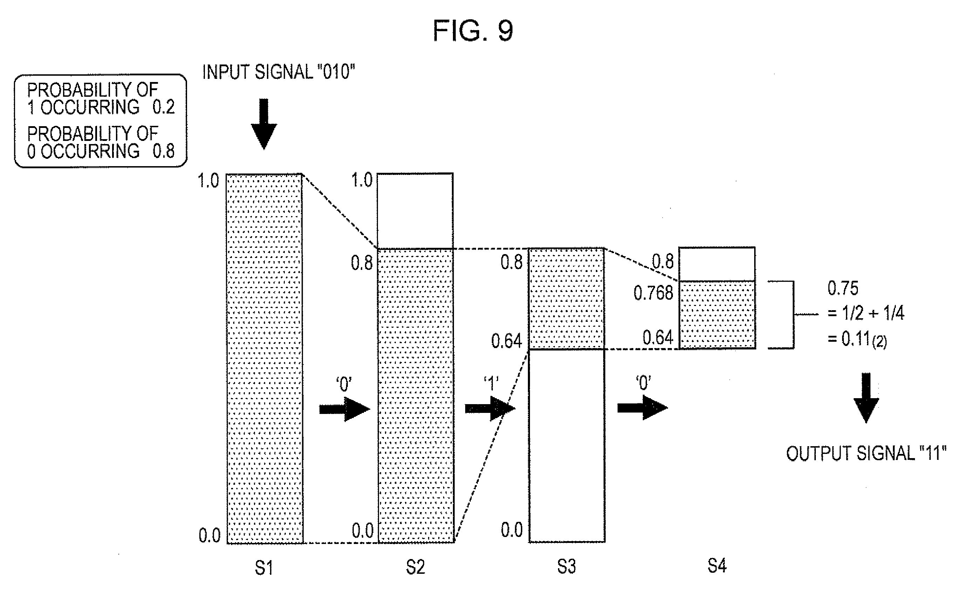

Next, the operations of binary arithmetic encoding will be described with reference to Fig. 9. Now, we will consider encoding a bit string "010" which is an input signal in the event that the probability of occurrence (emergence) of "1" is 0.2 and the occurrence probability of "0" is 0.8.

First, in step S1, "0" is encoded. As a result thereof, the portion of 0.8 at the lower side in the drawing in the initial section (0.0-0.8) is the updated section. In step S2, "1" is encoded. As a result thereof, the portion of 0.2 at the upper side in the drawing in the current section (0.0-0.8) is a newly updated section (0.64-0.8).

In step S3, "0" is encoded. As a result thereof, the portion of 0.8 at the lower side in the drawing in the current section (0.64-0.8) is a newly updated section (0.64-0.76).

A code word in arithmetic encoding is a binary expression of a real value identifying the final section, and in this case 0.64-0.768 is the final section, so 0.75 can be taken as a real number fitting therein. The binary expression of the real number 0.75 is 0.11, so in step S4, "11" obtained by removing the first digit which is always 0 from the binary expression thereof (0.11) is taken as the code word, and finally, the signal "11" is output.

Now, the number of digits of a register holding the section intervals such as "0.64", for example, in Fig. 9, is actually finite. Accordingly, with the processing at the adaptive binary arithmetic coding unit 13, a technique called renormalization (Renormalization) is applied, wherein, as upper order bits of the section to be output are finalized, the finalized bits are output in a timely manner, to the binary arithmetic encoding in Fig. 9, thereby expanding the width of the section.

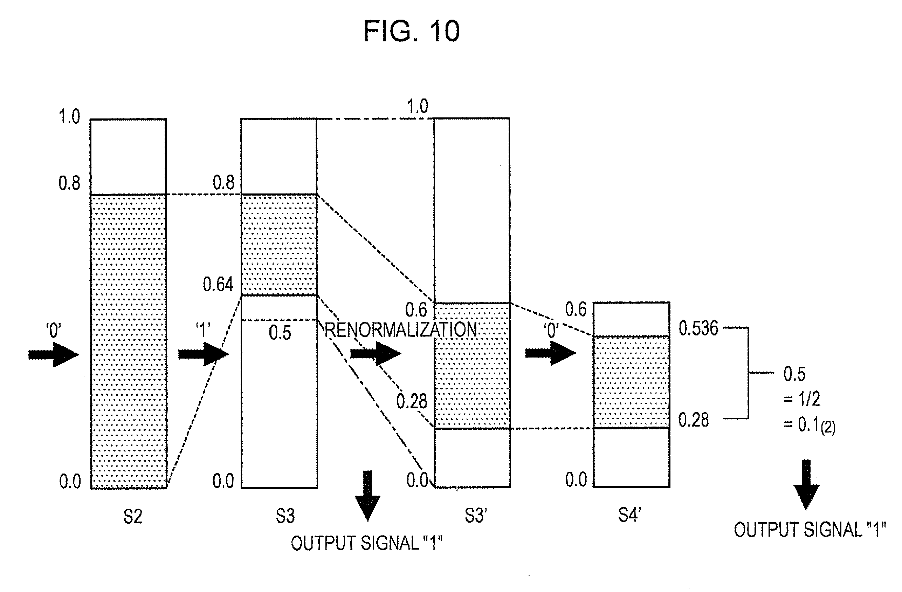

Next, renormalization will be described with reference to Fig. 10. Note that in the example in Fig. 10, step Nos. the same as with Fig. 9 indicate the same steps.

In step S2, "1" is encoded. As a result thereof, the portion of 0.2 at the upper side in the drawing in the current section (0.0-0.8) is a newly updated section (0.64-0.8). In step S3, section (0.64-0.8) has exceeded 0.5, so at this point, "1" is output, and between 0.5 to 1.0 is expanded (renormalized) to between 0.0 to 1.0. Accordingly, the normalized section is (0.28-0.6).

In step S3', "0" is encoded. As a result thereof, the portion of 0.8 at the lower side in the drawing in the current section (0.28-0.6) is a newly updated section (0.28-0.536).

In the case of this example, 0.28-0.536 is the final section, so 0.5 can be taken as a real number fitting therein. The binary expression of the real number 0.5 is 0.1, so in step S4', "1" obtained by removing the first digit which is always 0 from the binary expression thereof (0.1) is taken as the code word, and finally, the signal "1" is output.

This renormalization enables effective use of the precision of the register.

On the other hand, with this H.264/AVC format, appropriate selection of the prediction mode is also important to achieve even higher encoding efficiency.

An example of a selection method for the prediction mode is the method implemented in the reference software (reference software) called JM (Joint Model) disclosed in NPL 2.

In the JM, the two mode determination methods of the High Complexity mode and Low Complexity mode described next can be selected.

In the High Complexity mode, the cost function expressed in the following Expression (3) is used to calculate cost function values for each prediction mode. The prediction mode which yields the smallest value of the calculated cost function value is selected as the optimal prediction mode for the current block (or macro block).

$$\text{Cost}(\text{Mode} \in \Omega) = D + \lambda \cdot R \quad ...(3)$$

Here, $\Omega$ is a is a total set of candidate modes for encoding the current block (or macro block). D is difference (noise) energy between the original image and decoded image in the case of encoding with the prediction mode (Mode). R is the total code amount in the case of encoding with the prediction mode (Mode), including up to orthogonal transform coefficients. $\lambda$ is the Lagrange multiplier yielded as the function of quantization parameters QP.

That is to say, in order to perform mode determination with the High Complexity mode, there is the need to calculate the above-described parameters D and R, so up to the encoding processing is tentatively performed for all candidate prediction modes, and accordingly computational precision is high, but a greater amount of computations is required.

On the other hand, with the Low Complexity mode, a cost function represented by the following Expression (4) is used to calculate the cost function values for the prediction modes. The prediction mode which yields the smallest value of the calculated cost function value is then selected as the optimal prediction mode for the current block (or macro block).

$$Cost(Mode \in \Omega) = D + QPtoQuant(QP) \cdot HeaderBit \ ... (4)$$

Here, unlike the case of the High Complexity mode, D is difference (noise) energy between the prediction image and the input image. HeaderBit is code amount relating to the header information, such as motion vectors and prediction mode and the like not including orthogonal transform coefficients. QPtoQuant is a function yielded as a function of quantization parameters QP.

That is to say, in the Low Complexity mode, only a prediction image is generated for all prediction modes, so there is no need for a decoded image, and there is no need to perform encoding processing and decoding processing. Accordingly, the computational precision is lower than with the case of the High Complexity mode, but can be realized with a smaller amount of computations.

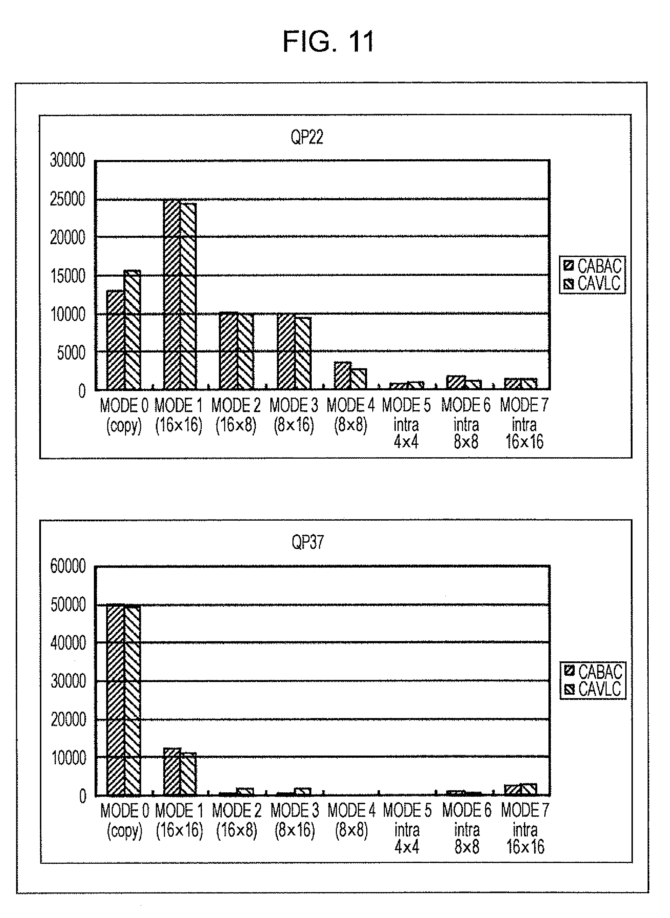

Now, with reference to Fig. 11, description will be made regarding the distribution of prediction modes when encoding a certain sequence with each of CABAC and CAVLC using two types of quantization parameters, using the above-described reference software.

The upper side in Fig. 11 shows a graph of the emergency frequency for each prediction mode in the case of encoding each with CABAC and CAVLC, using a low quantization parameter QP = 22. Also, the lower side in Fig. 11 shows a graph of the emergency frequency for each prediction mode in the case of encoding each with CABAC and CAVLC, using a high quantization parameter QP = 37.

The vertical axes in the graphs represent the emergency frequency for each prediction mode, and the horizontal axes represent the types of the prediction modes, mode 0 through mode 7. Here, mode 0 (copy) represents a skip mode or direct mode, and mode 1 (16 × 16) represents inter 16 × 16 (pixel) mode. Mode 2 (16 × 8) represents inter 16 × 8 (pixel) mode, and mode 3 (8 × 16) represents inter 8 × 16 (pixel) mode. Mode 4 (8 × 8) represents all modes of block size of inter 8 × 8 (pixel) or smaller. Mode 5 (intra 4 × 4) represents intra 4 × 4 (pixel) mode, mode 6 (intra 8 × 8) represents intra 8 × 8 (pixel) mode, and mode 7 (intra 16 × 16) represents intra 16 × 16 (pixel) mode.

That is to say, in the graphs, modes relating to inter are mode 0 through mode 4 in descending order of block size from the left, and modes relating to intra are mode 5 through mode 7 in ascending order of block size from the left.

Now, it can be seen from both graphs that the distributions of prediction modes differ for the low quantization parameter (QP = 22) and the high quantization parameter (QP = 37).

That is to say, a first difference is that with the low quantization parameter, the emergence frequency of all modes of block size of inter 8 × 8 or smaller, represented by mode 4 is present to a certain extent, but with the high quantization parameter, this is almost nonexistent.

Also, a second difference is that with the low quantization parameter, the emergence frequency of the inter 16 × 16 mode represented by mode 1 is highest, but with the high quantization parameter, the emergence frequency of the skip mode or direct mode represented by mode 0 is high.

This is based on the fact of the following tendency in mode determination based on the above-described High Complexity mode or Low Complexity mode. That fact is the tendency that with low quantization parameters (high bit rate), even if the number of header bits such as motion vectors and so forth are increased, a higher prediction efficiency tends to be selected. This also is the tendency that with high quantization parameters (low bit rate), conversely, even if the prediction efficiency is lowered somewhat, a mode with a smaller number of header bits tends to be given priority.

Note that the drawings used with the above description will also be used in the following as drawings for describing the present invention as appropriate.

Citation List

Non Patent Literature

NPL 1: "7.4.2.2 Picture parameter set RBSP semantics", "ITU-T Recommendation H.264 Advanced video coding for generic audiovisual ", P162-P164 November 2007 NPL 2: H.264/AVC Software Coordination, Institut Nach-

**EP 2 456 205 A1**

richtentechnik Heinrich-Hertz-Institut, [Searched July 10, 2009], Internet <URL: http://iphome.hhi.de/suehring/tml/index.htm>

Summary of Invention

Technical Problem

The difference in emergence frequency described above with reference to Fig. 11 is due to updating of the probability table according to the context model described above with reference to Fig. 3 corresponding with CABAC, and encoding processing corresponding to each quantization parameter is performed.

However, with CAVLC, encoding processing is performed with a single table not taking into consideration the difference in emergence frequency due to quantization parameters, so it is difficult to realize high encoding efficiency corresponding to the individual quantization parameters.

The present invention has been made in light of such a situation, and is to improve encoding efficiency in VLC format encoding.

Solution to Problem

A first image processing device according to the present invention includes: quantization parameter decoding means configured to decode a quantization parameter in a current block which is the object of decoding processing; switching means configured to switch decoding methods of information relating to the prediction mode as to the current block, in accordance with the quantization parameter; and prediction mode decoding means configured to decode the information relating to the prediction mode, with the decoding method switched by the switching means.

The switching means may switch the decoding method by switching VLC (Variable Length Coding) coding relating to the prediction mode, in accordance with the quantization parameter.

The information relating to the prediction mode may be information of macro block types.

The information relating to the prediction mode may be information of intra prediction modes.

In the event of a quantization parameter of a value greater than a predetermined threshold, the switching means may switch to a table of which bit length, as to an event of which the code number is small, is short.

In the event of a quantization parameter of a value smaller than a predetermined threshold, the switching means may switch to a table of which bit length increase is gradual even if code number increases.

The encoding means may use Golumb coding for the VLC table.

The encoding means may use Huffman coding for the VLC table.

The switching means may switch the decoding methods by switching assigning of code numbers of the information relating to the prediction mode, in accordance with the quantization parameter.

The information relating to the prediction mode may be information of inter macro block types.

In the event of a quantization parameter of a value greater than a predetermined threshold, the switching means may switch assigning of a skip or direct mode to the smallest code number.

In the event of a quantization parameter of a value smaller than a predetermined threshold, the switching means may switch assigning of an inter $16 \times 16$ prediction mode to the smallest code number.

The information relating to the prediction mode may be information of intra prediction modes.

An image processing method according to a first aspect of the present invention includes the steps of: an image processing device decoding a quantization parameter in a current block which is the object of decoding processing; switching decoding methods of information relating to the prediction mode as to the current block, in accordance with the quantization parameter; and decoding the information relating to the prediction mode, with the switched decoding method.

An image processing device according to a second aspect of the present invention includes: quantization parameter obtaining means configured to obtain a quantization parameter in a current block which is the object of encoding processing; switching means configured to switch encoding methods of information relating to the prediction mode as to the current block, in accordance with the quantization parameter; and prediction mode encoding means configured to encode the information relating to the prediction mode, with the encoding method switched by the switching means.

The switching means may switch the encoding method by switching VLC (Variable Length Coding) coding relating to the prediction mode, in accordance with the quantization parameter.

In the event of a quantization parameter of a value greater than a predetermined threshold, the switching means may switch to a table of which bit length, as to an event of which the code number is small, is short.

In the event of a quantization parameter of a value smaller than a predetermined threshold, the switching means may switch to a table of which bit length increase is gradual even if code number increases.

The switching means may switch the encoding methods by switching assigning of code numbers of the information relating to the prediction mode, in accordance with the quantization parameter.

An image processing method according to the second aspect of the present invention includes the steps of: an image processing device obtaining a quantization parameter in a current block which is the object of encoding processing; switching encoding methods of information relating to the prediction mode as to the current block, in accordance with the quantization parameter; and encode the information relating to the prediction mode, with the encoding method switched by the switching means.

With the first aspect of the present invention, a quantization parameter in a current block which is the object of decoding processing is decoded; decoding methods of information relating to the prediction mode as to the current block are switched in accordance with the quantization parameter; and the information relating to the prediction mode is decoded with the switched decoding method.

With the second aspect of the present invention, a quantization parameter in a current block which is the object of encoding processing is obtained; encoding methods of information relating to the prediction mode as to the current block are switched in accordance with the quantization parameter; and the information relating to the prediction mode is encoded with the encoding method switched by the switching means.

Note that each of the above-described image processing devices may be independent devices, or may be internal blocks making up one image encoding device or image decoding device.

Advantageous Effects of Invention

According to the first aspect of the present invention, an image can be decoded. Also, according to the first aspect of the present invention, encoding efficiency in VLC format encoding can be improved.

According to the second aspect of the present invention, an image can be encoded. Also, according to the second aspect of the present invention, encoding efficiency in VLC format encoding can be improved.

Brief Description of Drawings

[Fig. 1] Fig. 1 is a diagram for describing Exponential Golumb coding.
[Fig. 2] Fig. 2 is a diagram for describing the correlation relation between syntax elements and code numbers without signs.
[Fig. 3] Fig. 3 is a block diagram representing a configuration example of a lossless encoding unit performing CABAC encoding.
[Fig. 4] Fig. 4 is a block diagram for describing CABAC encoding.
[Fig. 5] Fig. 5 is a diagram illustrating a binary table.
[Fig. 6] Fig. 6 is a diagram illustrating a binarization table of macro block types in the case of I and SI slices.
[Fig. 7] Fig. 7 is a diagram illustrating a binarization table of macro block types in the case of P, SP, and B slices.
[Fig. 8] Fig. 8 is a diagram illustrating a binarization table of sub macro block types in the case of P, SP, and B slices.
[Fig. 9] Fig. 9 is a diagram for describing the operations of binary arithmetic encoding.
[Fig. 10] Fig. 10 is a diagram for describing renormalization.
[Fig. 11] Fig. 11 is a diagram illustrating the distribution of prediction modes when encoded with CABAC and CAVLC using different quantization parameters.
[Fig. 12] Fig. 12 is a block diagram illustrating the configuration of an embodiment of an image encoding device to which the present invention has been applied.
[Fig. 13] Fig. 13 is a diagram for describing variable block size motion prediction/compensation processing.
[Fig. 14] Fig. 14 is a diagram for describing an example of a motion vector information generating method.
[Fig. 15] Fig. 15 is a diagram for describing time direct mode.
[Fig. 16] Fig. 16 is a diagram illustrating a configuration example of a mode table switching unit.
[Fig. 17] Fig. 17 is a diagram illustrating a table which the VTC table switching unit in Fig. 16 has.
[Fig. 18] Fig. 18 is a flowchart for describing the encoding processing of the image encoding device in Fig. 12.
[Fig. 19] Fig. 19 is a flowchart for describing the prediction processing in step S21 in Fig. 18.
[Fig. 20] Fig. 20 is a diagram for describing processing sequence in the event of a $16 \times 16$ pixel intra prediction mode.
[Fig. 21] Fig. 21 is a diagram illustrating the kinds of $4 \times 4$ pixel intra prediction modes for luminance signals.
[Fig. 22] Fig. 22 is a diagram illustrating the kinds of $4 \times 4$ pixel intra prediction modes for luminance signals.
[Fig. 23] Fig. 23 is a diagram for describing the direction of $4 \times 4$ pixel intra prediction.
[Fig. 24] Fig. 24 is a diagram for describing $4 \times 4$ pixel intra prediction.
[Fig. 25] Fig. 25 is a diagram illustrating the kinds of $8 \times 8$ pixel intra prediction modes for luminance signals.

[Fig. 26] Fig. 26 is a diagram illustrating the kinds of 8 × 8 pixel intra prediction modes for luminance signals.

[Fig. 27] Fig. 27 is a diagram illustrating the kinds of 16 × 16 pixel intra prediction modes for luminance signals.

[Fig. 28] Fig. 28 is a diagram illustrating the kinds of 16 × 16 pixel intra prediction modes for luminance signals.

[Fig. 29] Fig. 29 is a diagram for describing 16 × 16 pixel intra prediction.

[Fig. 30] Fig. 30 is a diagram illustrating the kinds of intra prediction modes for color difference signals.

[Fig. 31] Fig. 31 is a flowchart for describing the intra prediction processing in step S31 in Fig. 19.

[Fig. 32] Fig. 32 is a flowchart for describing the inter motion prediction processing in step S32 in Fig. 19.

[Fig. 33] Fig. 33 is a flowchart for describing the lossless encoding processing in step S23 in Fig. 18.

[Fig. 34] Fig. 34 is a diagram for describing encoding processing of orthogonal transform coefficients by CAVLC.

[Fig. 35] Fig. 35 is a diagram for describing a specific example of the operating principle of CAVLC.

[Fig. 36] Fig. 36 is a flowchart for describing the encoding processing of macro block types in step S83 in Fig. 33.

[Fig. 37] Fig. 37 is a block diagram illustrating the configuration example of an embodiment of an image decoding device to which the present invention has been applied.

[Fig. 38] Fig. 38 is a block diagram illustrating a configuration example of the lossless encoding unit and mode table switching unit in Fig. 37.

[Fig. 39] Fig. 39 is a flowchart for describing the decoding processing of the image decoding device in Fig. 37.

[Fig. 40] Fig. 40 is a flowchart for describing the lossless decoding processing in step S132 in Fig. 39.

[Fig. 41] Fig. 41 is a flowchart for describing the decoding processing of macro block types in step S153 in Fig. 40.

[Fig. 42] Fig. 42 is a flowchart for describing the prediction processing in step S138 in Fig. 39.

[Fig. 43] Fig. 43 is a block diagram illustrating the configuration of an embodiment of a learning device to which the present invention has been applied.

[Fig. 44] Fig. 44 is a diagram for describing Huffman encoding.

[Fig. 45] Fig. 45 is a flowchart for describing a learning flow of the learning device in Fig. 43.

[Fig. 46] Fig. 46 is a block diagram illustrating a configuration example of the hardware of a computer. Description of Embodiments

Hereafter, an embodiment of the present invention will be described with reference to the drawings.

[Configuration Example of Image Encoding Device]

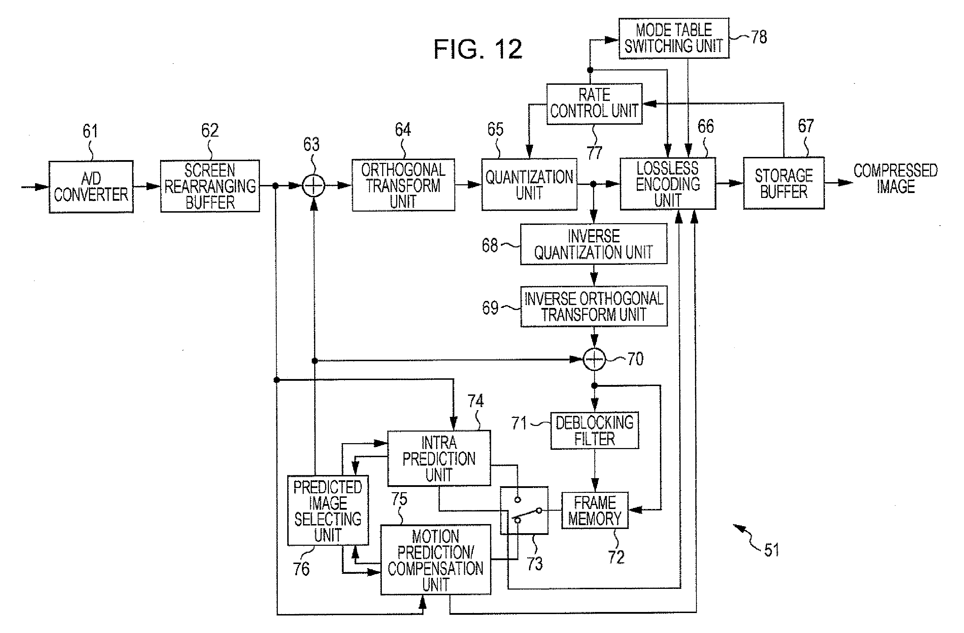

Fig. 12 represents the configuration of an embodiment of an image encoding device serving as an image processing device to which the present invention has been applied.

This image encoding device 51 subjects an image to compression encoding using, for example, the H.264 and MPEG-4 Part10 (Advanced Video Coding) (hereafter, described as 264/AVC) format.

With the example in Fig. 12, the image encoding device 51 is configured of an A/D conversion unit 61, a screen rearranging buffer 62, a computing unit 63, an orthogonal transform unit 64, a quantization unit 65, a lossless encoding unit 66, a storage buffer 67, an inverse quantization unit 68, an inverse orthogonal transform unit 69, a computing unit 70, a deblocking filter 71, frame memory 72, a switch 73, an intra prediction unit 74, a motion prediction/compensation unit 75, a prediction image selecting unit 76, a rate control unit 77, and a mode table switching unit 78.

The A/D conversion unit 61 converts an input image from analog to digital, and outputs to the screen rearranging buffer 62 for storing. The screen rearranging buffer 62 rearranges the images of frames in the stored order for display into the order of frames for encoding according to GOP (Group of Picture).

The computing unit 63 subtracts, from the image read out from the screen rearranging buffer 62, the prediction image from the intra prediction unit 74 selected by the prediction image selecting unit 76 or the prediction image from the motion prediction/compensation unit 75, and outputs difference information thereof to the orthogonal transform unit 64. The orthogonal transform unit 64 subjects the difference information from the computing unit 63 to orthogonal transform, such as discrete cosine transform, Karhunen-Loéve transform, or the like, and outputs a transform coefficient thereof. The quantization unit 65 quantizes the transform coefficient that the orthogonal transform unit 64 outputs.

The quantized transform coefficient that is the output of the quantization unit 65 is input to the lossless encoding unit 66, and subjected to lossless encoding, such as variable length coding, arithmetic coding, or the like, and compressed. At the lossless encoding unit 66, variable-length encoding according to CAVLC (Context-Adaptive Variable Length Coding) stipulated with the H.264/AVC format is performed as the lossless encoding format.

The lossless encoding unit 66 encodes the quantized transform coefficient, and also encodes syntax elements, and takes these as part of header information in the compressed image. At this time, of the syntax elements the lossless encoding unit 66 encodes information relating to the prediction mode, with an encoding method switched by the mode table switching unit 78. The lossless encoding unit 66 supplies the encoded data to the storage buffer 67 for storage.

Syntax elements include information relating to the prediction mode obtained from the intra prediction unit 74 or motion prediction/compensation unit 75, quantization parameters obtained from the rate control unit 77, motion vector information and reference frame information obtained from the motion prediction/compensation unit 75, and so forth. Also, examples of information relating to the prediction mode include macro block type information, information relating to which intra prediction mode (hereinafter referred to as intra prediction mode information).

Macro block type information is obtained from the motion prediction/compensation unit 75 or intra prediction unit 74. Intra prediction mode information is obtained from the intra prediction unit 74 as necessary.

The storage buffer 67 outputs the data supplied from the lossless encoding unit 66 to, for example, a storage device or transmission path or the like downstream not shown in the drawing, as a compressed image encoded by the H.264/AVC format.

Also, the quantized transform coefficient output from the quantization unit 65 is also input to the inverse quantization unit 68, subjected to inverse quantization, and then subjected to further inverse orthogonal transform at the inverse orthogonal transform unit 69. The output subjected to inverse orthogonal transform is added to the prediction image supplied from the prediction image selecting unit 76 by the computing unit 70, and changed into a locally decoded image. The deblocking filter 71 removes block noise from the decoded image, and then supplies to the frame memory 72 for storage. An image before the deblocking filter processing is performed by the deblocking filter 71 is also supplied to the frame memory 72 for storage.

The switch 73 outputs the reference images stored in the frame memory 72 to the motion prediction/compensation unit 75 or intra prediction unit 74.

With this image encoding device 51, the I picture, B picture, and P picture from the screen rearranging buffer 62 are supplied to the intra prediction unit 74 as an image to be subjected to intra prediction (also referred to as intra processing), for example. Also, the B picture and P picture read out from the screen rearranging buffer 62 are supplied to the motion prediction/compensation unit 75 as an image to be subjected to inter prediction (also referred to as inter processing).

The intra prediction unit 74 performs intra prediction processing of all of the intra prediction modes serving as candidates based on the image to be subjected to intra prediction read out from the screen rearranging buffer 62, and the reference image supplied from the frame memory 72 to generate a prediction image. At this time, the intra prediction unit 74 calculates a cost function value as to all candidate intra prediction modes, and selects the intra prediction mode where the calculated cost function value gives the minimum value, as the optimal intra prediction mode.

The intra prediction unit 74 supplies the prediction image generated in the optimal intra prediction mode and the cost function value thereof to the prediction image selecting unit 76. In the event that the prediction image generated in the optimal intra prediction mode has been selected by the prediction image selecting unit 76, the intra prediction unit 74 supplies information indicating the optimal intra prediction mode to the lossless encoding unit 66, along with the corresponding macro block type information. The lossless encoding unit 66 encodes this information as syntax elements so as to be taken as a part of the header information in the compressed image.

The motion prediction/compensation unit 75 performs motion prediction and compensation processing regarding all of the inter prediction modes serving as candidates. Specifically, the image to be subjected to inter processing read out from the screen rearranging buffer 62 is supplied as to the motion prediction/compensation unit 75, as well as the reference image being supplied thereto from the frame memory 72 via the switch 73. The motion prediction/compensation unit 75 detects the motion vectors of all of the inter prediction modes serving as candidates based on the image to be subjected to inter processing and the reference image, subjects the reference image to compensation processing based on the motion vectors, and generates a prediction image.

Also, the motion prediction/compensation unit 75 calculates cost function values of all candidate inter prediction modes. Of the calculated cost function values, the motion prediction/compensation unit 75 decides the prediction mode which yields the smallest value to be the optimal inter prediction mode.

The motion prediction/compensation unit 75 supplies, to the prediction image selecting unit 76, the prediction image generated in the optimal inter prediction mode, and the cost function value thereof. In the event that the prediction image generated in the optimal inter prediction mode is selected by the prediction image selecting unit 76, the motion prediction/compensation unit 75 outputs information of the macro block type corresponding to the optimal inter prediction mode to the lossless encoding unit 66.

At this time, the motion vector information, flags, reference frame information, and so forth are also output to the lossless encoding unit 66. The lossless encoding unit 66 performs lossless encoding processing on information from the motion prediction/compensation unit 75 as syntax elements, and inserts this to the header portion of the compressed image.

The prediction image selecting unit 76 determines the optimal prediction mode from the optimal intra prediction mode and the optimal inter prediction mode based on the cost function values output from the intra prediction unit 74 or motion prediction/compensation unit 75. The prediction image selecting unit 76 then selects the prediction image in the determined optimal prediction mode, and supplies to the computing units 63 and 70. At this time, the prediction image selecting unit 76 supplies the selection information of the prediction image to the intra prediction unit 74 or motion prediction/compensation unit 75.

The rate control unit 77 controls the rate of the quantization operation of the quantization unit 65 with the corresponding quantization parameter, based on a compressed image stored in the storage buffer 67 so as not to cause overflow or underflow. The quantization parameter of the quantization unit 65 used for control of the rate is supplied to the mode table switching unit 78 and lossless encoding unit 66.

The mode table switching unit 78 switches the encoding method for the information relating to the prediction mode in accordance to the quantization parameter from the rate control unit 77, and supplies information of the switched encoding method to the lossless encoding unit 66. For example, the VLC table for information relating to the prediction mode is switched.

Note that with the present embodiment, of the information relating to the prediction mode, an example where the VLC table is switched according to the macro block type will be described.

[Description of H.264/AVC Format]

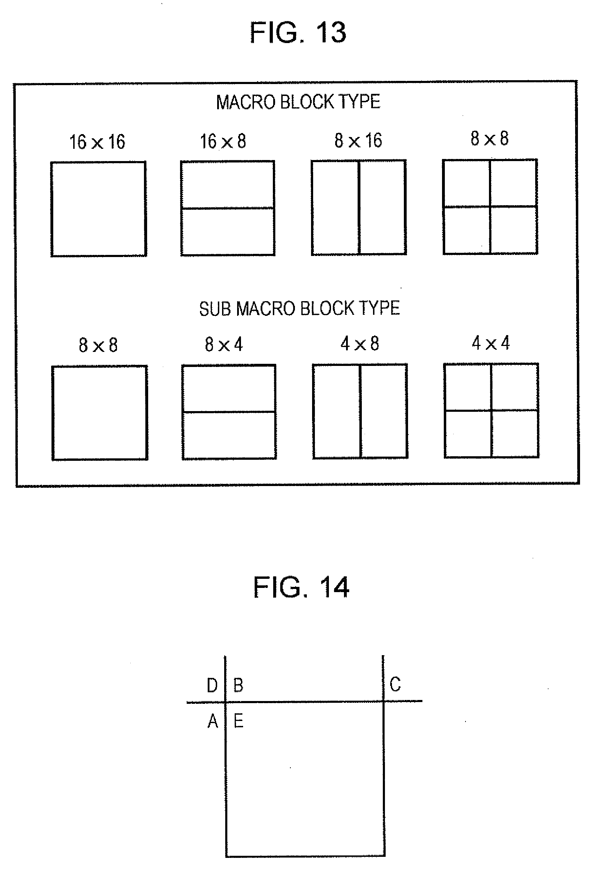

Fig. 13 is a diagram illustrating an example of the block size of motion prediction and compensation according to the H.264/AVC format. With the H.264/AVC format, motion prediction and compensation is performed with the block size being variable.

Macro blocks made up of $16 \times 16$ pixels divided into $16 \times 16$ pixel, $16 \times 8$ pixel, $8 \times 16$ pixel, and $8 \times 8$ pixel partitions are shown from the left in order on the upper tier in Fig. 13. $8 \times 8$ pixel partitions divided into $8 \times 8$ pixel, $8 \times 4$ pixel, $4 \times 8$ pixel, and $4 \times 4$ pixel sub partitions are shown from the left in order on the lower tier in Fig. 13.

Specifically, with the H.264/AVC format, one macro block may be divided into one of $16 \times 16$ pixel, $16 \times 8$ pixel, $8 \times 16$ pixel, and $8 \times 8$ pixel partitions with each partition having independent motion vector information. Also, an $8 \times 8$ pixel partition may be divided into one of $8 \times 8$ pixel, $8 \times 4$ pixel, $4 \times 8$ pixel, and $4 \times 4$ pixel sub partitions with each sub partition having independent motion vector information.

With the H.264/AVC format, by the motion prediction/compensation processing described above with reference to Fig. 13 being performed, vast amounts of motion vector information are generated, and if these are encoded without change, deterioration in encoding efficiency is invited. In response to this, with the H.264/AVC format, according to a method shown in Fig. 14, reduction in motion vector coding information has been realized.

Fig. 14 is a diagram for describing a motion vector information generating method according to the H.264/AVC format.

With the example in Fig. 14, a current block E to be encoded from now (e.g., $16 \times 16$ pixels), and blocks A through D, which have already been encoded, adjacent to the current block E are shown.

Specifically, the block D is adjacent to the upper left of the current block E, the block B is adjacent to above the current block E, the block C is adjacent to the upper right of the current block E, and the block A is adjacent to the left of the current block E. Note that the reason why the blocks A through D are not sectioned is because each of the blocks represents a block having one structure of $16 \times 16$ pixels through $4 \times 4$ pixels described above with reference to Fig. 13.

For example, let us say that motion vector information as to X (= A, B, C, D, E) is represented with $mv_X$. First, prediction motion vector information $pmv_E$ as to the current block E is generated as with the following Expression (5) by median prediction using motion vector information regarding the blocks A, B, and C.

$$pmv_E = med(mv_A, mv_B, mv_C) \quad \ldots (5)$$

The motion vector information regarding the block C may not be used (may be unavailable) due to a reason such as the edge of an image frame, before encoding, or the like. In this case, the motion vector information regarding the block D is used instead of the motion vector information regarding the block C.

Data $mvd_E$ to be added to the header portion of the compressed image, serving as the motion vector information as to the current block E, is generated as in the following Expression (6) using $pmv_E$.

$$mvd_E = mv_E - pmv_E \quad \ldots (6)$$

Note that, in reality, processing is independently performed as to the components in the horizontal direction and vertical direction of the motion vector information.

In this way, prediction motion vector information is generated, data $mvd_E$ that is difference between the prediction motion vector information generated based on correlation with an adjacent block and the motion vector information is added to the header portion of the compressed image, whereby the motion vector information can be reduced.

Now, though the information amount of motion vector information in a B picture is vast, a mode called a direct mode is provided in the H.264/AVC format. With the direct mode, the motion vector information is not stored in the compressed image.

Specifically, on the decoding side, with motion vector information around the current block, or a reference picture, the motion vector information of the current block is extracted from the motion vector information of a co-located block that is a block having the same coordinates as the current block. Accordingly, there is no need to transmit the motion vector information to the decoding side.

This direct mode includes two types of a spatial direct mode (Spatial Direct Mode) and a temporal direct mode (Temporal Direct Mode). The spatial direct mode is a mode for taking advantage of correlation of motion information principally in the spatial direction (horizontal and vertical two-dimensional space within a picture), and generally has an advantage in the event of an image including similar motions of which the motion speeds vary. On the other hand, the temporal direct mode is a mode for taking advantage of correlation of motion information principally in the temporal direction, and generally has an advantage in the event of an image including different motions of which the motion speeds are constant.

Which to use of these spatial direct mode and temporal direct mode can be switched for each slice.

The spatial direct mode according to the H.264/AVC format with be described again with reference to Fig. 14. With the example in Fig. 14, as described above, a current block E (e.g., $16 \times 16$ pixels) to be encoded from now on, and already encoded blocks A through D adjacent to the current block E are shown. Motion vector information as to X (= A, B, C, D, E) is represented with $mv_X$, for example.

Prediction motion vector information $pmv_E$ as to the current block E is generated by medial prediction as with the above-mentioned Expression (5) using the motion vector information relating to the blocks A, B, and C. Motion vector information $mv_E$ as to the current block E in the spatial direct mode is represented as with the following Expression (7).

$$mv_E = pmv_E \qquad \ldots (7)$$

Specifically, in the spatial direct mode, the prediction motion vector information generated by median prediction is taken as the motion vector information of the current block. That is to say, the motion vector information of the current block is generated with the motion vector information of an encoded block. Accordingly, the motion vector according to the spatial direct mode can be generated even on the decoding side, and accordingly, the motion vector information does not need to be transmitted to the decoding side.

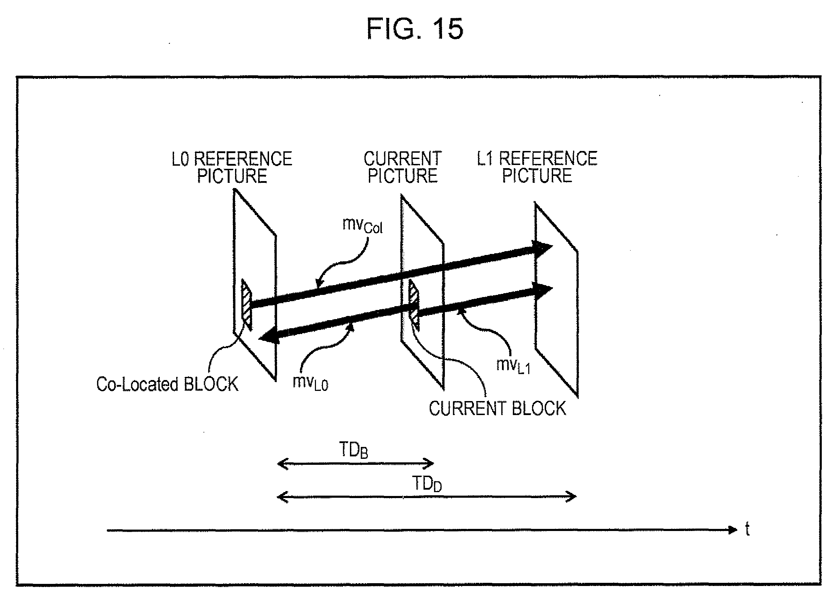

Next, the temporal direct mode according to the H.264/AVC format will be described with reference to Fig. 15.

With the example in Fig. 15, temporal axis t represents elapse of time, an L0 (List0) reference picture, the current picture to be encoded from now on, and an L1 (List1) reference picture are shown from the left in order. Note that, with the H.264/AVC system, the row of the L0 reference picture, current picture, and L1 reference picture is not restricted to this order.

The current block of the current picture is included in a B slice, for example. Accordingly, with regard to the current block of the current picture, L0 motion vector information $mv_{L0}$ and L1 motion vector information $mv_{L1}$ based on the temporal direct mode are calculated as to the L0 reference picture and L1 reference picture.

Also, with the L0 reference picture, motion vector information $mv_{col}$ in a co-located block that is a block positioned in the same spatial address (coordinates) as the current block to be encoded from now on is calculated based on the L0 reference picture and L1 reference picture.

Now, let us say that distance on the temporal axis between the current picture and L0 reference picture is $TD_B$, and distance on the temporal axis between the L0 reference picture and L1 reference picture is $TD_D$. In this case, the L0 motion vector information $mv_{L0}$ in the current picture, and the L1 motion vector information $mv_{L1}$ in the current picture can be calculated with the following Expression (8).

[Mathematical Expression 2]

$$mv_{L0} = \frac{TD_B}{TD_D} mv_{col}$$

$$mv_{L1} = \frac{TD_D - TD_B}{TD_D} mv_{col} \qquad \cdots (8)$$

Note that, with the H.264/AVC format, there is no information equivalent to distances $TD_B$ and $TD_D$ on the temporal axis t as to the current picture within the compressed image. Accordingly, POC (Picture Order Count) that is information indicating the output sequence of pictures is employed as the actual values of the distances $TD_B$ and $TD_D$.

Also, with the H.264/AVC format, there is further the skip mode as a mode which also is a mode wherein motion vector information does not have to be sent. In the event that the encoded data relating to motion vectors is 0 (in the case of the H.264/AVC format, a case wherein the above-described Expression (7) holds), and also all DCT coefficients are 0, the mode for the current block is the skip mode. Also, in the case of a B picture, in the event of the direct mode and the DCT coefficients are 0, the mode for the current block is the skip mode.

[Configuration Example of Mode Table Switching Unit]

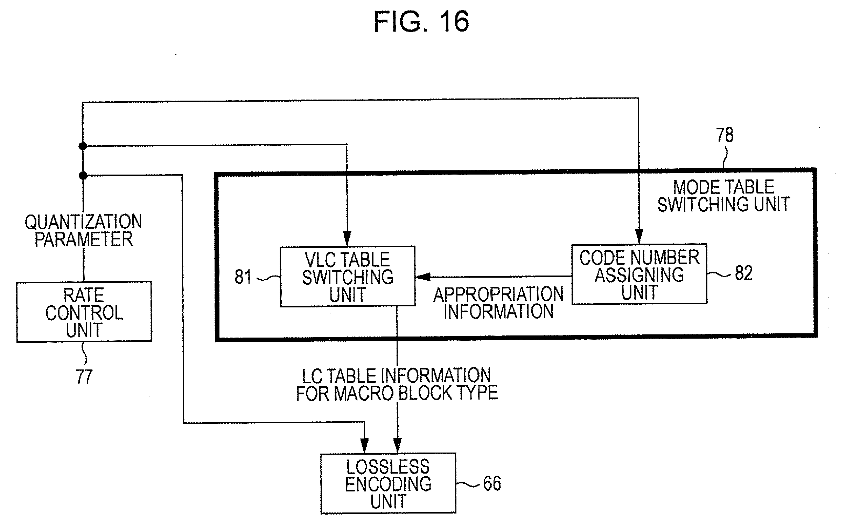

Fig. 16 is a block diagram illustrating a configuration example of the mode table switching unit.

In the example in Fig. 16, the mode table switching unit 78 is configured of a VLC (Variable Length Coding) table switching unit 81 and code number (Code Number) assigning unit 82.

A quantization parameter from the rate control unit 77 is supplied to the VLC table switching unit 81 and the code number assigning unit 82. This quantization parameter is also supplied to the lossless encoding unit 66.

The VLC table switching unit 81 has at least two types of VLC tables corresponding to macro block types. The VLC table switching unit 81 selects one of the two types of VLC tables corresponding to macro block types in accordance with the quantization parameter from the rate control unit 77. The VLC table switching unit 81 adds assigned information from the code number assigning unit 82 to the information of the selected VLC table corresponding to the macro block type, and supplies this to the lossless encoding unit 66.

The code number assigning unit 82 assigns a predetermined block type to a code number 0 in accordance with the quantization parameter from the rate control unit 77, and supplies the assigned information to the VLC table switching unit 81.

The lossless encoding unit 66 encodes orthogonal transform coefficients and syntax elements other than macro block types (including quantization parameters from the rate control unit 77), based on the H.264/AVC format stipulations. In contrast to this, the lossless encoding unit 66 performs encoding regarding the macro block type using the VLC table selected by the VLC table switching unit 81.

[Description of Mode Table Switching Processing]

Next, the mode table switching processing which the mode table switching unit 78 performs will be described.

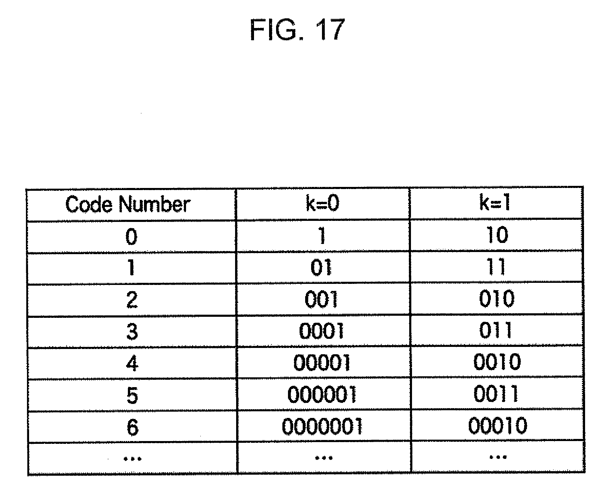

Shown in the example in Fig. 17 are a k = 0 table (left) and k = 1 table (right) for Golumb (Golumb) coding often used in lossless encoding processing, are tables which the VLC table switching unit 81 has. The tables are configured of code words (Code Words) corresponding with code numbers (Code Number). Note that in the case of k = 0, this is nothing other than the unary code shown in Fig. 5.

In the k = 0 table, for example, the code number 0 and code word 1 correspond, the code number 1 and code word 01 correspond, the code number 2 and code word 001 correspond, and the code number 3 and code word 0001 correspond. Also, the code number 4 and code word 00001 correspond, the code number 5 and code word 000001 correspond, and the code number 6 and code word 0000001 correspond.

In the k = 1 table, for example, the code number 0 and code word 10 correspond, the code number 1 and code word 11 correspond, the code number 2 and code word 010 correspond, and the code number 3 and code word 011 correspond. Also, the code number 4 and code word 0010 correspond, the code number 5 and code word 0011 correspond, and the code number 6 and code word 00010 correspond.

Thus, with the example in Fig. 17, the code number "0" is expressed by 1 bit in the k = 0 table, but needs 2 bits with the k = 1 table. However, the code number "6" is expressed by 7 bits in the k = 0 table, but needs 5 bits with the k = 1 table.

That is to say, comparing the k = 0 table and the k = 1 table, with the k = 0 table, the smaller (lower) code numbers have shorter code amount than the k = 1 table. Also, when considering a function regarding the code number and code word bit length, the slopes of the functions of the k = 0 table and the k = 1 table are not the same. The slope of the function of the k = 0 table is greater (steeper) than that of the k = 1 table. Accordingly, with the k = 0 table, small code numbers have shorter code amount that the k = 1 table, but great code numbers have greater code amount than the k = 1 table.

Note that with a k ≥ 2 table, the slope is even smaller (gradual) than the k = 1 table, having a tendency for the slope of the function to be more and more small as k becomes greater. Note that the generating principle for Golumb coding is as follows.

With k as a parameter for code generating, when k > 0, dividing an integer x (≥ 0) to be encoded by k yields a quotient q and residual m. The quotient q is encoded into unary code, and the residual m is encoded as follows following $\log_2 k$.

In the event that this value is an integer value, i.e., in the event that k is a power of 2, m is encoded by binary encoding of $\log_2 k$. Otherwise, if $b = [\log_2 k]$, numbers up to $m = 2_b - k1$ are encoded by binary encoding up to b - 1 bits, and the remainder are encoded by b-byte binary encoding once $2_b - k$ is added thereto.

Now, as described above with reference to Fig. 11, in the case of a prediction mode distribution such as QP = 22, the emergence frequency of mode 2 through mode 4 is higher as compared to QP = 37. That is to say, the emergence frequency of modes for block sizes smaller than the block size of inter 16 × 16 mode is higher as compared to QP = 37.

In the case of such a QP = 22, the VLC table switching unit 81 uses code with a table where the slope of the function is small, such as k = 1. Thus, the code amount for modes for block sizes smaller than the block size of inter 16 × 16 mode can be shortened, and consequently, the average code length can be made shorter.

Conversely, in the case of a prediction mode distribution such as QP = 37, the emergence frequency of mode 2 through mode 4 is quite low. Mode 4 is hardly emerges at all. That is to say, the emergence frequency of modes for block sizes smaller than the block size of inter 16 × 16 mode is quite lower as compared to QP = 22.

In the case of such a QP = 37, the VLC table switching unit 81 uses code with a table where the code length of code number is short, such as k = 0. Thus, the code amount for skip (or direct) mode or inter 16 × 16 mode which are modes for larger block sizes, can be shortened, and consequently, the average code length can be made shorter.

Also, conventionally, with Fig. 11 described above the prediction mode with the highest emergence probability is the inter 16 × 16 mode for QP = 22, but is the for skip (or direct) mode for QP = 37.

Accordingly, the code number assigning unit 82 assigns the inter 16 × 16 mode to code number "0" which can be expressed with the smallest bit length, for higher bit rates (i.e., lower quantization parameters).

Conversely, the code number assigning unit 82 assigns the skip (or direct) mode to code number "0" for lower bit rates (i.e., higher quantization parameters). Accordingly, the average code length can be made even shorter.

That is to say, specifically, at the image encoding device 51, the VLC table switching unit 81 has, for example, the k = 0 table and k = 1 table which differ regarding at least one of the above-described code length of small (low) code number, and slope.

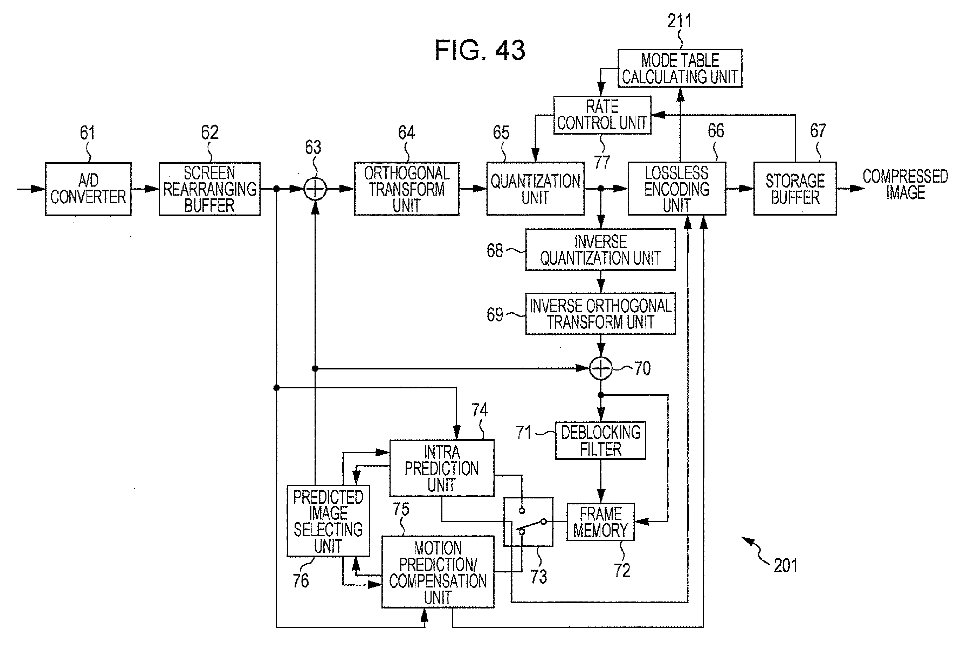

The VLC table switching unit 81 compares a predetermined threshold with the quantization parameter value, and switches a table to be used for encoding of macro block types according to the quantization parameter, from multiple tables. Further, the code number assigning unit 82 switches the assigning of the code number "1" according to the quantization parameter. Note that this predetermined threshold is obtained at the time of learning of the VLC table described with Fig. 43 and on.

Thus, the average code length as to macro block types can be shortened in the output compressed image with both low bit rates and high bit rates, and higher encoding efficiency can be realized.

Now, which an example of macro block types relating to inter macro blocks has been described in the above description, of the above description, switching of VLC tables is the same regarding intra macro blocks as well.

That is to say, in the event of encoding with higher quantization parameters, the code length for intra macro block types as to lower code numbers of which emergence frequency is higher can be shortened by using code according to a VLC table such as k = 0. On the other hand, in the event of encoding with lower quantization parameters, the code length for intra macro block types as to code numbers which are not low, of which emergence frequency is there to a certain extent can be shortened by using code according to a VLC table such as k = 1.

Accordingly, encoding efficiency can be improved with intra macro block types as well.

Also, with the above description, description has been made with a table with Golumb coding of k = 0, for example, as a VLC table as to higher quantization parameters such as QP = 37 or the like, but the VLC table is not restricted to this. That is to say, for the VLC table as to higher quantization parameters, a table is sufficient if the bit length is short as to events with small code numbers as with a Golumb coding k = 0 table, even if the bit length generated is relatively long as to events with great code numbers.

Further, description has been made with a table with Golumb coding of k = 1, for example, as a VLC table as to lower quantization parameters such as QP = 22 or the like, but the VLC table is not restricted to this. That is to say, for the VLC table as to lower quantization parameters, a table is sufficient if the bit length is not as large as with k = 0 as in the Golumb coding k = 1 table, even if the bit length as to events with small code numbers is not as short as with k = 0, and even if the code number increases.

Also, while an example of Golumb coding has been described above, a VLC table generated based on Huffman coding can be used. Note that in this case, there is the need to prepare a VLC table generated based on Huffman coding for each quantization parameter, by learning using training signals. This learning for VLC tables will be described in details with Fig. 43 and on.

Also, while description has been made in the above description regarding an example of switching between two types of VLC tables, the number is not restricted to two, and it is sufficient if there are multiple VLC tables.

[Description of Encoding Processing of Image Encoding Device]

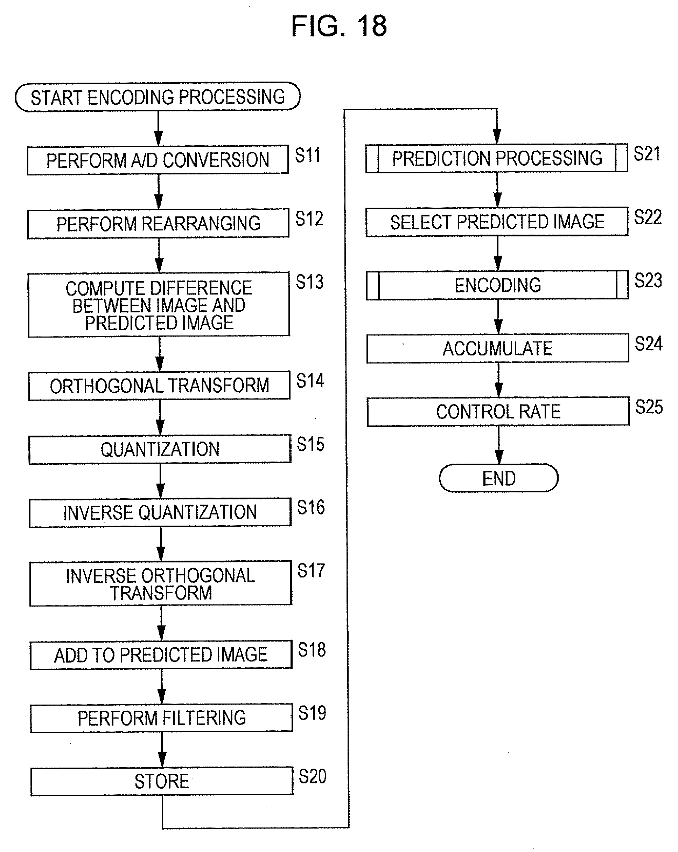

Next, the encoding processing of the image encoding device 51 in Fig. 12 will be described with reference to the flowchart in Fig. 18.

In step S11, the A/D converter 61 performs A/D conversion of an input image. In step S12, the screen rearranging buffer 62 stores the image supplied from the A/D converter 61, and performs rearranging of the pictures from the display order to the encoding order.

In step S13, the computing unit 63 computes the difference between the image rearranged in step S12 and a prediction image. The prediction image is supplied from the motion prediction/compensation unit 75 in the case of performing inter prediction, and from the intra prediction unit 74 in the case of performing intra prediction, to the computing unit 63 via the prediction image selecting unit 76.

The amount of data of the difference data is smaller in comparison to that of the original image data. Accordingly, the data amount can be compressed as compared to a case of performing encoding of the image as it is.

In step S14, the orthogonal transform unit 64 performs orthogonal transform of the difference information supplied from the computing unit 63. Specifically, orthogonal transform such as disperse cosine transform, Karhunen-Loève transform, or the like, is performed, and transform coefficients are output. In step S15, the quantization unit 65 performs quantization of the transform coefficients. The rate is controlled for this quantization, as described with the processing in step S25 described later.

The difference information quantized as described above is locally decoded as follows. That is to say, in step S16, the inverse quantization unit 68 performs inverse quantization of the transform coefficients quantized by the quantization unit 65, with properties corresponding to the properties of the quantization unit 65. In step S17, the inverse orthogonal transform unit 69 performs inverse orthogonal transform of the transform coefficients subjected to inverse quantization at the inverse quantization unit 68, with properties corresponding to the properties of the orthogonal transform unit 64.

In step S18, the computing unit 70 adds the prediction image input via the prediction image selecting unit 76 to the locally decoded difference information, and generates a locally decoded image (image corresponding to the input to the computing unit 63). In step S19, the deblocking filter 71 performs filtering of the image output from the computing unit 70. Accordingly, block noise is removed. In step S20, the frame memory 72 stores the filtered image. Note that the image not subjected to filter processing by the deblocking filter 71 is also supplied to the frame memory 72 from the computing unit 70, and stored.

In step S21, the intra prediction unit 74 and motion prediction/compensation unit 75 perform their respective image prediction processing. That is to say, in step S21, the intra prediction unit 74 performs intra prediction processing in the intra prediction mode, and the motion prediction/compensation unit 75 performs motion prediction/compensation processing in the inter prediction mode.

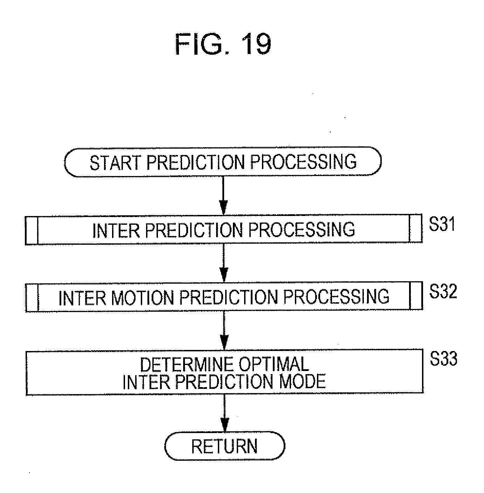

While the details of the prediction processing in step S21 will be described later in detail with reference to Fig. 19, with this processing, prediction processing is performed in each of all candidate intra prediction modes, and cost function values are each calculated in all candidate intra prediction modes. An optimal intra prediction mode is selected based on the calculated cost function value, and the prediction image generated by the intra prediction in the optimal intra prediction mode and the cost function value are supplied to the prediction image selecting unit 76.

Also, with this processing, prediction processing in all candidate inter prediction modes is performed, and cost function values in all candidate inter prediction modes are each calculated. An optimal inter prediction mode is determined from the inter prediction modes based on the calculated cost function value, and the prediction image generated with the optimal inter prediction mode and the cost function value thereof are supplied to the prediction image selecting unit 76.

In step S22, the prediction image selecting unit 76 determines one of the optimal intra prediction mode and optimal inter prediction mode as the optimal prediction mode, based on the respective cost function values output from the intra prediction unit 74 and the motion prediction/compensation unit 75. The prediction image selecting unit 76 then selects the prediction image of the determined optimal prediction mode, and supplies this to the computing units 63 and 70. This prediction image is used for computation in steps S13 and S18, as described above.

Note that the selection information of the prediction image is supplied to the intra prediction unit 74 or motion prediction/compensation unit 75. In the event that the prediction image of the optimal intra prediction mode is selected, the intra prediction unit 74 supplies information relating to the optimal intra prediction mode to the lossless encoding unit 66, along with the corresponding macro block type information.

In the event that the prediction image of the optimal inter prediction mode is selected, the motion prediction/compensation unit 75 outputs macro block type information relating to the optimal inter prediction mode, and information corresponding to the optimal inter prediction mode as necessary, to the lossless encoding unit 66. Examples of information corresponding to the optimal inter prediction mode include motion vector information, flags, reference frame information, and so forth.

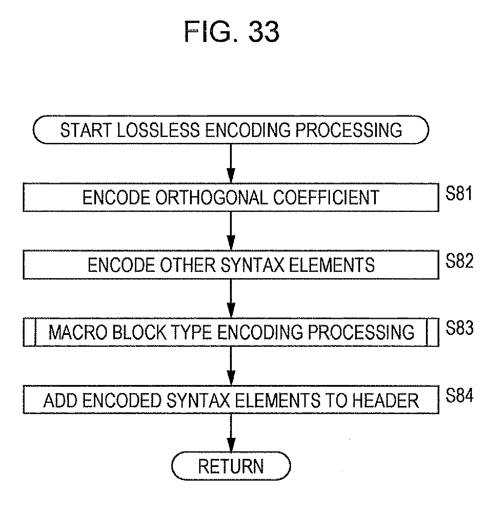

In step S23, the lossless encoding unit 66 performs lossless encoding processing. This lossless encoding processing will be described later with reference to Fig. 33.

Due to the processing in step S23, the quantized transform coefficient output from the quantization unit 65 is losslessly encoded and compressed. At this time, syntax elements such as macro block type and motion vector information and so forth, input to the lossless encoding unit 66 in step S22 described above, and the syntax element of the quantization parameter used for control in step S25, are also encoded and added to the header information. Note that of the syntax elements, the macro block type is encoded by the VLC table selected according to the quantization parameter, and added to the header information.

In step S24, the storage buffer 67 stores the difference image as a compressed image. The compressed image stored in the storage buffer 67 is read out as appropriate, and transmitted to the decoding side via the transmission path.

In step S25, the rate control unit 77 controls the rate of quantization operations of the quantization unit 65 with the corresponding quantization parameter so that overflow or underflow does not occur, based on the compressed images stored in the storage buffer 67. The quantization parameter used for control of the rate of the quantization unit 65 is supplied to the mode table switching unit 78, and used for the lossless encoding processing in step S23. Also, the quantization parameter is encoded in step S23, and added to the header.

[Description of Prediction Processing]

Next, the prediction processing in step S21 of Fig. 18 will be described with reference to the flowchart in Fig. 19.

In the event that the image to be processed that is supplied from the screen rearranging buffer 62 is a block image for intra processing, a decoded image to be referenced is read out from the frame memory 72, and supplied to the intra prediction unit 74 via the switch 73. Based on these images, in step S31 the intra prediction unit 74 performs intra prediction of pixels of the block to be processed for all candidate intra prediction modes. Note that for decoded pixels to be referenced, pixels not subjected to deblocking filtering by the deblocking filter 71 are used.

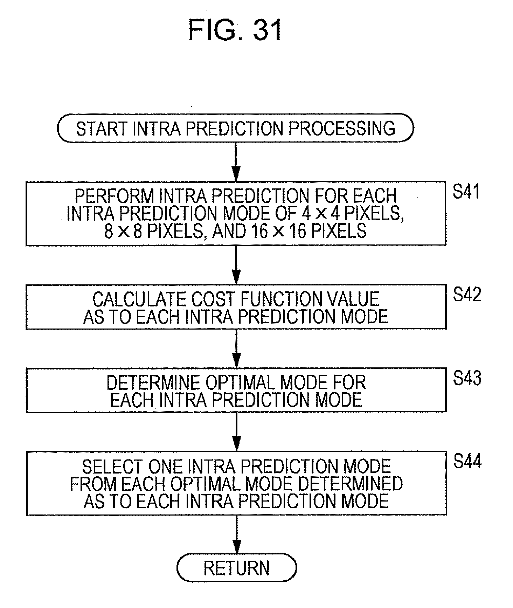

While the details of the intra prediction processing in step S31 will be described later with reference to Fig. 31, due to this processing intra prediction is performed in all candidate intra prediction modes, and cost function values are calculated for all candidate intra prediction modes. The optimal intra prediction mode is then selected based on the calculated cost function values, and the prediction image generated by intra prediction in the optimal intra prediction mode and the cost function value thereof are supplied to the prediction image selecting unit 76.

In the event that the image to be processed that is supplied from the screen rearranging buffer 62 is an image for inter processing, the image to be referenced is read out from the frame memory 72, and supplied to the motion prediction/compensation unit 75 via the switch 73. In step S32, the motion prediction/compensation unit 75 performs inter motion prediction processing based on these images. That is to say, the motion prediction/compensation unit 75 perform motion prediction processing of all candidate inter prediction modes, with reference to the images supplied from the frame memory 72.

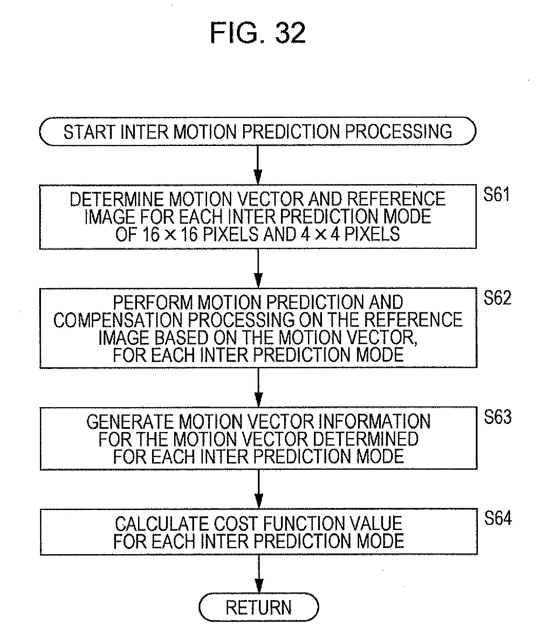

Details of the inter motion prediction processing in step S32 will be described later with reference to Fig. 32. Due to this processing, motion prediction processing is performed for all candidate inter prediction modes, and cost function values as to all candidate inter prediction modes are calculated.

In step S33, the motion prediction/compensation unit 75 compares the cost function value as to the inter prediction mode calculated in step S32. The motion prediction/compensation unit 75 determines that cost function value to be the prediction mode which gives the smallest value to be the optimal inter prediction mode, and supplies the prediction image generated in the optimal inter prediction mode and the cost function value thereof to the prediction image selecting unit 76.

[Description of Intra Prediction Processing in H.264/AVC Format]

Next, the modes for intra prediction that are stipulated in the H.264/AVC format will be described.

First, the intra prediction modes as to luminance signals will be described. With the intra prediction modes for luminance signals, three formats of an intra 4 × 4 prediction mode, an intra 8 × 8 prediction mode, and an intra 16 × 16 prediction mode are set. These are modes for determining block units, and are set for each macro block. Also, an intra prediction mode may be set to color difference signals independently from luminance signals for each macro block.

Further, in the event of the intra 4 × 4 prediction mode, one prediction mode can be set out of the nine kinds of prediction modes for each 4 × 4 pixel current block. In the event of the intra 8 × 8 prediction mode, one prediction mode can be set out of the nine kinds of prediction modes for each 8 × 8 pixel current block. Also, in the event of the intra 16 × 16 prediction mode, one prediction mode can be set to a 16 × 16 pixel current macro block out of the four kinds of prediction modes.

Note that, hereafter, the intra 4 × 4 prediction mode, intra 8 × 8 prediction mode, and intra 16 × 16 prediction mode will also be referred to as 4 × 4 pixel intra prediction mode, 8 × 8 pixel intra prediction mode, and 16 × 16 pixel intra prediction mode as appropriate, respectively.

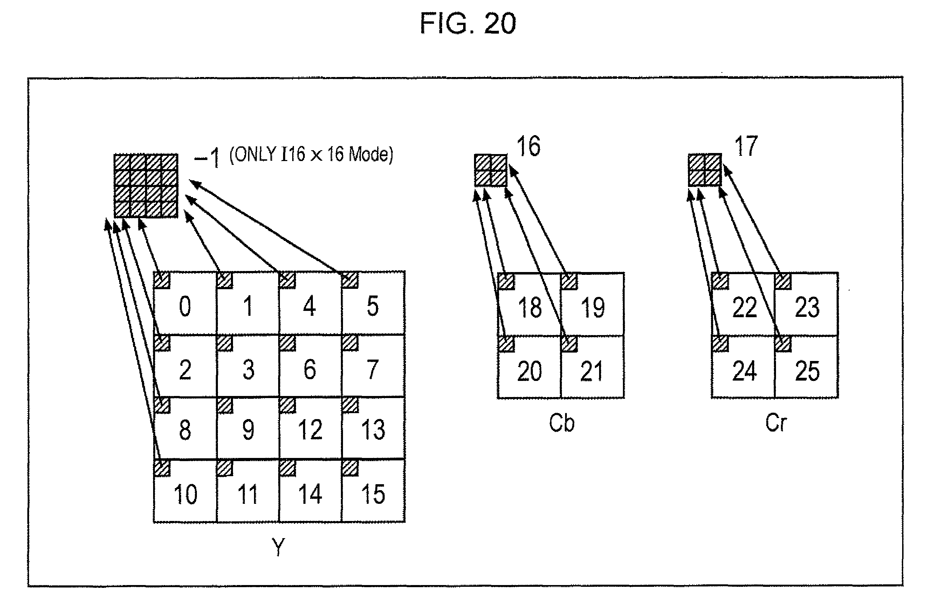

With the example in Fig. 20, numerals -1 through 25 appended to the blocks represent the bit stream sequence (processing sequence on the decoding side) of the blocks thereof. Note that, with regard to luminance signals, a macro block is divided into 4 × 4 pixels, and DCT of 4 × 4 pixels is performed. Only in the event of the intra 16 × 16 prediction mode, as shown in a block of -1, the DC components of the blocks are collected, a 4 × 4 matrix is generated, and this is further subjected to orthogonal transform.

On the other hand, with regard to color difference signals, after a macro block is divided into 4 × 4 pixels, and DCT of 4 × 4 pixels is performed, as shown in the blocks 16 and 17, the DC components of the blocks are collected, a 2 × 2 matrix is generated, and this is further subjected to orthogonal transform.

Note that, with regard to the intra 8 × 8 prediction mode, this may be applied to only a case where the current macro block is subjected to 8 × 8 orthogonal transform with a high profile or a profile beyond this.

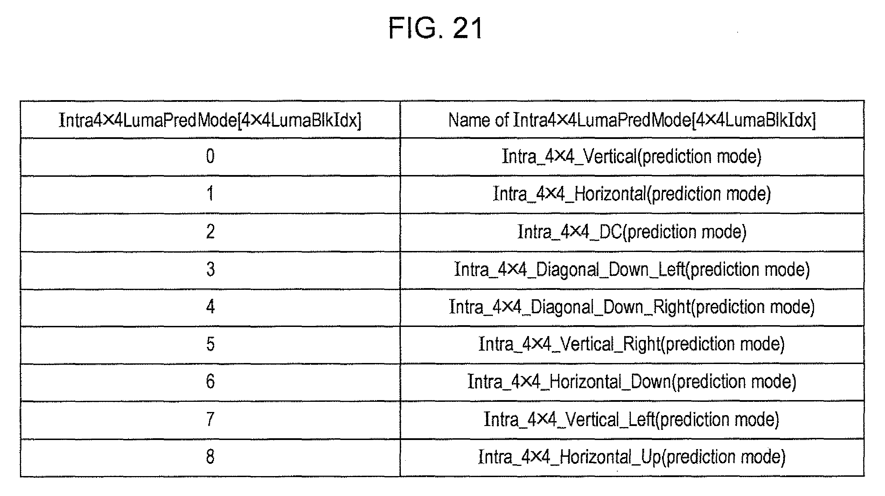

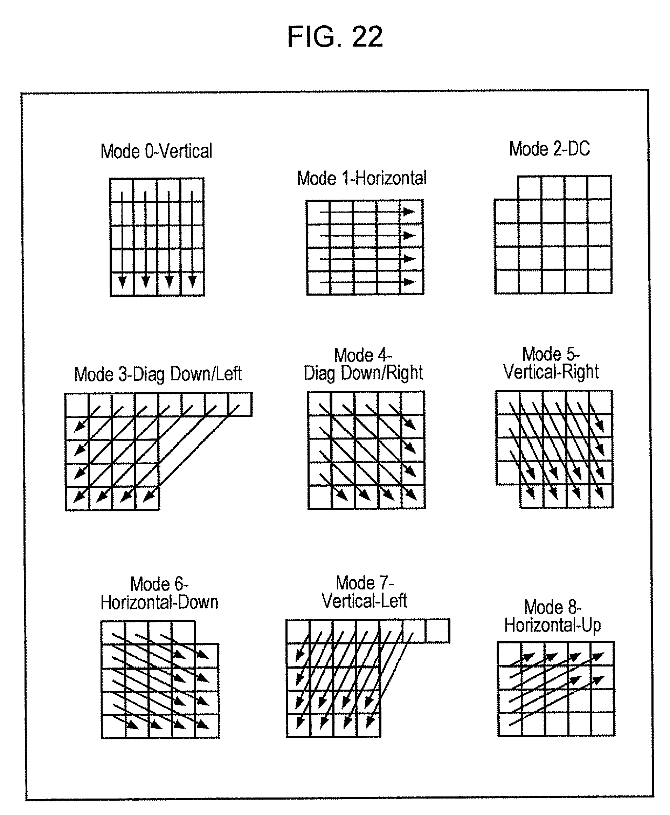

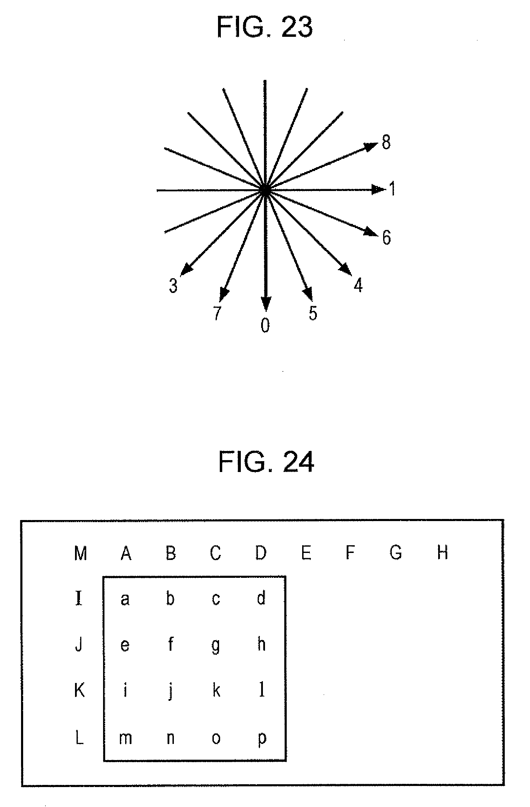

Fig. 21 and Fig. 22 are diagrams illustrating the nine types of luminance signal 4 × 4 pixel intra prediction modes (Intra_4x4_pred_mode). The eight types of modes other than mode 2 which indicates average value (DC) prediction are each corresponding to the directions indicated by Nos. 0, 1, and 3 through 8, in Fig. 23.

The nine types of Intra_4x4_pred_mode will be described with reference to Fig. 24. In the example in Fig. 24, the pixels a through p represent the pixels of the current blocks to be subjected to intra processing, and the pixel values A through M represent the pixel values of pixels belonging to adjacent blocks. That is to say, the pixels a through p are the image to be processed that has been read out from the screen rearranging buffer 62, and the pixel values A through M are pixels values of the decoded image to be referenced that has been read out from the frame memory 72.

In the event of each intra prediction mode in Fig. 21 and Fig. 22, the predicted pixel values of pixels a through p are generated as follows using the pixel values A through M of pixels belonging to adjacent blocks. Note that in the event that the pixel value is "available", this represents that the pixel is available with no reason such as being at the edge of the image frame or being still unencoded, and in the event that the pixel value is "unavailable", this represents that the pixel is unavailable due to a reason such as being at the edge of the image frame or being still unencoded.

Mode 0 is a Vertical Prediction mode, and is applied only in the event that pixel values A through D are "available". In this case, the prediction pixel values of pixels a through p are generated as in the following Expression (9).

```
Prediction pixel value of pixels a, e, i, m = A

Prediction pixel value of pixels b, f, j, n = B

Prediction pixel value of pixels c, g, k, o = C



Prediction pixel value of pixels d, h, l, p = D...(9)
```

Mode 1 is a Horizontal Prediction mode, and is applied only in the event that pixel values I through L are "available". In this case, the prediction pixel values of pixels a through p are generated as in the following Expression (10).

```
Prediction pixel value of pixels a, b, c, d = I

Prediction pixel value of pixels e, f, g, h = J

Prediction pixel value of pixels i, j, k, l = K

Prediction pixel value of pixels m, n, o, p = L...(10)
```

Mode 2 is a DC Prediction mode, and prediction pixel values are generated as in the Expression (11) in the event that pixel values A, B, C, D, I, J, K, L are all "available".

$$(A + B + C + D + I + J + K + L + 4) \gg 3 \quad ...(11)$$

Also, prediction pixel values are generated as in the Expression (12) in the event that pixel values A, B, C, D are all "unavailable".

$$(I + J + K + L + 2) \gg 2 ...(12)$$

Also, prediction pixel values are generated as in the Expression (13) in the event that pixel values I, J, K, L are all "unavailable".

$$(A + B + C + D + 2) \gg 2 ...(13)$$

Also, in the event that pixel values A, B, C, D, I, J, K, L are all "unavailable", 128 is generated as a prediction pixel value.
Mode 3 is a Diagonal_Down_Left Prediction mode, and is applied only in the event that pixel values A, B, C, D, I, J, K, L, M are "available". In this case, the prediction pixel values of the pixels a through p are generated as in the following Expression (14).

```
Prediction pixel value of pixel a          = (A + 2B + C +
2) » 2
Prediction pixel values of pixels b, e     = (B + 2C + D +
2) » 2
Prediction pixel values of pixels c, f, i  = (C + 2D + E +
2) » 2
Prediction pixel values of pixels d, g, j, m   = (D + 2E +
F + 2) » 2
Prediction pixel values of pixels h, k, n  = (E + 2F + G +
2) » 2
Prediction pixel values of pixels l, o     = (F + 2G + H +
2) » 2
Prediction pixel value of pixel p          = (G + 3H + 2) »
2
                                           ...(14)
```

Mode 4 is a Diagonal_Down_Right Prediction mode, and is applied only in the event that pixel values A, B, C, D, I, J, K, L, M are "available". In this case, the prediction pixel values of the pixels a through p are generated as in the following Expression (15).

```
Prediction pixel value of pixel m          = (J + 2K + L +
2) » 2
Prediction pixel values of pixels i, n      = (I + 2J + K +
2) » 2
Prediction pixel values of pixels e, j, o   = (M + 2I + J +
2) » 2
Prediction pixel values of pixels a, f, k, p  = (A + 2M +
I + 2) » 2
Prediction pixel values of pixels b, g, l    = (M + 2A + B +
2) » 2
Prediction pixel values of pixels c, h      = (A + 2B + C +
2) » 2
Prediction pixel value of pixel d          = (B + 2C + D +
2) » 2
                ...(15)
```

Mode 5 is a Diagonal_Vertical_Right Prediction mode, and is applied only in the event that pixel values A, B, C, D, I, J, K, L, M are "available". In this case, the prediction pixel values of the pixels a through p are generated as in the following Expression (16).

```
Prediction pixel value of pixels a, j  = (M + A + 1) >> 1

Prediction pixel value of pixels b, k  = (A + B + 1) >> 1

Prediction pixel value of pixels c, l  = (B + C + 1) >> 1

Prediction pixel value of pixel d      = (C + D + 1) >> 1

Prediction pixel value of pixels e, n  = (I + 2M + A + 2) >>

2

Prediction pixel value of pixels f, o  = (M + 2A + B + 2) >>

2

Prediction pixel value of pixels g, p  = (A + 2B + C + 2) >>

2

Prediction pixel value of pixel h      = (B + 2C + D + 2) >>

2

Prediction pixel value of pixel i      = (M + 2I + J + 2) >>

2

Prediction pixel value of pixel m      = (I + 2J + K + 2) >>

2

        ...(16)
```

Mode 6 is a Horizontal_Down Prediction mode, and is applied only in the event that pixel values A, B, C, D, I, J, K, L, M are "available". In this case, the prediction pixel values of the pixels a through p are generated as in the following Expression (17).

```
Prediction pixel values of pixels a, g  = (M + I + 1) » 1
Prediction pixel values of pixels b, h  = (I + 2M + A + 2) »
2
Prediction pixel value of pixel c       = (M + 2A + B + 2) »
2
Prediction pixel value of pixel d       = (A + 2B + C + 2) »
2
Prediction pixel values of pixels e, k  = (I + J + 1) » 1
Prediction pixel values of pixels f, l  = (M + 2I + J + 2) »
2
Prediction pixel values of pixels i, o  = (J + K + 1) » 1
Prediction pixel values of pixels j, p  = (I + 2J + K + 2) »
2
Prediction pixel value of pixel m       = (K + L + 1) » 1
Prediction pixel value of pixel n       = (J + 2K + L + 2) »
2
        ...(17)
```

Mode 7 is a Vertical_Left Prediction mode, and is applied only in the event that pixel values A, B, C, D, I, J, K, L, M are "available". In this case, the prediction pixel values of the pixels a through p are generated as in the following Expression (18).

```
Prediction pixel value of pixel a       = (A + B + 1) » 1
```

```
Prediction pixel values of pixels b, i = (B + C + 1) » 1

Prediction pixel values of pixels c, j = (C + D + 1) » 1

Prediction pixel values of pixels d, k = (D + E + 1) » 1

Prediction pixel value of pixel l     = (E + F + 1) » 1

Prediction pixel value of pixel e     = (A + 2B + C + 2) »
2

Prediction pixel values of pixels f, m = (B + 2C + D + 2) »
2

Prediction pixel values of pixels g, n = (C + 2D + E + 2) »
2

Prediction pixel values of pixels h, o = (D + 2E + F + 2) »
2

Prediction pixel value of pixel p     = (E + 2F + G + 2) »
2

      ...(18)
```

Mode 8 is a Horizontal_Up Prediction mode, and is applied only in the event that pixel values A, B, C, D, I, J, K, L, M are "available". In this case, the prediction pixel values of the pixels a through p are generated as in the following Expression (19).

```
Prediction pixel value of pixel a      = (I + J + 1) » 1

Prediction pixel value of pixels b     = (I + 2J + K + 2) »
2

Prediction pixel values of pixels c, e = (J + K + 1) » 1
```

```
Prediction pixel values of pixels d, f = (J + 2K + L + 2) >>
2
Prediction pixel values of pixels g, i = (K + L + 1) >> 1
Prediction pixel values of pixels h, j = (K + 3L + 2) >> 2
Prediction pixel values of pixels k, l, m, n, o, p  = L
        ...(19)
```

Next, the intra prediction mode (Intra_4x4_pred_mode) encoding method for $4 \times 4$ pixel luminance signals will be described with reference to Fig. 4 again. In the example in Fig. 4, an current block C to be encoded which is made up of $4 \times 4$ pixels is shown, and a block A and block B which are made up of $4 \times 4$ pixel and are adjacent to the current block C are shown.

In this case, the Intra_4x4_pred_mode in the current block C and the Intra_4x4_pred_mode in the block A and block B are thought to have high correlation. Performing the following encoding processing using this correlation allows higher encoding efficiency to be realized.

That is to say, in the example in Fig. 4, with the Intra_4x4_pred_mode in the block A and block B as Intra_4x4_pred_modeA and Intra_4x4_pred_modeB respectively, the MostProbableMode is defined as the following Expression (20).

```
MostProbableMode = Min(Intra_4x4_pred_modeA,
Intra_4x4_pred_modeB)   ...(20)
```

That is to say, of the block A and block B, that with the smaller mode_number allocated thereto is taken as the MostProbableMode.

There are two values of prev_intra4x4_pred_mode_flag[luma4x4BlkIdx] and rem_intra4x4_pred_mode [luma4x4BlkIdx] defined as parameters as to the current block C in the bit stream, with decoding processing being performed by processing based on the pseudocode shown in the following Expression (21), so the values of Intra_4x4_pred_mode, Intra4x4PredMode[luma4x4BlkIdx] as to the current block C can be obtained.

```
if(prev_intra4x4_pred_mode_flag[luma4x4BlkIdx])
        Intra4x4PredMode[luma4x4BlkIdx] = MostProbableMode
else
        if(rem_intra4x4_pred_mode[luma4x4BlkIdx] <
MostProbableMode)
                Intra4x4PredMode[luma4x4BlkIdx] =
rem_intra4x4_pred_mode[luma4x4BlkIdx]
```

```
                         else

                  Intra4x4PredMode[luma4x4BlkIdx] =

            rem_intra4x4_pred_mode[luma4x4BlkIdx] + 1

                  ...(21)
```

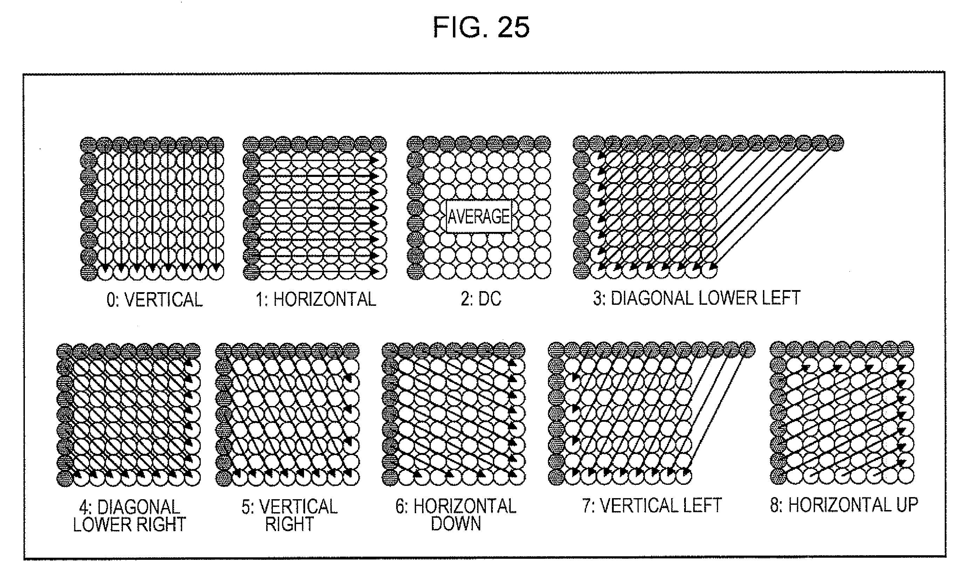

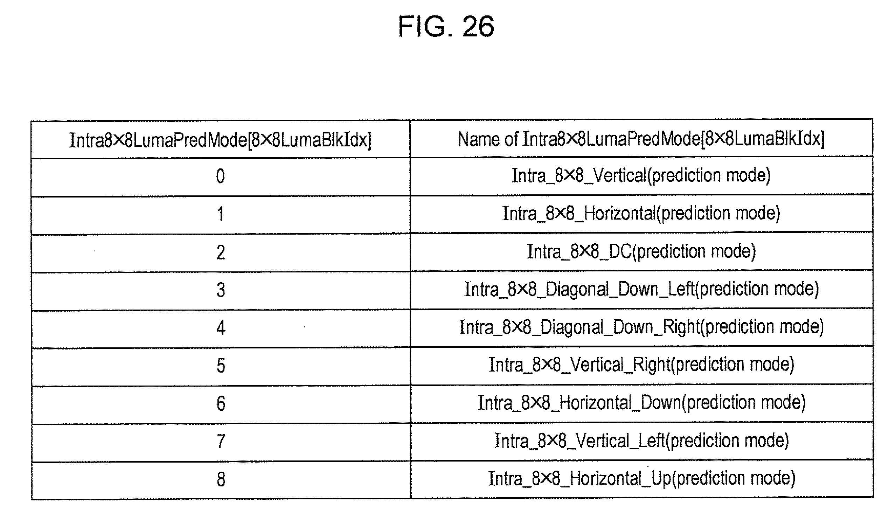

Next, the $8 \times 8$ pixel intra prediction mode will be described. Fig. 25 and Fig. 26 are diagrams showing the nine kinds of $8 \times 8$ pixel intra prediction modes (intra_$8 \times 8$_pred_mode) for luminance signals.

Let us say that the pixel values in the current $8 \times 8$ block are taken as p[x, y] ( $0 \le x \le 7$; $0 \le y \le 7$), and the pixel values of an adjacent block are represented as with p[-1, -1], ..., p[-1, 15], p[-1, 0], .... [p-1, 7].

With regard to the $8 \times 8$ pixel intra prediction modes, adjacent pixels are subjected to low-pass filtering processing prior to generating a prediction value. Now, let us say that pixel values before low-pass filtering processing are represented with p[-1, -1J, ..., p[-1, 15], p[-1, 0], ..., p[-1. 7], and pixel values after the processing are represented with p'[-1, -1], ..., p'[-1, 15], p'[-1, 0], ..., p'[-1, 7].

First, p'[0, -1] is calculated as with the following Expression (25) in the event that p[-1, -1] is "available", and calculated as with the following Expression (23) in the event of "not available".

```
     p'[0, -1] = (p[-1, -1] + 2*p[0, -1] + p[1, -1] + 2) >> 2

            ...(22)
```

```
     p'[0, -1] = (3*p[0, -1] + p[1, -1] + 2) >> 2    ...(23)
```

p'[x, -1] (x = 0, ..., 7) is calculated as with the following Expression (24).

```
     p'[x, -1] = (p[x-1, -1] + 2*p[x, -1] + p[x+1, -1] + 2) >> 2

            ...(24)
```

p'[x, -1] (x = 8, ..., 15) is calculated as with the following Expression (25) in the event that p[x, -1] (x = 8, ..., 15) is "available".

```
     p'[x, -1] = (p[x-1, -1] + 2*p[x, -1] + p[x+1, -1] + 2) >> 2

     p'[15, -1] = (p[14, -1] + 3*p[15, -1] + 2) >> 2       ...(25)
```

p'[-1, -1] is calculated as follows in the event that p[-1, -1] is "available". Specifically, p'[-1, -1] is calculated as with Expression (26) in the event that both of p[0, -1] and p[-1, 0] are "available", and calculated as with Expression (27) in the event that p[-1, 0] is "unavailable". Also, p'[-1, -1] is calculated as with Expression (28) in the event that p[0, -1] is "unavailable".

```
     p'[-1, -1] = (p[0, -1] + 2*p[-1, -1] + p[-1, 0] + 2) >> 2

            ...(26)
```

$$p'[-1, -1] = (3*p[-1, -1] + p[0, -1] + 2) >> 2 \quad ...(27)$$

$$p'[-1, -1] = (3*p[-1, -1] + p[-1, 0] + 2) >> 2 \quad ...(28)$$

p'[-1, y] (y = 0, ..., 7) is calculated as follows when p[-1. y] (y = 0, ..., 7) is "available". Specifically, first, in the event that p[-1, -1] is "available", p'[-1, 0] is calculated as with the following Expression (29), and in the event of "unavailable", calculated as with Expression (30).

$$p'[-1, 0] = (p[-1, -1] + 2*p[-1, 0] + p[-1, 1] + 2) >> 2$$
$$...(29)$$

$$p'[-1, 0] = (3*p[-1, 0] + p[-1, 1] + 2) >> 2 \quad ...(30)$$

Also, p'[-1, y] (y = 1, ..., 6) is calculated as with the following Expression (31), and p'[-1, 7] is calculated as with Expression (32).

$$p[-1, y] = (p[-1, y-1] + 2*p[-1, y] + p[-1, y+1] + 2) >> 2$$
$$...(31)$$

$$p'[-1, 7] = (p[-1, 6] + 3*p[-1, 7] + 2) >> 2 \quad ...(32)$$

Prediction values in the intra prediction modes shown in Fig. 25 and Fig. 26 are generated as follows using p' thus calculated.
The mode 0 is a Vertical Prediction mode, and is applied only when p[x, -1] (x = 0, ..., 7) is "available". A prediction value pred8×8$_L$[x, y] is generated as with the following Expression (33).

$$pred8\times8_L[x, y] = p'[x, -1] \quad x, y = 0, ..., 7 \quad ...(33)$$

The mode 1 is a Horizontal Prediction mode, and is applied only when p[-1, y] (y = 0, ..., 7) is "available". The prediction value pred8×8$_L$[x, y] is generated as with the following Expression (34).

$$pred8\times8_L[x, y] = p'[-1, y] \quad x, y = 0, ..., 7 \quad ...(34)$$

The mode 2 is a DC Prediction mode, and the prediction value pred8×8$_L$[x, y] is generated as follows. Specifically, in the event that both of p[x, -1] (x = 0, ..., 7) and p[-1, y] (y = 0, ..., 7) are "available", the prediction value pred8×8$_L$[x, y] is generated as with the following Expression (35).

[Mathematical Expression 3]

$$\text{Pred}8\text{x}8_L[x, y] = (\sum_{x'=0}^{7} P'[x',-1] + \sum_{y'=0}^{7} P'[-1,y] + 8) >> 4 \quad \cdots(35)$$

In the event that p[x, -1] (x = 0, ..., 7) is "available", but p[-1, y] (y = 0, ..., 7) is "unavailable", the prediction value pred8$\times$8$_L$[x, y] is generated as with the following Expression (36).

[Mathematical Expression 4]

$$\text{Pred}8\text{x}8_L[x, y] = (\sum_{x'=0}^{7} P'[x',-1] + 4) >> 3 \quad \cdots(36)$$

In the event that p[x, -1] (x = 0, ..., 7) is "unavailable", but p[-1, y] (y = 0, ..., 7) is "available", the prediction value pred8$\times$8$_L$[x, y] is generated as with the following Expression (37).

[Mathematical Expression 5]

$$\text{Pred}8\text{x}8_L[x, y] = (\sum_{y'=0}^{7} P'[-1,y] + 4) >> 3 \quad \cdots(37)$$

In the event that both of p[x, -1] (x = 0, ..., 7) and p[-1, y] (y = 0, ..., 7) are "unavailable", the prediction value pred8$\times$8$_L$[x, y] is generated as with the following Expression (38).

$$\text{pred}8\times8_L[x, y] = 128 \quad \ldots(38)$$

Here, Expression (38) represents a case of 8-bit input.

The mode 3 is a Diagonal_Down_Left_prediction mode, and the prediction value pred8$\times$8$_L$[x, y] is generated as follows. Specifically, the Diagonal_Down_Left_prediction mode is applied only when p[x, -1], x = 0, ..., 15, is "available", and the prediction pixel value with x =7 and y =7 is generated as with the following Expression (39), and other prediction pixel values are generated as with the following Expression (40).

$$\text{pred}8\times8_L[x, y] = (p'[14, -1] + 3*p[15, -1] + 2) >> 2 \ldots(39)$$

$$\text{pred}8\times8_L[x, y] = (p'[x+y, -1] + 2*p'[x+y+1, -1] + p'[x+y+2, -1] + 2) >> 2 \ldots(40)$$

The mode 4 is a Diagnonal_Down_Right_prediction mode, and the prediction value pred8$\times$8$_L$[x, y] is generated as follows. Specifically, the Diagnonal_Down_Right_prediction mode is applied only when p[x, -1], x = 0, ..., 7 and p[-1, y], y = 0, ..., 7 are "available", the prediction pixel value with x > y is generated as with the following Expression (41), and the prediction pixel value with x < y is generated as with the following Expression (42). Also, the prediction pixel value with x = y is generated as with the following Expression (43).

$$\text{pred8×8}_L[x, y] = (p'[x-y-2, -1] + 2*p'[x-y-1, -1] + p'[x-y, -1] + 2) >> 2 \quad ...(41)$$

$$\text{pred8×8}_L[x, y] = (p'[-1, y-x-2] + 2*p'[-1, y-x-1] + p'[-1, y-x] + 2) >> 2 \quad ...(42)$$

$$\text{pred8×8}_L[x, y] = (p'[0, -1] + 2*p'[-1, -1] + p'[-1, 0] + 2) >> 2 \quad ...(43)$$

The mode 5 is a Vertical_Right_prediction mode, and the prediction value pred8×8$_L$[x, y] is generated as follows. Specifically, the Vertical_Right_prediction mode is applied only when p[x, -1], x = 0, ..., 7 and p[-1, y], y = -1, ..., 7 are "available". Now, zVR is defined as with the following Expression (44).

$$zVR = 2*x - y \quad ...(44)$$

At this time, in the event that zVR is 0, 2, 4, 6, 8, 10, 12, or 14, the pixel prediction value is generated as with the following Expression (45), and in the event that zVR is 1, 3, 5, 7, 9, 11, or 13, the pixel prediction value is generated as with the following Expression (46).

$$\text{pred8×8}_L[x, y] = (p'[x-(y>>1)-1, -1] + p'[x-(y>>1), -1] + 1) >> 1 \quad ...(45)$$

$$\text{pred8×8}_L[x, y] = (p'[x-(y>>1)-2, -1] + 2*p'[x-(y>>1)-1, -1] + p'[x-(y>>1), -1] + 2) >> 2 \quad ...(46)$$

Also, in the event that zVR is -1, the pixel prediction value is generated as with the following Expression (47), and in the cases other than this, specifically, in the event that zVR is -2, -3, -4, -5, -6, or -7, the pixel prediction value is generated as with the following Expression (48).

$$\text{pred8×8}_L[x, y] = (p'[-1, 0] + 2*p'[-1, -1] + p'[0, -1] + 2) >> 2 \quad ...(47)$$

$$\text{pred8×8}_L[x, y] = (p'[-1, y-2*x-1] + 2*p'[-1, y-2*x-2] + p'[-1, y-2*x-3] + 2) >> 2 \quad ...(48)$$

The mode 6 is a Horizontal_Down_prediction mode, and the prediction value pred8×8$_L$[x, y] is generated as follows. Specifically, the Horizontal_Down_prediction mode is applied only when p[x, -1], x = 0, ..., 7 and p[-1, y], y = -1, ..., 7 are "available". Now, zVR is defined as with the following Expression (49).

$$\mathrm{zHD} = 2*y - x \ \ldots(49)$$

At this time, in the event that zHD is 0, 2, 4, 6, 8, 10, 12, or 14, the prediction pixel value is generated as with the following Expression (50), and in the event that zHD is 1, 3, 5, 7, 9, 11, or 13, the prediction pixel value is generated as with the following Expression (51).

```
pred8×8L[x, y] = (p'[-1, y-(x>>1)-1] + p'[-1, y-(x>>1) + 1]
>> 1 ...(50)
```

```
pred8×8L[x, y] = (p'[-1, y-(x>>1)-2] + 2*p'[-1, y-(x>>1)-1] +
p'[-1, y-(x>>1)] + 2) >> 2   ...(51)
```

Also, in the event that zHD is -1, the prediction pixel value is generated as with the following Expression (52), and in the event that zHD is other than this, specifically, in the event that zHD is -2, -3, -4, -5, -6, or -7, the prediction pixel value is generated as with the following Expression (53).

```
pred8×8L[x, y] = (p'[-1, 0] + 2*p[-1, -1] + p'[0, -1] + 2) >>
2    ...(52)
```

```
pred8×8L[x, y] = (p'[x-2*y-1, -1] + 2*p'[x-2*y-2, -1] + p'[x-
2*y-3, -1] + 2) >> 2    ...(53)
```

The mode 7 is a Vertical_Left_prediction mode, and the prediction value pred8×8$_L$[x, y] is generated as follows. Specifically, the Vertical_Left_prediction mode is applied only when p[x, -1], x = 0, ..., 15, is "available", in the case that y = 0, 2, 4, or 6, the prediction pixel value is generated as with the following Expression (54), and in the cases other than this, i.e., in the case that y = 1, 3, 5, or 7, the prediction pixel value is generated as with the following Expression (55).

```
pred8×8L[x, y] = (p'[x+(y>>1), -1] + p'[x+(y>>1)+1, -1] + 1)
>> 1 ...(54)
```

```
pred8×8L[x, y] = (p'[x+(y>>1), -1] + 2*p'[x+(y>>1)+1, -1] +
p'[x+(y>>1)+2, -1] + 2) >> 2 ...(55)
```

The mode 8 is a Horizontal_Up_prediction mode, and the prediction value pred8×8$_L$[x, y] is generated as follows. Specifically, the Horizontal_Up_prediction mode is applied only when p[-1, y], y = 0, ..., 7, is "available". Hereafter, zHU is defined as with the following Expression (56).

$$zHU = x + 2*y \ldots(56)$$

In the event that the value of zHU is 0, 2, 4, 6, 8, 10, or 12, the prediction pixel value is generated as with the following Expression (57), and in the event that the value of zHU is 1, 3, 5, 7, 9, or 11, the prediction pixel value is generated as with the following Expression (58).

$$pred8 \times 8_L[x, y] = (p'[-1, y+(x>>1)] + p'[-1, y+(x>>1)+1] + 1)$$

$$>> 1 \ldots(57)$$

$$pred8 \times 8_L[x, y] = (p'[-1, y+(x>>1)]) \qquad \ldots(58)$$

Also, in the event that the value of zHU is 13, the prediction pixel value is generated as with the following Expression (59), and in the cases other than this, i.e., in the event that the value of zHU is greater than 13, the prediction pixel value is generated as with the following Expression (60).

$$pred8 \times 8_L[x, y] = (p'[-1, 6] + 3*p'[-1, 7] + 2) >> 2 \ldots(59)$$

$$pred8 \times 8_L[x, y] = p'[-1, 7] \qquad \ldots(60)$$

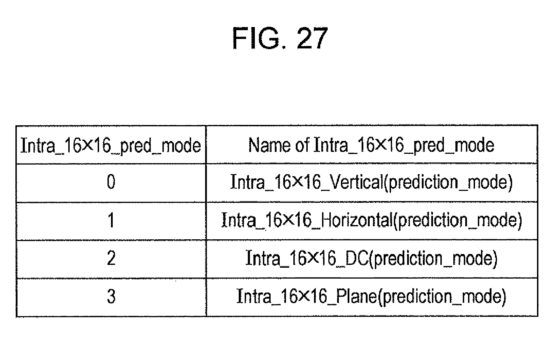

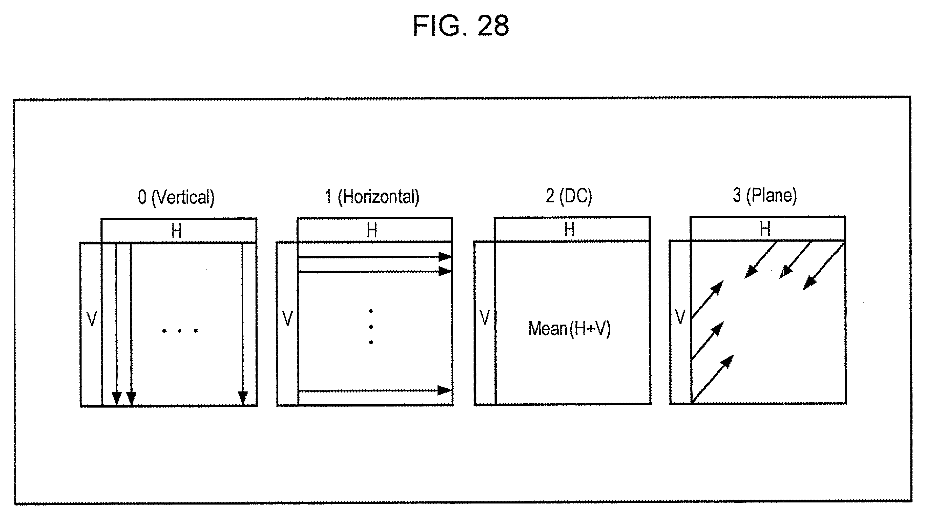

Next, the 16 × 16 pixel intra prediction mode will be described. Fig. 27 and Fig. 28 are diagrams illustrating the four types of 16 × 16 pixels luminance signal intra prediction modes (Intra_16x16_pred_mode).

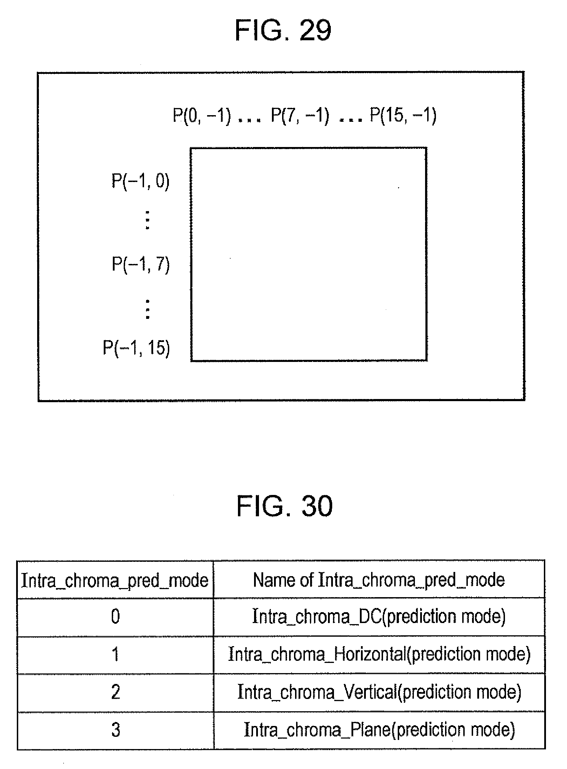

The four types of intra prediction modes will be described with reference to Fig. 29. In the example in Fig. 29, an current macro block A to be subjected to intra processing is shown, and P(x,y);x,y = -1, 0, ..., 15 represents the pixel values of the pixels adjacent to the current macro block A.

Mode 0 is the Vertical Prediction mode, and is applied only in the event that P(x,-1); x,y = -1, 0, ..., 15 is "available". In this case, the prediction pixel value Pred(x, y) of each of the pixels in the current macro block A is generated as in the following Expression (61).

$$Pred(x,y) = P(x,-1);x,y = 0, \ldots, 15 \ldots(61)$$

Mode 1 is the Horizontal Prediction mode, and is applied only in the event that P(-1,y); x,y = -1, 0, ..., 15 is "available". In this case, the prediction pixel value Pred(x, y) of each of the pixels in the current macro block A is generated as in the following Expression (62).

$$Pred(x,y) = P(-1,y);x,y = 0, \ldots, 15 \ldots(62)$$

Mode 2 is the DC Prediction mode, and in the event that P(x,-1) and P(-1,y); x,y = -1, 0, ..., 15 are all "available", the prediction pixel value Pred(x, y) of each of the pixels in the current macro block A is generated as in the following Expression (63).

[Mathematical Expression 6]

$$\mathrm{Pred}(x, y) = [\sum_{x'=0}^{15} P(x',-1) + \sum_{y'=0}^{15} P(-1,y') + 16] >> 5$$
$$\text{with } x, y = 0, \cdots, 15 \quad \cdots(63)$$

Also, in the event that P(x,-1); x,y = -1, 0, ..., 15 is "unavailable", the prediction pixel value Pred(x, y) of each of the pixels in the current macro block A is generated as in the following Expression (64).

[Mathematical Expression 7]

$$\mathrm{Pred}(x, y) = [\sum_{y'=0}^{15} P(-1,y') + 8] >> 4 \quad \text{with } x, y = 0, \cdots, 15 \quad \cdots(64)$$

In the event that P(-1,y); x,y = -1, 0, ..., 15 is "unavailable", the prediction pixel value Pred(x, y) of each of the pixels in the current macro block A is generated as in the following Expression (65).

[Mathematical Expression 8]

$$\mathrm{Pred}(x, y) = [\sum_{y'=0}^{15} P(x',-1) + 8] >> 4 \quad \text{with } x, y = 0, \cdots, 15 \quad \cdots(65)$$

In the event that P(x,-1) and P(-1,y); x,y = -1, 0, ..., 15 are all "unavailable", 128 is used as a prediction pixel value.
Mode 3 is the Plane Prediction mode, and is applied only in the event that P(x,-1) and P(-1,y); x,y = -1, 0, ..., 15 are all "available". In this case, the prediction pixel value Pred(x, y) of each of the pixels in the current macro block A is generated as in the following Expression (66).

[Mathematical Expression 9]

$$\mathrm{Pred}(x,y) = \mathrm{Clip1}((a + b \cdot (x-7) + c \cdot (y-7) + 16) >> 5)$$
$$a = 16 \cdot (P(-1,15) + P(15,-1))$$
$$b = (5 \cdot H + 32) >> 6$$
$$c = (5 \cdot V + 32) >> 6$$
$$H = \sum_{x=1}^{8} x \cdot (P(7+x,-1) - P(7-x,-1))$$
$$V = \sum_{y=1}^{8} y \cdot (P(-1,7+y) - P(-1,7-y)) \quad \cdots(66)$$

Next, the intra prediction modes as to color difference signals will be described. Fig. 23 is a diagram illustrating the four types of color difference signal intra prediction modes (Intra_chroma_pred_mode). The color difference signal intra prediction mode can be set independently from the luminance signal intra prediction mode. The intra prediction mode for color difference signals conforms to the above-described luminance signal 16 × 16 pixel intra prediction mode.
Note however, that while the luminance signal 16 × 16 pixel intra prediction mode handles 16 × 16 pixel blocks, the intra prediction mode for color difference signals handles $8 \times 8$ pixel blocks. Further, the mode Nos. do not correspond between the two, as can be seen in Fig. 27 and Fig. 30 described above.

Now, this conforms to the definition of pixel values of the current macro block A which is the object of the luminance signal $16 \times 16$ pixel intra prediction mode and the adjacent pixel values described above with reference to Fig. 29. The pixel values adjacent to the current macro block A for intra processing ($8 \times 8$ pixels in the case of color difference signals) will be taken as p(x,y);x,y = -1, 0, ..., 7.

Mode 0 is the DC Prediction mode, and in the event that P (x, -1) and P (-1, y) ; x,y = -1, 0, ..., 7 are all "available", the prediction pixel value Pred(x,y) of each of the pixels of the current macro block A is generated as in the following Expression (67).

[Mathematical Expression 10]

$$\text{Pred}(x, y) = \left( \left( \sum_{n=0}^{7} (P(-1,n) + P(n,-1)) \right) + 8 \right) >> 4$$
$$\text{with } x, y = 0, \cdots, 7 \quad \cdots (67)$$

Also, in the event that P(-1,y); x,y = -1, 0, ..., 7 is "unavailable", the prediction pixel value Pred(x,y) of each of the pixels of current macro block A is generated as in the following Expression (68).

[Mathematical Expression 11]

$$\text{Pred}(x, y) = \left[ \left( \sum_{n=0}^{7} P(n,-1) \right) + 4 \right] >> 3 \quad \text{with } x, y = 0, \cdots, 7 \quad \cdots (68)$$

Also, in the event that P(x,-1); x,y = -1, 0, ..., 7 is "unavailable", the prediction pixel value Pred(x,y) of each of the pixels of current macro block A is generated as in the following Expression (69).

[Mathematical Expression 12]

$$\text{Pred}(x, y) = \left[ \left( \sum_{n=0}^{7} P(-1, n) \right) + 4 \right] >> 3 \quad \text{with } x, y = 0, \cdots, 7 \quad \cdots (69)$$

Mode 1 is the Horizontal Prediction mode, and is applied only in the event that P(-1,y); x,y = -1, 0, ..., 7 is "available". In this case, the prediction pixel value Pred(x,y) of each of the pixels of current macro block A is generated as in the following Expression (70).

$$\text{Pred}(x,y) = P(-1,y);x,y = 0, \ldots, 7 \quad \ldots (70)$$

Mode 2 is the Vertical Prediction mode, and is applied only in the event that P(x,-1); x,y = -1, 0, ..., 7 is "available". In this case, the prediction pixel value Pred(x,y) of each of the pixels of current macro block A is generated as in the following Expression (71).

$$\text{Pred}(x,y) = P(x,-1);x,y = 0, \ldots, 7 \quad \ldots (71)$$

Mode 3 is the Plane Prediction mode, and is applied only in the event that P(x,-1) and P(-1,y); x,y = -1, 0, ..., 7 are "available" In this case, the prediction pixel value Pred(x,y) of each of the pixels of current macro block A is generated as in the following Expression (72).

[Mathematical Expression 13]

$$\text{Pred}(x,y) = \text{Clip1}(a + b \cdot (x-3) + c \cdot (y-3) + 16) >> 5; x, y = 0, \ldots, 7$$

$$a = 16 \cdot (P(-1,7) + P(7,-1))$$
$$b = (17 \cdot H + 16) >> 5$$
$$c = (17 \cdot V + 16) >> 5$$

$$H = \sum_{x=1}^{4} x \cdot [P(3+x,-1) - P(3-x,-1)]$$

$$V = \sum_{y=1}^{4} y \cdot [P(-1,3+y) - P(-1,3-y)] \qquad \cdots (72)$$

As described above, there are nine types of 4 × 4 pixel and 8 × 8 pixel block-increment and four types of 16 × 16 pixel macro block-increment prediction modes for luminance signal intra prediction modes in the block increments, and there are four types of 8 × 8 pixel block-increment prediction modes for color difference signal intra prediction modes. The color difference signal intra prediction mode can be set separately from the luminance signal intra prediction mode.

Also, the luminance signal 4 × 4 pixel intra prediction modes (intra 4 × 4 prediction mode) and 8 × 8 pixel intra prediction modes (intra 8 × 8 prediction mode), one intra prediction mode is defined for each 4 × 4 pixel and 8 × 8 pixel luminance signal block. For luminance signal 16 × 16 pixel intra prediction modes (intra 16 × 16 prediction mode) and color difference signal intra prediction modes, one prediction mode is defined for each macro block.

Note that the types of prediction modes correspond to the directions indicated by the Nos. 0, 1, 3 through 8, in Fig. 23 described above. Prediction mode 2 is an average value prediction.

[Description of Intra Prediction Processing]

Next, the intra prediction processing in step S31 of Fig. 19, which is processing performed as to these prediction modes, will be described with reference to the flowchart in Fig. 31. Note that in the example in Fig. 31, the case of luminance signals will be described as an example.

In step S41, the intra prediction unit 74 performs intra prediction as to each intra prediction mode of 4 × 4 pixels, 8 × 8 pixels, and 16 × 16 pixels.

Specifically, the intra prediction unit 74 makes reference to the decoded image that has been read out from the frame memory 72 and supplied to the intra prediction unit 74 via the switch 73, and performs intra prediction on the pixels of the block to be processed. Performing this intra prediction processing in each intra prediction mode results in a prediction image being generated in each intra prediction mode. Note that pixels not subject to deblocking filtering by the deblocking filter 71 are used as the decoded pixels to be referenced.

In step S42, the intra prediction unit 74 calculates cost function values for each intra prediction mode of 4 × 4 pixels, 8 × 8 pixels, and 16 × 16 pixels, using the cost function values illustrated in the above-described Expression (3) or Expression (4).

In step S43, the intra prediction unit 74 determines an optimal mode for each intra prediction mode of 4 × 4 pixels, 8 × 8 pixels, and 16 × 16 pixels. That is to say, as described above, there are nine types of prediction modes for intra 4 × 4 prediction mode and intra 8 × 8 prediction mode, and there are four types of prediction modes for intra 16 × 16 prediction mode. Accordingly, the intra prediction unit 74 determines from these an optimal intra 4 × 4 prediction mode, an optimal intra 8 × 8 prediction mode, and an optimal intra 16 × 16 prediction mode, based on the cost function value calculated in step S42.

In step S44, the intra prediction unit 74 selects one optimal intra prediction mode from the optimal modes decided for each intra prediction mode of 4 × 4 pixels, 8 × 8 pixels, and 16 × 16 pixels, based on the cost function value calculated in step S42. That is to say, the optimal intra prediction mode of which the cost function value is the smallest is selected from the optimal modes decided for each of 4 × 4 pixels, 8 × 8 pixels, and 16 × 16 pixels. The intra prediction unit 74 then supplies the prediction image generated in the optimal intra prediction mode, and the cost function value thereof, to the prediction image selecting unit 76.

[Description of Inter Motion Prediction Processing]

Next, the inter motion prediction processing in step S32 in Fig. 19 will be described with reference to the flowchart in Fig. 32.

In step S61, the motion prediction/compensation unit 75 determines a motion vector and a reference image as to each of the eight kinds of the inter prediction modes made up of 16 × 16 pixels through 4 × 4 pixels, described above with reference to Fig. 13. That is to say, a motion vector and a reference image are each determined as to the block to be processed in each of the inter prediction modes.

In step S62, the motion prediction/compensation unit 75 subjects the reference image to motion prediction and compensation processing based on the motion vector determined in step S61 regarding each of the eight kinds of the inter prediction modes made up of 16 × 16 pixels through × 4 pixels. According to this motion prediction and compensation processing, a prediction image in each of the inter prediction modes is generated.

In step S63, the motion prediction/compensation unit 75 generates motion vector information to be added to the compressed image, regarding the motion vector determined as to each of the eight kinds of inter prediction modes made up of 16 × 16 pixels through 4 × 4 pixels. At this time, the motion vector generating method described above with reference to Fig. 14 is used.

The generated motion vector information is also used at the time of calculation of cost function value in the next step S64, and output, in the event that the corresponding prediction image has ultimately been selected by the prediction image selecting unit 76, to the lossless encoding unit 66 along with the prediction mode information and reference frame information.

In step S64, the motion prediction/compensation unit 75 calculates the cost function value shown in the above-described Expression (3) or Expression (4) as to each of the eight kinds of the inter prediction modes made up of 16 × 16 pixels through 4 × 4 pixels. The cost function values calculated here are used at the time of determining the optimal inter prediction mode in step S33 in Fig. 19 described above.

[Description of Lossless Encoding Processing]

Next, the lossless encoding processing of step S23 in Fig. 18 will be described with reference to the flowchart in Fig. 33.

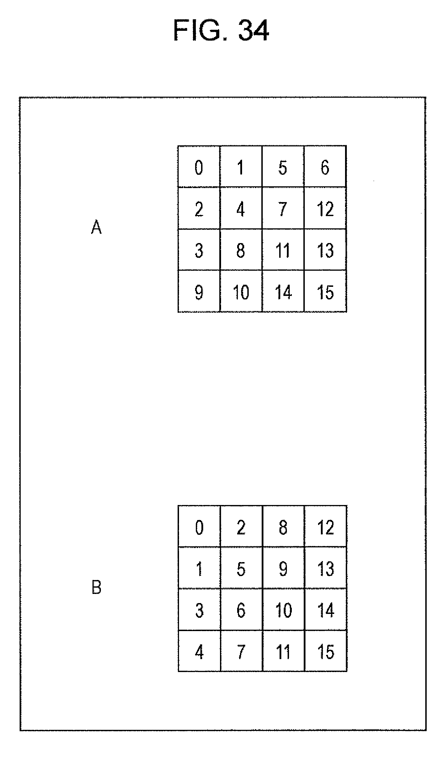

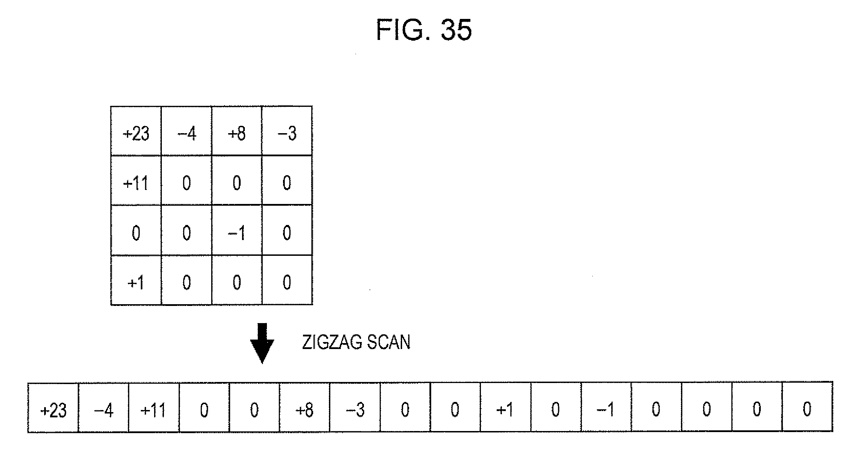

The lossless encoding unit 66 is supplied with the orthogonal transform coefficients quantized in step S15 in Fig. 18. In step S81, the lossless encoding unit 66 encodes the orthogonal transform coefficients quantized at the quantization unit 65 using a CAVLC table stipulated with the H.264/AVC format. Details of this orthogonal transform coefficient encoding processing will be described later with reference to Fig. 34 and Fig. 35.

In step S82, the lossless encoding unit 66 encodes syntax elements other than macro block type using a CAVLC table stipulated by the H.264/AVC format. In step S82, the syntax elements such as the quantization parameter from the rate control unit 25 are also encoded. In particular, in the event that inter prediction has been performed, syntax elements such as motion vector information, reference frame information, flags, and so forth, are encoded.

That is to say, herein, the syntax elements are encoded using the Exponential Golumb coding in Fig. 1 described above. Also, syntax elements such as motion vectors and the like regarding which there is the possibility that a negative value may occur are encoded applying the Exponential Golumb coding in Fig. 1, following being replaced with a code number with no sign, based on the relational correlation shown in Fig. 2.

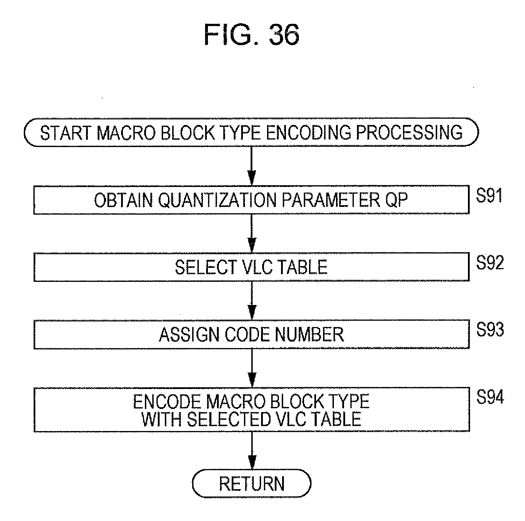

In step S83, the lossless encoding unit 66 performs macro block type encoding processing. This macro block type encoding processing will be described later with reference to Fig. 36.

Due to step S83, macro block type information is encoded using a VLC table selected in accordance to the quantization parameter from the rate control unit 25.

In step S84 the lossless encoding unit 66 then adds the syntax elements encoded in steps S82 and S83 to the header of the compressed image encoded in step S81. The compressed image with syntax elements added to the header is stored in the storage buffer 67 in step S24 in Fig. 18.

Next, the orthogonal transform coefficient encoding processing using CAVLC in step S81 of Fig. 33 will be described with reference to Fig. 34. Note that in the example in Fig. 34, an example of a 4 × 4 pixel block is shown, with the numbers given to each pixel representing the order of scanning.

With the H.264/AVC format, a 4 × 4 pixel block is converted into a 4 × 4 two-dimensional data equivalent to the frequency components, by orthogonal transform. This two-dimensional data is further converted into one-dimensional data with a format according to whether the current block to be subjected to encoding processing has been frame-encoded or field-encoded.

That is to say, in the event that the current block has been frame-encoded, the 4 × 4 two-dimensional data is converted into one-dimensional data by the zigzag scan format shown in A in Fig. 34. Conversely, in the event that the current block has been field-encoded, the 4 × 4 two-dimensional data is converted into one-dimensional data by the field scan format shown in B in Fig. 34.

Firstly, the lossless encoding unit 66 performs inverse scan of the orthogonal transform coefficient converted into one-dimensional data as described above, from high frequency to low frequency. Secondly, the lossless encoding unit 66 performs encoding of NumCoef (the number of coefficients which are not 0) and T1s (the number of coefficients which are ±1 when scanning from high frequency to low frequency, a maximum of 3).

For example, referencing Fig. 4 again, in the example in Fig. 4, shown are the current block C to be subjected to encoding processing, and adjacent blocks A and B which are already-encoded blocks and adjacent to the current block C.

At this time, the lossless encoding unit 66 switches the VLC table in accordance with the NumCoef in the adjacent blocks A and B.

Thirdly, the lossless encoding unit 66 performs encoding of Level (DCT coefficient value). For example, with regard to T1s, only positive/negative is encoded. Other coefficients are assigned code numbers (Code Number) and encoded. At this time, the lossless encoding unit 66 switches the VLC table in accordance with intra/inter, quantization parameter QP, and Level encoded last.

Fourthly, the lossless encoding unit 66 performs encoding of Run. At this time, the lossless encoding unit 66 switches the VLC table in encoding of TotalZero in accordance to the NumCoef. Also, the lossless encoding unit 66 performs switching of the VLC table in encoding of Run_before (the number of 0s continuing before a non-0 coefficient), in accordance with ZerosLeft (the number of non-0 coefficients remaining). Upon ZerosLeft = 0, the encoding processing ends.

Next, a specific example of the operating principle of CAVLC will be described with reference to Fig. 35. In the example in Fig. 35, after inverse scanning is performed, encoding processing is performed in the following order.

TotalCoef (number of non-0 coefficients) = 7
TrailingOnes (number of coefficients of absolute value 1 continuing at end) = 2
Trailing_ones_sign_flag (sign of coefficients of absolute value 1 continuing at end) = -
Trailing_ones_sign_flag(sign of coefficients of absolute value 1 continuing at end) = +
Level (DCT coefficient) = -3
Level = +8
Level = +11
Level = -4
Level = +23
TotalZeros (number of 0 coefficients before last non-0 coefficient) = 5 (ZerosLeft = 6)
run_before (number of 0s continuing before coefficient value) = 1 (ZerosLeft = 5)
run_before = 2 (ZerosLeft = 4)
run_before = 0 (ZerosLeft = 3)
run_before = 2 (ZerosLeft = 2)
run_before = 0 (ZerosLeft = 1)
run_before = 0 (ZerosLeft = 0)

Note that these numerical values are VLC-encoded by the table switched according to encoding states such as surrounding blocks and so forth, as described above.

[Description of Encoding Processing of Macro Block Type]

Next, the encoding processing of macro block types in step S83 in Fig. 33 will be described with reference to the flowchart in Fig. 36.

The quantization parameter QP is supplied from the rate control unit 77 to the VLC table switching unit 81 and code number assigning unit 82 (step S25 in Fig. 18).

The VLC table switching unit 81 and code number assigning unit 82 obtain the quantization parameter QP from the rate control unit 77 in step S91.

In step S92, the VLC table switching unit 81 selects one of, for example, two types of tables, as the VLC table for the macro block type, in accordance with the quantization parameter from the rate control unit 77. For example, the VLC table switching unit 81 selects the k = 0 table in Fig. 17 corresponding to a quantization parameter lower than the predetermined threshold (e.g., QP = 22), and selects the k = 1 table corresponding to a quantization parameter higher than the predetermined threshold (e.g., QP = 37).

In step S93, the code number assigning unit 82 assigns code number "0" in accordance with the quantization parameter from the rate control unit 77. That is to say, the code number assigning unit 82 assigns the inter 16 × 16 mode to code number "0", in accordance with the quantization parameter lower than the predetermined threshold. Also, the code number assigning unit 82 assigns the skip (or direct) mode to code number "0", in accordance with the quantization parameter higher than the predetermined threshold.

This assigning information is supplied to the VLC table switching unit 81, and is supplied to the lossless encoding unit 66 along with the VLC table information as to the macro block type.

In step S94, the lossless encoding unit 66 encodes the macro block type with the VLC table selected by the VLC table switching unit 81.

In step S84, the encoded macro block type is added to the header of the compressed image encoded in step S81, along with the other syntax elements encoded in step S82 in Fig. 33.

The compressed image encoded in this way is transmitted over a predetermined transmission path, and is decoded by an image decoding device.

[Configuration Example of Image Decoding Device]

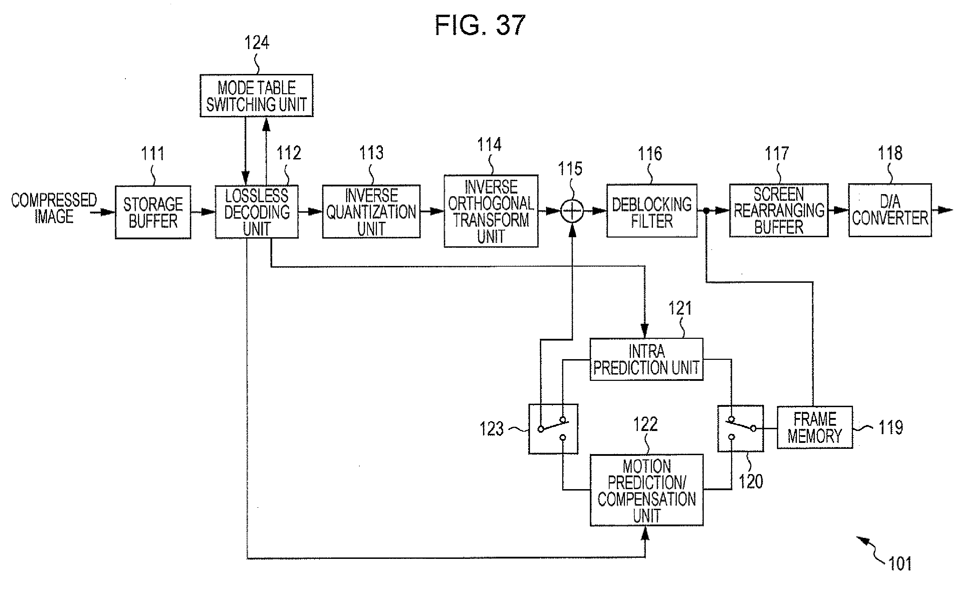

Fig. 37 represents the configuration of an embodiment of an image decoding device serving as the image processing device to which the present invention has been applied.

An image decoding device 101 is configured of an storage buffer 111, a lossless decoding unit 112, an inverse quantization unit 113, an inverse orthogonal transform unit 114, a computing unit 115, a deblocking filter 116, a screen rearranging buffer 117, a D/A conversion unit 118, frame memory 119, a switch 120, an intra prediction unit 121, a motion prediction/compensation unit 122, a switch 123, and a mode table switching unit 124.

The storage buffer 111 stores a transmitted compressed image. The lossless decoding unit 112 decodes information supplied from the storage buffer 111 and encoded by the lossless encoding unit 66 in Fig. 12 using a format corresponding to the encoding format of the lossless encoding unit 66.

That is to say, the lossless decoding unit 112 decodes the image encoded by the lossless encoding unit 66 in Fig. 12, and also decodes syntax elements such as quantization parameters and so forth. The decoded macro block type is supplied to the inverse quantization unit 113. Also, the quantization parameter is also supplied to the mode table switching unit 124.

Further, the lossless decoding unit 112 decodes the macro block type as well, with the decoding method (specifically, the VLC table information) selected by the mode table switching unit 124 corresponding to this quantization parameter. The decoded image and quantization parameter are supplied to the corresponding motion prediction/compensation unit 122 or intra prediction unit 121.

The inverse quantization unit 113 subjects the image decoded by the lossless decoding unit 112 to inverse quantization using a format corresponding to the quantization format of the quantization unit 65 in Fig. 12, referencing the quantization parameter decoded by the lossless decoding unit 112. The inverse orthogonal transform unit 114 subjects the output of the inverse quantization unit 113 to inverse orthogonal transform using a format corresponding to the orthogonal transform format of the orthogonal transform unit 64 in Fig. 12.

The output subjected to inverse orthogonal transform is decoded by being added with the prediction image supplied from the switch 123 by the computing unit 115. The deblocking filter 116 removes the block noise of the decoded image, then supplies to the frame memory 119 for storage, and also outputs to the screen rearranging buffer 117.

The screen rearranging buffer 117 performs rearranging of images. Specifically, the sequence of frames rearranged for encoding sequence by the screen rearranging buffer 62 in Fig. 12 is rearranged in the original display sequence. The D/A conversion unit 118 converts the image supplied from the screen rearranging buffer 117 from digital to analog, and outputs to an unshown display for display.

The switch 120 reads out an image to be subjected to inter processing and an image to be referenced from the frame memory 119, outputs to the motion prediction/compensation unit 122, and also reads out an image to be used for intra prediction from the frame memory 119, and supplies to the intra prediction unit 121.

Macro block type information and information indicating the intra prediction mode obtained by decoding the header information are supplied from the lossless decoding unit 112 to the intra prediction unit 121. The intra prediction unit 121 generates, based on this information, a prediction image, and outputs the generated prediction image to the switch 123.

Of the information obtained by decoding the header information, the motion prediction/compensation unit 122, is supplied with the macro block type information, motion vector information, reference frame information, and so forth, from the lossless decoding unit 112. The motion prediction/compensation unit 122 subjects the image to motion prediction and compensation processing based on the motion vector information and reference frame information, and generates a prediction image. That is to say, the prediction image of the current block is generated using the pixel values of the reference block in the reference frame correlated with the current block by the motion vector. The motion prediction/compensation unit 122 outputs the generated prediction image to the switch 123.

The switch 123 selects the prediction image generated by the motion prediction/compensation unit 122 or intra prediction unit 121, and supplies to the computing unit 115.

The mode table switching unit 124 switches the decoding method for macro block types (i.e., VLC table) in accordance with the quantization parameter decoded by the lossless decoding unit 112, and supplies the switched VLC table information to the lossless decoding unit 112.

That is to say, the mode table switching unit 124 performs basically the same processing as with the mode table switching unit 78 in Fig. 12 except for obtaining the quantization parameter from the lossless decoding unit 112 instead of from the rate control unit 77.

[Configuration Example of Lossless Decoding Unit and Mode Table Switching Unit]

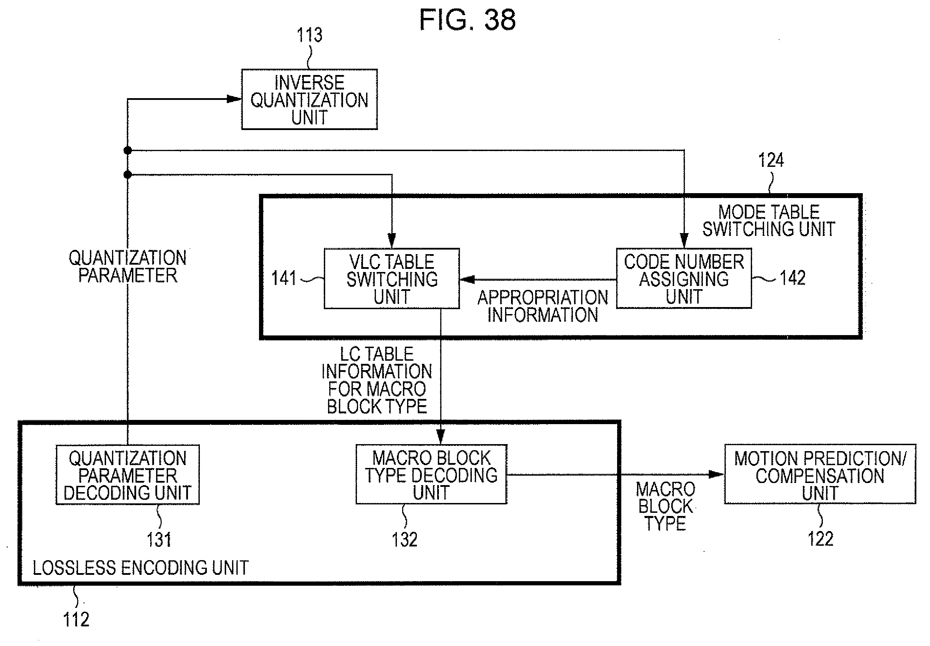

Fig. 38 is a block diagram illustrating a detailed configuration example of the lossless decoding unit and mode table switching unit.

In the example in Fig. 38, the lossless decoding unit 112 is configured including a quantization parameter decoding unit 131 and a macro block type decoding unit 132. That is to say, the lossless decoding unit 112 actually is also configured of portions for decoding the compressed image from the image encoding device 51 and other syntax elements such as motion vector information besides quantization parameters and macro block types, but with the example in Fig. 38, illustration thereof is omitted.

The mode table switching unit 124 is configured of a VLC table switching unit 141 and code number assigning unit 142.

The quantization parameter decoding unit 131 decodes the quantization parameter added to the header of the compressed image, and supplies the decoded quantization parameter to the inverse quantization unit 113, VLC table switching unit 141, and code number assigning unit 142.

The macro block type decoding unit 132 decodes the macro block type using the VLC table selected by the VLC table switching unit 141, and supplies the decoded macro block type to the motion prediction/compensation unit 122. Note that in the event that the macro block type relates the inter and the macro block type is not the skip or direct mode, the motion vector information and reference frame information and so forth are also decoded separately at the lossless decoding unit 112, and supplied to the motion prediction/compensation unit 122.

Note that while illustration is omitted from the drawings, in the event that the macro block type relates to inter, the macro block type is supplied to the intra prediction unit 121. In this case, the intra prediction mode information is also separately decoded at the lossless decoding unit 112 and supplied to the intra prediction unit 121.

The VLC table switching unit 141 has at least two types of VLC tables for macro block types. The VLC table switching unit 141 selects which of the two types of VLC tables for macro block types, in accordance with the quantization parameter from the quantization parameter decoding unit 131. The VLC table switching unit 141 adds the assigned information from the code number assigning unit 142 to the information of the VLC table for the macro block type that has been selected, and supplies this to the macro block type decoding unit 132.

The code number assigning unit 142 assigns a predetermined macro block type to code number 0 in accordance with the quantization parameter from the quantization parameter decoding unit 131, and supplies the assigned information to the VLC table switching unit 141.

[Description of Decoding Processing of Image Decoding Device]

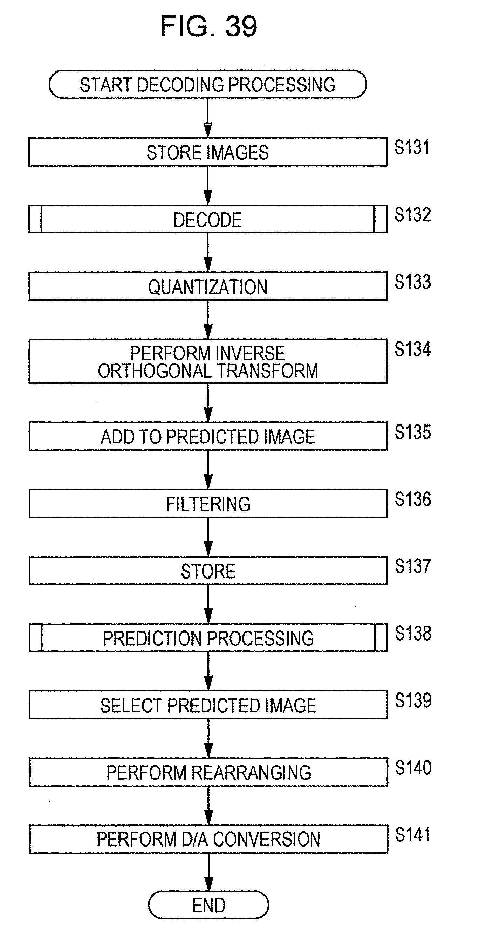

Next, the decoding processing that the image decoding device 101 executes will be described with reference to the flowchart in Fig. 39.

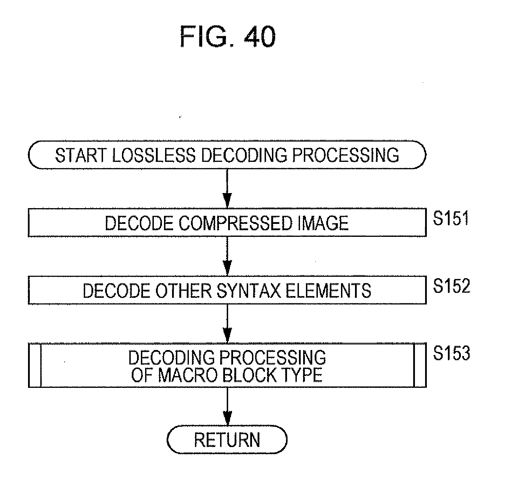

In step S131, the storage buffer 111 stores the transmitted image. In step S132, the lossless decoding unit 112 performs lossless decoding processing to decode the compressed image supplied from the storage buffer 111. The details of this lossless decoding processing will be described later with reference to Fig. 40.

Due to the processing in step S132, the I picture, P picture, and B picture encoded by the lossless encoding unit 66 in Fig. 12 are decoded. Further, the quantization parameter, macro block type, and if encoded at this time, the motion vector information, reference frame information, information indicating intra prediction mode, and so forth, are also decoded.

In step S133, the inverse quantization unit 113 inversely quantizes the transform coefficient decoded by the lossless decoding unit 112 using a property corresponding to the property of the quantization unit 65 in Fig. 12. In step S134, the inverse orthogonal transform unit 114 subjects the transform coefficient inversely quantized by the inverse quantization unit 113 to inverse orthogonal transform using a property corresponding to the property of the orthogonal transform unit 64 in Fig. 12. This means that difference information corresponding to the input of the orthogonal transform unit 64 in Fig. 12 (the output of the computing unit 63) has been decoded.

In step S135, the computing unit 115 adds the prediction image selected in the processing in later-described step S141 and input via the switch 123, to the difference information. Thus, the original image is decoded. In step S136, the deblocking filter 116 subjects the image output from the computing unit 115 to filtering. Thus, block noise is removed. In step S137, the frame memory 119 stores the image subjected to filtering.

In step S138, the intra prediction unit 121 or motion prediction/compensation unit 122 each perform the corresponding image prediction processing in response to the prediction mode information supplied from the lossless decoding unit 112.

That is to say, in the event that the macro block type relates to intra, information indicating the macro block type and intra prediction mode and so forth is supplied to the intra prediction unit 121. In the event that macro block type and intra prediction mode have been supplied from the lossless decoding unit 112, the intra prediction unit 121 performs the intra prediction processing in the intra prediction mode.

In the event that the macro block type relates to inter, the macro block type, and if necessary, motion vector information and reference frame information and so forth are supplied to the motion prediction/compensation unit 122. In the event that macro block type and so forth have been supplied from the lossless decoding unit 112, the motion prediction/compensation unit 122 performs motion prediction/compensation processing in the inter prediction mode, based on the macro block type.

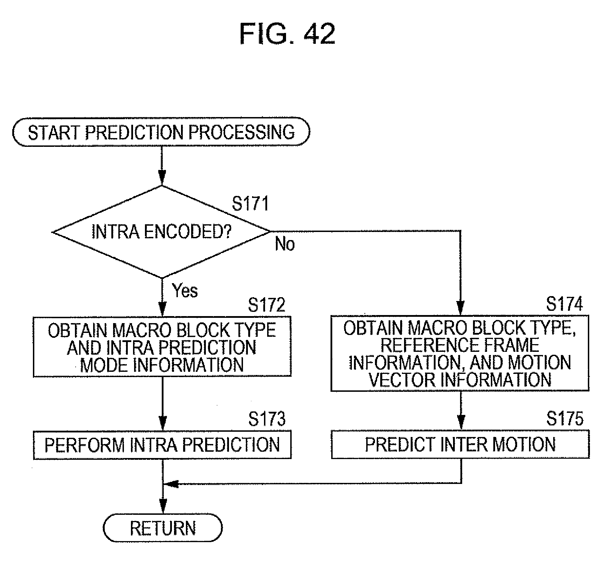

The details of the prediction processing in step S138 will be described later with reference to Fig. 42. According to this processing, the prediction image generated by the intra prediction unit 121 or the prediction image generated by the motion prediction/compensation unit 122 is supplied to the switch 123.

In step S139, the switch 123 selects the prediction image. Specifically, the prediction image generated by the intra prediction unit 121 or the prediction image generated by the motion prediction/compensation unit 122 is supplied. Accordingly, the supplied prediction image is selected, supplied to the computing unit 115, and in step S134, as described above, added to the output of the inverse orthogonal transform unit 114.

In step S140, the screen rearranging buffer 117 performs rearranging. Specifically, the sequence of frames rearranged for encoding by the screen rearranging buffer 62 of the image encoding device 51 is rearranged in the original display sequence.

In step S141, the D/A conversion unit 118 converts the image from the screen rearranging buffer 117 from digital to analog. This image is output to an unshown display, and the image is displayed.

[Description of Lossless Decoding Processing]

Next, the lossless decoding processing of step S132 in Fig. 39 will be described with reference to the flowchart in Fig. 40.

An image that is transmitted is stored in the storage buffer 111. In step S151, the lossless decoding unit 112 decodes the compressed image supplied from the storage buffer 111 with an decoding method corresponding to the encoding method of step S81 in Fig. 33, and supplies the decoded image to the inverse quantization unit 113.

In step S112, the lossless decoding unit 112 decodes the syntax elements other than the macro block type with a decoding method corresponding to the encoding method of step S82 in Fig. 33. Particularly, the quantization parameter is decoded at the quantization parameter decoding unit 131, and supplied to the inverse quantization unit 113, VLC table switching unit 141, and code number assigning unit 142.

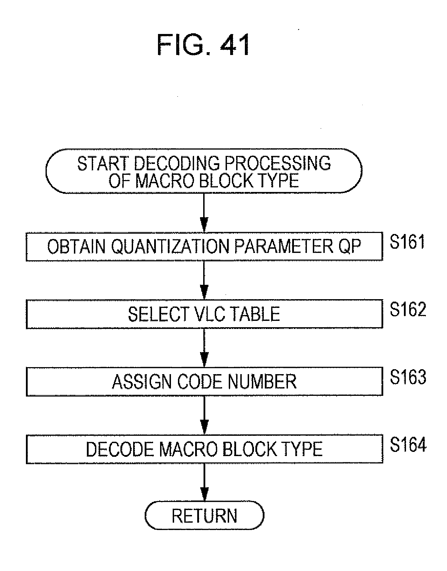

In step S153, the macro block type decoding unit 132 performs decoding processing of the macro block type. The details of this macro block type decoding processing will be described later with reference to Fig. 41.

Due to the processing in step S153, the information of the macro block type is decoded using the VLC table selected in accordance with the quantization parameter from the quantization parameter decoding unit 131.

[Description of Decoding Processing of Macro Block Type]

Next, the decoding processing of the macro block type in step S153 of Fig. 40 will be described with reference to the flowchart in Fig. 41.

The quantization parameter QP is supplied from the quantization parameter decoding unit 131 to the VLC table switching unit 141 and code number assigning unit 142 (step S152 in Fig. 40).

In step S161, the VLC table switching unit 141 and code number assigning unit 142 obtain the quantization parameter QP from the quantization parameter decoding unit 131.

In step S162, the VLC table switching unit 141 selects one of two types of tables, for example, as the VLC table for the macro block type, in accordance with the quantization parameter from the quantization parameter decoding unit 131. That is to say, the VLC table switching unit 141 selects the k = 0 table in Fig. 17 according to a quantization parameter lower than the predetermined threshold (e.g., QP = 22), and selects the k = 1 table according to a quantization parameter higher than the predetermined threshold (e.g., QP = 37).

Note that this predetermined threshold is the same as that set with the VLC table switching unit 81, and is obtained at the time of learning of the VLC tables, described with Fig. 43 and on, for example.

In step S163, the code number assigning unit 142 assigns code number "0" in accordance with the quantization parameter from the quantization parameter decoding unit 131. That is to say, the code number assigning unit 142 assigns the inter 16 x 16 mode to code number "0", in accordance with a quantization parameter lower than the predetermined threshold. Also, the code number assigning unit 142 assigns the skip (or direct) mode to code number "0", in accordance with a quantization parameter higher than the predetermined threshold.

This assigning information is supplied to the VLC table switching unit 141, and is supplied to the macro block type decoding unit 132 along with the VLC table information for the macro block type.

In step S164, the macro block type decoding unit 13 decodes the macro block type with the VLC table selected by the VLC table switching unit 141.

The decoded macro block type is used for the prediction processing in step S138 in Fig. 39, along with the other syntax elements encoded in step S152 in Fig. 40.

[Description of Prediction Processing]

Next, the prediction processing in step S138 in Fig. 39 will be described with reference to the flowchart in Fig. 42.

In step S171, the lossless decoding unit 112 determines whether or not the current block has been subjected to intra encoding, with reference to the macro block type decoded in step S164 in Fig. 41.

In the event that determination is made in step S171 that the current block has been subjected to intra encoding, the lossless decoding unit 112 supplies the intra prediction mode information decoded in step S152 in Fig. 40 to the intra prediction unit 121 along with the macro block type.

Accordingly, in step S172, the intra prediction unit 121 obtains the macro block type and intra prediction mode information, and in step S173 performs intra prediction.

Specifically, in the event that the image to be processed is an image to be subjected to intra processing, the necessary image is read out from the frame memory 119, and supplied to the intra prediction unit 121 via the switch 120. In step S173, the intra prediction unit 121 performs intra prediction following the intra prediction mode information, with the macro block type obtained in step S172, to generate a prediction image. The generated prediction image is output to the switch 123.

On the other hand, in the event that determination is made in step S171 that intra encoding has not been performed, the lossless decoding unit 112 supplies the macro block type to the motion prediction/compensation unit 122. At this time, unless the mode which the macro block type indicates is the skip (direct) mode, the reference frame information and motion vector information and the like are also decoded in step S152 in Fig. 40, and accordingly are supplied to the motion prediction/compensation unit 122.

In step S175, the motion prediction/compensation unit 122 performs normal inter prediction. That is to say, in the event that the image to be processed in an image to be subjected to inter prediction processing, a necessary image is read out from the frame memory 169 and supplied to the motion prediction/compensation unit 173 via the switch 170. In step S175, the motion prediction/compensation unit 173 performs motion prediction in the inter prediction mode based on the macro block type obtained in step S174, and generates a prediction image. The generated prediction image is output to the switch 123.

Thus, the VLC tables of the macro block types are switched at the image encoding device 51 and image decoding device 101 in accordance to quantization parameters, so the code length as to the macro block type can be shortened. Accordingly, the average code length can be shortened.

Fig. 43 represents the configuration of an embodiment of a learning device to which the present invention has been applied. This learning device 201 is a learning device for generating a VLC table based on Huffman coding, using training image signals.

Note that a training image signal is a test image for obtaining filter coefficients, and for example, a standard sequence used for standardization of image compression encoding that is available at www.vqeg.org may be used. Alternatively, input images corresponding to each application may be used. For example, in the event that the input is camera signals, learning may be performed using baseband signals imaged using a CCD or CMOS sensor.

The learning device 201 in Fig. 43 has in common with the image encoding device 51 in Fig. 12 the point of having an A/D conversion unit 61, a screen rearranging buffer 62, a computing unit 63, an orthogonal transform unit 64, a quantization unit 65, a lossless encoding unit 66, a storage buffer 67, an inverse quantization unit 68, an inverse orthogonal transform unit 69, a computing unit 70, a deblocking filter 71, frame memory 72, a switch 73, an intra prediction unit 74, a motion prediction/compensation unit 75, a prediction image selecting unit 76, and a rate control unit 77.

Also, the learning device 201 differs from the image encoding device 51 in Fig. 12 in the point of using image signals for training as signals used, and having a mode table calculating unit 211 instead of the mode table switching unit 78.

That is to say, with the learning device 201, training image signals are encoded under control of the mode table calculating unit 211, using a quantization parameter fixed by the rate control unit 77. Note that the learning device 201 performs basically the same encoding processing as the image encoding device 51 in Fig. 12, other than encoding as to the macro block type also being performed based on H.264/AVC format stipulations.

The lossless encoding unit 66 is supplied with information of the macro block type from the intra prediction unit 74 or motion prediction/compensation unit 75 corresponding to selection of the prediction image by the prediction image selecting unit 76, so that information is supplied to the mode table calculating unit 211.

The mode table calculating unit 211 controls the rate control unit 77 to control the rate of the quantization unit 65 with the fixed quantization parameter. The mode table calculating unit 211 uses the information of the quantization parameter and the information of the macro block type from the lossless encoding unit 66 to calculate the emergence probability of macro block types for each quantization parameter.

The mode table calculating unit 211 decides the VLC table corresponding to each quantization parameter by Huffman coding in accordance with the calculated emergence probability. Note that at this time, the threshold for the quantization parameter is also obtained.

Now, Huffman coding will be described. Huffman coding is used as a method for assigning bit rates to events, in the event that the probability of events is known beforehand, such that the average code length is the smallest.

To describe a code configuration method with Huffman coding, in the first step, leaves corresponding to information source symbols are created. Each leaf has described therein the probability of the information source symbol occurring. Hereinafter, this will be referred to as the probability of that leaf.

In the second step, one node is created for the two leaves with the smallest probability, and the node and the two leaves are connected by branches. One of the two branches is assigned 0, and the other is assigned 1. Further, the sum of the probability of the two leaves is described, and this node is taken as a new leaf. That is to say, the we consider the branches from this node to have been removed.

In the third step, if there is only one leaf remaining, the code configuration method ends here. Otherwise, the processing returns to the second step.

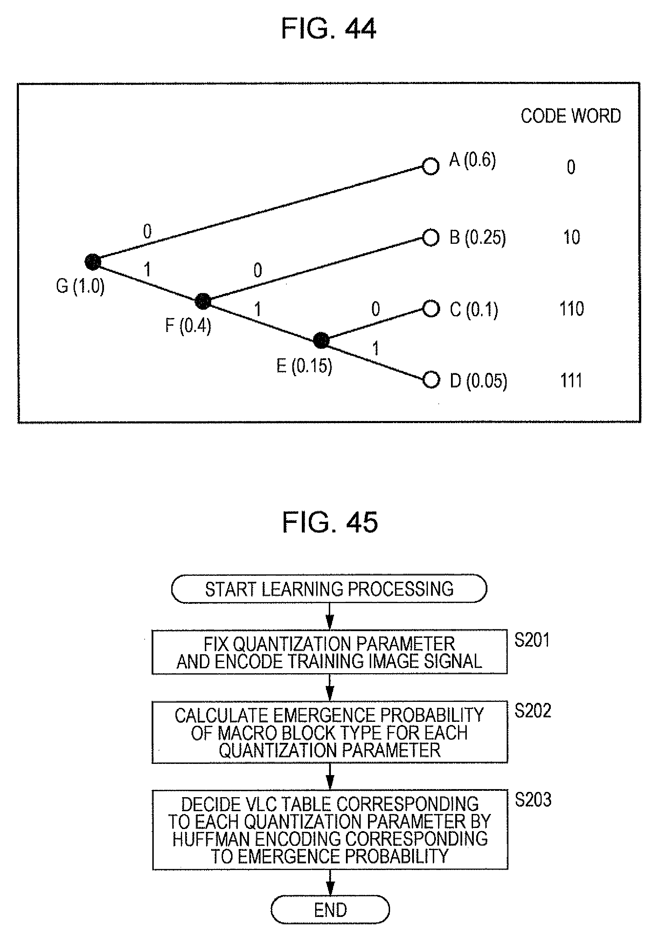

With this configuration method, a code tree having leaves corresponding to all information source symbols. A specific example thereof will be described with reference to Fig. 44.

With the example in Fig. 44, a Huffman code configuration is shown for a case wherein the probability of events A, B, C, and D occurring is 0.6, 0.25, 0.1, and 0.05, respectively. First, as a first step, leaves corresponding to A, B, C, and D are created. In the example in Fig. 44, the probability of each event is shown in the ().

The two leaves with the smallest probability are C and D, so as the second step, a node E is created, and C and D are connected to the node E. The probability of E at this time is 0.1 + 0.05 = 0.15.

Next, taking the node E to be a leaf as well, the same processing is performed on A, B, and E. That is to say, the two smallest leaves are B and F, so a node F is created, and B and E are connected to the node E. The probability of F at this time is 0.25 + 0.15 = 0.4.

Further, taking the node F to be a leaf as well, the same processing is performed on the two remaining leaves A and F. That is to say, a node G of A and F is created, and A and F are connected to the node G. The probability of G at this time is 0.6 + 0.4 = 1. Taking the node G to be a leaf as well, there is only one leaf left, so the symbol tree is completed.

The code words obtained from this symbol tree are 0, 10, 110, and 111, as to respective events A, B, C, and D, and the average code length is 1.55 (bits) from the following Expression (73).

$$0.6 * 1 + 0.25 * 2 + 0.1 * 3 + 0.05 * 3 \quad ...(73)$$

Next, the learning processing of the learning device 201 in Fig. 43 will be described with reference to the flowchart in Fig. 45.

The mode table calculating unit 211 controls the rate control unit 77 to fix the quantization parameter. Correspondingly, in step S201, the image encoding device 201 performs encoding of the training image signals. Note that this encoding processing is basically the same processing as the encoding processing described above with reference to Fig. 18 other than being performed based on H.264/AVC format stipulations for macro block type as well, and also being rate-controlled with a fixed quantization parameter. Accordingly, description of this encoding processing will be omitted.

Accordingly, macro block type information is supplied to the lossless encoding unit 66 from the intra prediction unit 74 or motion prediction/compensation unit 75, corresponding to the selection of the prediction image by the prediction image selecting unit 76. The lossless encoding unit 66 supplies the information thereof to the mode table calculating unit 211.

The processing of this step S201 is performed with regard to each of various quantization parameters.

In step S202, the mode table calculating unit 211 uses the information of the quantization parameter quantization parameters, and the information of the macro block type from the Lossless encoding unit 66, to calculate the emergence probably for the macro block types for each quantization parameter.

In step S203, the mode table calculating unit 211 determines the VLC table corresponding to each quantization parameter by the Huffman coding described above with Fig. 44, in accordance to the calculated emergence probability.

Note that while an example of the learning device 201 formed integrally with the image encoding device has been shown, in Fig. 43 an arrangement may be made wherein a learning device is configured of a computer including at least the mode table calculating unit 211 and the image encoding device 51 in Fig. 12 is made to perform the encoding processing with the quantization parameters. VLC tables corresponding to each quantization parameter are then determined using the information of the macro block types obtained as the result of the encoding processing, obtained at the learning device from the image encoding device 51 either online or offline.

The VLC table generated by being decided as described above is stored in the VLC table switching unit 81 of the image encoding device 51 or VLC table switching unit 141 of the image decoding device 101, and is used for the above-described encoding.

Note that while, of information relating to prediction mode, macro block type has been used for the above description, the inclination regarding quantization parameters as to macro block types and prediction mode distribution also holds for the intra 4 x 4 prediction mode described above with Fig. 11.

That is to say, with regard to the nine intra prediction modes described above with reference to Fig. 21, at the time that the information of one of mode 0 through mode 8 is attached to the header of a compressed image and transmitted by block, the greater the number of mode sent is, the greater the mode bit is.

Accordingly, with lower quantization parameters, i.e., higher bit rates, a greater-numbered mode is selected so as to raise the prediction efficiency even if the mode bit increases to a certain extent. In contrast, with higher quantization parameters, i.e., lower bit rates, a lower-numbered mode tends to be selected so as to keep the mode bit from increasing.

That is to say, if encoding processing is performed with a high quantization parameter, the emergence probability of intra prediction modes such as Vertical, Horizontal, DC, to which lower code numbers are assigned, is high, and the emergence probability of other prediction modes tends to be lower.

On the other hand, if encoding processing is performed with a low quantization parameter, the emergence probability of intra prediction modes with lower code numbers decreases, and the emergence probability of other prediction modes tends to rise.

Accordingly, in the event of encoding with a higher quantization parameter, code with a VLC table such as k = 0 is used for cases of intra prediction modes as well. Accordingly, the code length for intra prediction modes with low code numbers, of which the emergence frequency is high, can be shortened. On the other hand, in the event of encoding with a lower quantization parameter, code with a VLC table such as k = 1 is used. Accordingly, the code length for intra prediction modes of which the code number is not low, of which the emergence frequency is there to a certain extent, can be shortened.

Also, with the case of intra prediction modes as well, the assigning of code number "1" may be switched according to the quantization parameter.

As described above, the present invention is not restricted to encoding of macro block types, and can be also applied to intra prediction mode encoding. Of course, the present invention is not restricted to intra 4 x 4 prediction mode, and can also be applied to intra 8 x 8 prediction mode, intra 16 x 16 prediction mode, and intra prediction mode of color difference signals as well.

Also, while the above description has been described based on the H.264/AVC format, the present invention is not restricted to this, and is applicable to all encoding devices and decoding device which perform encoding of multiple macro block types or intra prediction modes by VLC.

Note that the present invention can be applied to image encoding devices and image decoding devices used for receiving image information (bit stream) compressed by orthogonal transform such as discrete cosine transform or the like, and motion compensation, as with MPEG, H.26x, or the like, via network media such as satellite broadcasting, cable television, the Internet, cellular phones, or the like. Also, the present invention can be applied to image encoding devices and image decoding devices used for processing on storage media such as optical discs, magnetic disks, flash memory, and so forth.

The above-described series of processing may be executed by hardware, or may be executed by software. In the event of executing the series of processing by software, a program making up the software thereof is installed in a computer. Here, examples of the computer include a computer built into dedicated hardware, and a general-purpose personal computer whereby various functions can be executed by various types of programs being installed thereto.

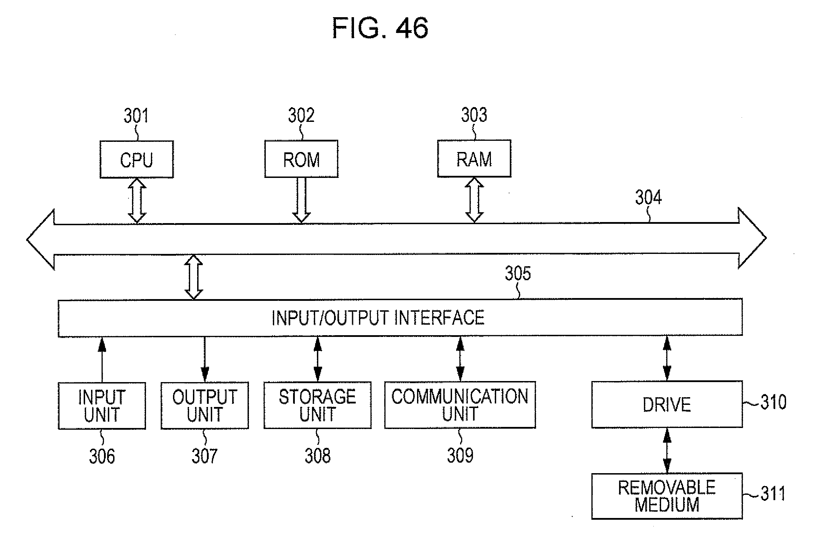

Fig. 46 is a block diagram illustrating a configuration example of the hardware of a computer which executes the above-described series of processing using a program.

With the computer, a CPU (Central Processing Unit) 301, ROM (Read Only Memory) 302, and RAM (Random Access Memory) 303 are mutually connected by a bus 304.

Further, an input/output interface 305 is connected to the bus 304. An input unit 306, an output unit 307, a storage unit 308, a communication unit 309, and a drive 310 are connected to the input/output interface 305.

The input unit 306 is made up of a keyboard, a mouse, a microphone, and so forth. The output unit 307 is made up of a display, a speaker, and so forth. The storage unit 308 is made up of a hard disk, nonvolatile memory, and so forth. The communication unit 309 is made up of a network interface and so forth. The drive 310 drives a removable medium 311 such as a magnetic disk, an optical disc, a magneto-optical disk, semiconductor memory, or the like.

With the computer thus configured, for example, the CPU 301 loads a program stored in the storage unit 308 to the RAM 303 via the input/output interface 305 and bus 304, and executes the program, and accordingly, the above-described series of processing is performed.

The program that the computer (CPU 301) executes may be provided by being recorded in the removable medium 311 serving as a package medium or the like, for example. Also, the program may be provided via a cable or wireless transmission medium such as a local area network, the Internet, or digital broadcasting.

With the computer, the program may be installed in the storage unit 308 via the input/output interface 305 by mounting the removable medium 311 on the drive 310. Also, the program may be received by the communication unit 309 via a cable or wireless transmission medium, and installed in the storage unit 308. Additionally, the program may be installed in the ROM 302 or storage unit 308 beforehand.

Note that the program that the computer executes may be a program wherein the processing is performed in the time sequence along the sequence described in the present Specification, or may be a program wherein the processing is performed in parallel or at necessary timing such as when call-up is performed.

The embodiments of the present invention are not restricted to the above-described embodiment, and various modifications may be made without departing from the essence of the present invention.

Reference Signs List

| | |
|---|---|
| 51 | image encoding device |
| 66 | lossless encoding unit |
| 74 | intra prediction unit |
| 75 | motion prediction/compensation unit |
| 77 | rate control unit |
| 78 | mode table switching unit |
| 81 | VLC table switching unit |
| 82 | code number assigning unit |
| 101 | image decoding device |
| 112 | lossless decoding unit |
| 121 | intra prediction unit |
| 122 | motion prediction/compensation unit |
| 124 | mode table switching unit |
| 131 | quantization parameter decoding unit |
| 132 | macro block type decoding unit |
| 141 | VLC table switching unit |
| 142 | code number assigning unit |
| 201 | learning device |
| 211 | mode table calculating unit |

**Claims**

**1.** An image processing device comprising:

quantization parameter decoding means configured to decode a quantization parameter in a current block which is the object of decoding processing;
switching means configured to switch decoding methods of information relating to the prediction mode as to said current block, in accordance with said quantization parameter; and
prediction mode decoding means configured to decode said information relating to the prediction mode, with said decoding method switched by said switching means.

**2.** The image processing device according to Claim 1, wherein said switching means switch said decoding method by switching VLC (Variable Length Coding) coding relating to said prediction mode, in accordance with said quantization parameter.

3. The image processing device according to Claim 2, wherein said information relating to the prediction mode is information of macro block types.

4. The image processing device according to Claim 2, wherein said information relating to the prediction mode is information of intra prediction modes.

5. The image processing device according to Claim 2, wherein, in the event of a quantization parameter of a value greater than a predetermined threshold, said switching means switch to a table of which bit length, as to an event of which the code number is small, is short.

6. The image processing device according to Claim 2, wherein, in the event of a quantization parameter of a value smaller than a predetermined threshold, said switching means switch to a table of which bit length increase is gradual even if code number increases.

7. The image processing device according to Claim 2, wherein said encoding means use Golumb coding for said VLC table.

8. The image processing device according to Claim 2, wherein said encoding means use Huffman coding for said VLC table.

9. The image processing device according to Claim 1, wherein said switching means switch said decoding methods by switching assigning of code numbers of said information relating to the prediction mode, in accordance with said quantization parameter.

10. The image processing device according to Claim 9, wherein said information relating to the prediction mode is information of inter macro block types.

11. The image processing device according to Claim 10, wherein, in the event of a quantization parameter of a value greater than a predetermined threshold, said switching means switch assigning of a skip or direct mode to the smallest code number.

12. The image processing device according to Claim 10, wherein, in the event of a quantization parameter of a value smaller than a predetermined threshold, said switching means switch assigning of an inter 16 x 16 prediction mode to the smallest code number.

13. The image processing device according to Claim 9, wherein said information relating to the prediction mode is information of intra prediction modes.

14. An image processing method comprising the steps of:

an image processing device

decoding a quantization parameter in a current block which is the object of decoding processing;
switching decoding methods of information relating to the prediction mode as to said current block, in accordance with said quantization parameter; and
decoding said information relating to the prediction mode, with said switched decoding method.

15. An image processing device comprising:

quantization parameter obtaining means configured to obtain a quantization parameter in a current block which is the object of encoding processing;
switching means configured to switch encoding methods of information relating to the prediction mode as to said current block, in accordance with said quantization parameter; and
prediction mode encoding means configured to encode said information relating to the prediction mode, with said encoding method switched by said switching means.

**16.** The image processing device according to Claim 15, wherein said switching means switch said encoding method by switching VLC (Variable Length Coding) coding relating to said prediction mode, in accordance with said quantization parameter.

**17.** The image processing device according to Claim 16, wherein, in the event of a quantization parameter of a value greater than a predetermined threshold, said switching means switch to a table of which bit length, as to an event of which the code number is small, is short.

**18.** The image processing device according to Claim 16, wherein, in the event of a quantization parameter of a value smaller than a predetermined threshold, said switching means switch to a table of which bit length increase is gradual even if code number increases.

**19.** The image processing device according to Claim 15, wherein said switching means switch said encoding methods by switching assigning of code numbers of said information relating to the prediction mode, in accordance with said quantization parameter.

**20.** An image processing method comprising the steps of:

an image processing device

obtaining a quantization parameter in a current block which is the object of encoding processing;
switching encoding methods of information relating to the prediction mode as to said current block, in accordance with said quantization parameter; and
encode said information relating to the prediction mode, with said encoding method switched by said switching means.

# FIG. 1

| Code Number | Code Words |
|:---:|:---:|
| 0 | 1 |
| 1 | 010 |
| 2 | 011 |
| 3 | 00100 |
| 4 | 00101 |
| 5 | 00110 |
| 6 | 00111 |
| ... | ... |

# FIG. 2

| v | Code Number |
|:---:|:---:|
| 0 | 0 |
| 1 | 1 |
| −1 | 2 |
| 2 | 3 |
| −2 | 4 |
| 3 | 5 |
| ... | ... |

# FIG. 3

# FIG. 4

# FIG. 5

| Code Symbol | Binarization |
|-------------|--------------|
| 0 | 0 |
| 1 | 10 |
| 2 | 110 |
| 3 | 1110 |
| 4 | 11110 |
| 5 | 111110 |
| ... | ... |

## FIG. 6

| Value (name) of mb_type | Bin string | | | | | | |
|---|---|---|---|---|---|---|---|
| 0 (1_4 × 4) | 0 | | | | | | |
| 1 (1_16 × 16_0_0_0) | 1 | 0 | 0 | 0 | 0 | 0 | |
| 2 (1_16 × 16_1_0_0) | 1 | 0 | 0 | 0 | 0 | 1 | |
| 3 (1_16 × 16_2_0_0) | 1 | 0 | 0 | 0 | 1 | 0 | |
| 4 (1_16 × 16_3_0_0) | 1 | 0 | 0 | 0 | 1 | 1 | |
| 5 (1_16 × 16_0_1_0) | 1 | 0 | 0 | 1 | 0 | 0 | 0 |
| 6 (1_16 × 16_1_1_0) | 1 | 0 | 0 | 1 | 0 | 0 | 1 |
| 7 (1_16 × 16_2_1_0) | 1 | 0 | 0 | 1 | 0 | 1 | 0 |
| 8 (1_16 × 16_3_1_0) | 1 | 0 | 0 | 1 | 0 | 1 | 1 |
| 9 (1_16 × 16_0_2_0) | 1 | 0 | 0 | 1 | 1 | 0 | 0 |
| 10 (1_16 × 16_1_2_0) | 1 | 0 | 0 | 1 | 1 | 0 | 1 |
| 11 (1_16 × 16_2_2_0) | 1 | 0 | 0 | 1 | 1 | 1 | 0 |
| 12 (1_16 × 16_3_2_0) | 1 | 0 | 0 | 1 | 1 | 1 | 1 |
| 13 (1_16 × 16_0_0_1) | 1 | 0 | 1 | 0 | 0 | 0 | |
| 14 (1_16 × 16_1_0_1) | 1 | 0 | 1 | 0 | 0 | 1 | |
| 15 (1_16 × 16_2_0_1) | 1 | 0 | 1 | 0 | 1 | 0 | |
| 16 (1_16 × 16_3_0_1) | 1 | 0 | 1 | 0 | 1 | 1 | |
| 17 (1_16 × 16_0_1_1) | 1 | 0 | 1 | 1 | 0 | 0 | 0 |
| 18 (1_16 × 16_1_1_1) | 1 | 0 | 1 | 1 | 0 | 0 | 1 |
| 19 (1_16 × 16_2_1_1) | 1 | 0 | 1 | 1 | 0 | 1 | 0 |
| 20 (1_16 × 16_3_1_1) | 1 | 0 | 1 | 1 | 0 | 1 | 1 |
| 21 (1_16 × 16_0_2_1) | 1 | 0 | 1 | 1 | 1 | 0 | 0 |
| 22 (1_16 × 16_1_2_1) | 1 | 0 | 1 | 1 | 1 | 0 | 1 |
| 23 (1_16 × 16_2_2_1) | 1 | 0 | 1 | 1 | 1 | 1 | 0 |
| 24 (1_16 × 16_3_2_1) | 1 | 0 | 1 | 1 | 1 | 1 | 1 |
| 25 (1_PCM) | 1 | 1 | | | | | |
| binIdx | 0 | 1 | 2 | 3 | 4 | 5 | 6 |

# FIG. 7

| Slice type | Value (name) of mb_type | Bin string | | | | | | |
|---|---|---|---|---|---|---|---|---|
| P,SP slice | 0 (P_L0_16 × 16) | 0 | 0 | 0 | | | | |
| | 1 (P_L0_L0_16 × 8) | 0 | 1 | 1 | | | | |
| | 2 (P_L0_L0_8 × 16) | 0 | 1 | 0 | | | | |
| | 3 (P_8 × 8) | 0 | 0 | 1 | | | | |
| | 4 (P_8 × 8ref0) | ... | | | | | | |
| | 5 to 30 (Intra,prefix,only) | 1 | | | | | | |
| B slice | 0 (B_Direct_16 × 16) | 0 | | | | | | |
| | 1 (B_L0_16 × 16) | 1 | 0 | 0 | | | | |
| | 2 (B_L1_16 × 16) | 1 | 0 | 1 | | | | |
| | 3 (B_Bi_16 × 16) | 1 | 1 | 0 | 0 | 0 | 0 | |
| | 4 (B_L0_L0_16 × 8) | 1 | 1 | 0 | 0 | 0 | 1 | |
| | 5 (B_L0_L0_8 × 16) | 1 | 1 | 0 | 0 | 1 | 0 | |
| | 6 (B_L1_L1_16 × 8) | 1 | 1 | 0 | 0 | 1 | 1 | |
| | 7 (B_L1_L1_8 × 16) | 1 | 1 | 0 | 1 | 0 | 0 | |
| | 8 (B_L0_L1_16 × 8) | 1 | 1 | 0 | 1 | 0 | 1 | |
| | 9 (B_L0_L1_8 × 16) | 1 | 1 | 0 | 1 | 1 | 0 | |
| | 10 (B_L1_L0_16 × 8) | 1 | 1 | 0 | 1 | 1 | 1 | |
| | 11 (B_L1_L0_8 × 16) | 1 | 1 | 1 | 1 | 1 | 0 | |
| | 12 (B_L0_Bi_16 × 8) | 1 | 1 | 1 | 0 | 0 | 0 | 0 |
| | 13 (B_L0_Bi_8 × 16) | 1 | 1 | 1 | 0 | 0 | 0 | 1 |
| | 14 (B_L1_Bi_16 × 8) | 1 | 1 | 1 | 0 | 0 | 1 | 0 |
| | 15 (B_L1_Bi_8 × 16) | 1 | 1 | 1 | 0 | 0 | 1 | 1 |
| | 16 (B_Bi_L0_16 × 8) | 1 | 1 | 1 | 0 | 1 | 0 | 0 |
| | 17 (B_Bi_L0_8 × 16) | 1 | 1 | 1 | 0 | 1 | 0 | 1 |
| | 18 (B_Bi_L1_16 × 8) | 1 | 1 | 1 | 0 | 1 | 1 | 0 |
| | 19 (B_Bi_L1_8 × 16) | 1 | 1 | 1 | 0 | 1 | 1 | 1 |
| | 20 (B_Bi_Bi_16 × 8) | 1 | 1 | 1 | 1 | 0 | 0 | 0 |
| | 21 (B_Bi_Bi_8 × 16) | 1 | 1 | 1 | 1 | 0 | 0 | 1 |
| | 22 (B_8 × 8) | 1 | 1 | 1 | 1 | 1 | 1 | |
| | 23 to 48 (Intra,prefix,only) | 1 | 1 | 1 | 1 | 0 | 1 | |
| binIdx | | 0 | 1 | 2 | 3 | 4 | 5 | 6 |

# FIG. 8

| Slice type | Value (name) of sub_mb_type | Bin string | | | | | |
|---|---|---|---|---|---|---|---|
| P,SP slice | 0 (P_L0_8 × 8) | 1 | | | | | |
| | 1 (P_L0_8 × 4) | 0 | 0 | | | | |
| | 2 (P_L0_4 × 8) | 0 | 1 | 1 | | | |
| | 3 (P_L04 × 4) | 0 | 1 | 0 | | | |
| B slice | 0 (B_Direct_8 × 8) | 0 | | | | | |
| | 1 (B_L0_8 × 8) | 1 | 0 | 0 | | | |
| | 2 (B_L1_8 × 8) | 1 | 0 | 1 | | | |
| | 3 (B_Bi_8 × 8) | 1 | 1 | 0 | 0 | 0 | |
| | 4 (B_L0_8 × 4) | 1 | 1 | 0 | 0 | 1 | |
| | 5 (B_L0_4 × 8) | 1 | 1 | 0 | 1 | 0 | |
| | 6 (B_L1_8 × 4) | 1 | 1 | 0 | 1 | 1 | |
| | 7 (B_L1_4 × 8) | 1 | 1 | 1 | 0 | 0 | 0 |
| | 8 (B_Bi_8 × 4) | 1 | 1 | 1 | 0 | 0 | 1 |
| | 9 (B_Bi_4 × 8) | 1 | 1 | 1 | 0 | 1 | 0 |
| | 10 (B_L0_4 × 4) | 1 | 1 | 1 | 0 | 1 | 1 |
| | 11 (B_L1_4 × 4) | 1 | 1 | 1 | 1 | 0 | |
| | 12 (B_Bi_4 × 4) | 1 | 1 | 1 | 1 | 1 | |
| binIdx | | 0 | 1 | 2 | 3 | 4 | 5 |

# FIG. 9

# FIG. 10

EP 2 456 205 A1

# FIG. 11

# FIG. 12

EP 2 456 205 A1

## FIG. 13

MACRO BLOCK TYPE

16 × 16   16 × 8   8 × 16   8 × 8

SUB MACRO BLOCK TYPE

8 × 8   8 × 4   4 × 8   4 × 4

## FIG. 14

D | B        C

A | E

# FIG. 15

L0 REFERENCE
PICTURE

CURRENT
PICTURE

L1 REFERENCE
PICTURE

$mv_{Col}$

$mv_{L0}$

$mv_{L1}$

Co-Located BLOCK

CURRENT BLOCK

$TD_B$

$TD_D$

t

EP 2 456 205 A1

# FIG. 16

EP 2 456 205 A1

# FIG. 17

| Code Number | k=0 | k=1 |
|:---:|:---:|:---:|
| 0 | 1 | 10 |
| 1 | 01 | 11 |
| 2 | 001 | 010 |
| 3 | 0001 | 011 |
| 4 | 00001 | 0010 |
| 5 | 000001 | 0011 |
| 6 | 0000001 | 00010 |
| ... | ... | ... |

# FIG. 18

START ENCODING PROCESSING

PERFORM A/D CONVERSION — S11

PERFORM REARRANGING — S12

COMPUTE DIFFERENCE BETWEEN IMAGE AND PREDICTED IMAGE — S13

ORTHOGONAL TRANSFORM — S14

QUANTIZATION — S15

INVERSE QUANTIZATION — S16

INVERSE ORTHOGONAL TRANSFORM — S17

ADD TO PREDICTED IMAGE — S18

PERFORM FILTERING — S19

STORE — S20

PREDICTION PROCESSING — S21

SELECT PREDICTED IMAGE — S22

ENCODING — S23

ACCUMULATE — S24

CONTROL RATE — S25

END

# FIG. 19

```
START PREDICTION PROCESSING

INTER PREDICTION PROCESSING            S31

INTER MOTION PREDICTION PROCESSING     S32

DETERMINE OPTIMAL                      S33
INTER PREDICTION MODE

RETURN
```

FIG. 20

−1 (ONLY I16 × 16 Mode)

16

17

| 0 | 1 | 4 | 5 |
| 2 | 3 | 6 | 7 |
| 8 | 9 | 12 | 13 |
| 10 | 11 | 14 | 15 |

Y

| 18 | 19 |
| 20 | 21 |

Cb

| 22 | 23 |
| 24 | 25 |

Cr

EP 2 456 205 A1

## FIG. 21

| Intra4×4LumaPredMode[4×4LumaBlkIdx] | Name of Intra4×4LumaPredMode[4×4LumaBlkIdx] |
|---|---|
| 0 | Intra_4×4_Vertical(prediction mode) |
| 1 | Intra_4×4_Horizontal(prediction mode) |
| 2 | Intra_4×4_DC(prediction mode) |
| 3 | Intra_4×4_Diagonal_Down_Left(prediction mode) |
| 4 | Intra_4×4_Diagonal_Down_Right(prediction mode) |
| 5 | Intra_4×4_Vertical_Right(prediction mode) |
| 6 | Intra_4×4_Horizontal_Down(prediction mode) |
| 7 | Intra_4×4_Vertical_Left(prediction mode) |
| 8 | Intra_4×4_Horizontal_Up(prediction mode) |

# FIG. 22

## FIG. 23

## FIG. 24

# FIG. 25

0: VERTICAL

1: HORIZONTAL

2: DC

3: DIAGONAL LOWER LEFT

4: DIAGONAL LOWER RIGHT

5: VERTICAL RIGHT

6: HORIZONTAL DOWN

7: VERTICAL LEFT

8: HORIZONTAL UP

EP 2 456 205 A1

## FIG. 26

| Intra8×8LumaPredMode[8×8LumaBlkIdx] | Name of Intra8×8LumaPredMode[8×8LumaBlkIdx] |
| --- | --- |
| 0 | Intra_8×8_Vertical(prediction mode) |
| 1 | Intra_8×8_Horizontal(prediction mode) |
| 2 | Intra_8×8_DC(prediction mode) |
| 3 | Intra_8×8_Diagonal_Down_Left(prediction mode) |
| 4 | Intra_8×8_Diagonal_Down_Right(prediction mode) |
| 5 | Intra_8×8_Vertical_Right(prediction mode) |
| 6 | Intra_8×8_Horizontal_Down(prediction mode) |
| 7 | Intra_8×8_Vertical_Left(prediction mode) |
| 8 | Intra_8×8_Horizontal_Up(prediction mode) |

EP 2 456 205 A1

# FIG. 27

| Intra_16×16_pred_mode | Name of Intra_16×16_pred_mode |
|:---:|:---:|
| 0 | Intra_16×16_Vertical(prediction_mode) |
| 1 | Intra_16×16_Horizontal(prediction_mode) |
| 2 | Intra_16×16_DC(prediction_mode) |
| 3 | Intra_16×16_Plane(prediction_mode) |

FIG. 28

# FIG. 29

P(0, −1) ... P(7, −1) ... P(15, −1)

P(−1, 0)

⋮

P(−1, 7)

⋮

P(−1, 15)

# FIG. 30

| Intra_chroma_pred_mode | Name of Intra_chroma_pred_mode |
|---|---|
| 0 | Intra_chroma_DC(prediction mode) |
| 1 | Intra_chroma_Horizontal(prediction mode) |
| 2 | Intra_chroma_Vertical(prediction mode) |
| 3 | Intra_chroma_Plane(prediction mode) |

# FIG. 31

```
( START INTRA PREDICTION PROCESSING )
                    │
                    ▼
┌──────────────────────────────────────────┐  S41
│   PERFORM INTRA PREDICTION FOR EACH       │
│  INTRA PREDICTION MODE OF 4 × 4 PIXELS,   │
│    8 × 8 PIXELS, AND 16 × 16 PIXELS       │
└──────────────────────────────────────────┘
                    │
                    ▼
┌──────────────────────────────────────────┐  S42
│    CALCULATE COST FUNCTION VALUE          │
│    AS TO EACH INTRA PREDICTION MODE       │
└──────────────────────────────────────────┘
                    │
                    ▼
┌──────────────────────────────────────────┐  S43
│    DETERMINE OPTIMAL MODE FOR             │
│    EACH INTRA PREDICTION MODE             │
└──────────────────────────────────────────┘
                    │
                    ▼
┌──────────────────────────────────────────┐  S44
│   SELECT ONE INTRA PREDICTION MODE        │
│  FROM EACH OPTIMAL MODE DETERMINED        │
│    AS TO EACH INTRA PREDICTION MODE       │
└──────────────────────────────────────────┘
                    │
                    ▼
             (  RETURN  )
```

# FIG. 32

START INTER MOTION PREDICTION PROCESSING

DETERMINE MOTION VECTOR AND REFERENCE IMAGE FOR EACH INTER PREDICTION MODE OF 16 × 16 PIXELS AND 4 × 4 PIXELS — S61

PERFORM MOTION PREDICTION AND COMPENSATION PROCESSING ON THE REFERENCE IMAGE BASED ON THE MOTION VECTOR, FOR EACH INTER PREDICTION MODE — S62

GENERATE MOTION VECTOR INFORMATION FOR THE MOTION VECTOR DETERMINED FOR EACH INTER PREDICTION MODE — S63

CALCULATE COST FUNCTION VALUE FOR EACH INTER PREDICTION MODE — S64

RETURN

# FIG. 33

START LOSSLESS ENCODING PROCESSING

ENCODE ORTHOGONAL COEFFICIENT — S81

ENCODE OTHER SYNTAX ELEMENTS — S82

MACRO BLOCK TYPE ENCODING PROCESSING — S83

ADD ENCODED SYNTAX ELEMENTS TO HEADER — S84

RETURN

# FIG. 34

A

| 0 | 1 | 5 | 6 |
|---|---|---|---|
| 2 | 4 | 7 | 12 |
| 3 | 8 | 11 | 13 |
| 9 | 10 | 14 | 15 |

B

| 0 | 2 | 8 | 12 |
|---|---|---|---|
| 1 | 5 | 9 | 13 |
| 3 | 6 | 10 | 14 |
| 4 | 7 | 11 | 15 |

FIG. 35

# FIG. 36

```
START MACRO BLOCK TYPE ENCODING PROCESSING
                    │
                    ▼
┌─────────────────────────────────────────┐
│   OBTAIN QUANTIZATION PARAMETER QP       │  S91
└─────────────────────────────────────────┘
                    │
                    ▼
┌─────────────────────────────────────────┐
│            SELECT VLC TABLE              │  S92
└─────────────────────────────────────────┘
                    │
                    ▼
┌─────────────────────────────────────────┐
│          ASSIGN CODE NUMBER              │  S93
└─────────────────────────────────────────┘
                    │
                    ▼
┌─────────────────────────────────────────┐
│       ENCODE MACRO BLOCK TYPE            │  S94
│        WITH SELECTED VLC TABLE           │
└─────────────────────────────────────────┘
                    │
                    ▼
               RETURN
```

# FIG. 37

EP 2 456 205 A1

# FIG. 38

EP 2 456 205 A1

# FIG. 39

START DECODING PROCESSING

STORE IMAGES — S131

DECODE — S132

QUANTIZATION — S133

PERFORM INVERSE
ORTHOGONAL TRANSFORM — S134

ADD TO PREDICTED IMAGE — S135

FILTERING — S136

STORE — S137

PREDICTION PROCESSING — S138

SELECT PREDICTED IMAGE — S139

PERFORM REARRANGING — S140

PERFORM D/A CONVERSION — S141

END

# FIG. 40

START LOSSLESS DECODING PROCESSING

DECODE COMPRESSED IMAGE — S151

DECODE OTHER SYNTAX ELEMENTS — S152

DECODING PROCESSING
OF MACRO BLOCK TYPE — S153

RETURN

# FIG. 41

```
        ╭─────────────────────────────────╮
        │   START DECODING PROCESSING     │
        │     OF MACRO BLOCK TYPE         │
        ╰─────────────────────────────────╯
                       │
                       ▼
        ┌─────────────────────────────────┐
        │ OBTAIN QUANTIZATION PARAMETER QP │  S161
        └─────────────────────────────────┘
                       │
                       ▼
        ┌─────────────────────────────────┐
        │         SELECT VLC TABLE         │  S162
        └─────────────────────────────────┘
                       │
                       ▼
        ┌─────────────────────────────────┐
        │        ASSIGN CODE NUMBER        │  S163
        └─────────────────────────────────┘
                       │
                       ▼
        ┌─────────────────────────────────┐
        │      DECODE MACRO BLOCK TYPE     │  S164
        └─────────────────────────────────┘
                       │
                       ▼
                 ╭──────────╮
                 │  RETURN  │
                 ╰──────────╯
```

# FIG. 42

```
( START PREDICTION PROCESSING )
              │
              ▼
         ╱          ╲          S171
        ╱ INTRA      ╲
       ╱  ENCODED?    ╲───── No
        ╲            ╱
         ╲          ╱
              │
             Yes
```

```
        S172                              S174
┌──────────────────────┐        ┌──────────────────────┐
│ OBTAIN MACRO BLOCK    │        │ OBTAIN MACRO BLOCK    │
│ TYPE AND INTRA        │        │ TYPE, REFERENCE FRAME │
│ PREDICTION MODE       │        │ INFORMATION, AND      │
│ INFORMATION           │        │ MOTION VECTOR         │
└──────────────────────┘        │ INFORMATION           │
                                └──────────────────────┘
```

```
        S173                              S175
┌──────────────────────┐        ┌──────────────────────┐
│ PERFORM INTRA         │        │ PREDICT INTER MOTION  │
│ PREDICTION            │        │                       │
└──────────────────────┘        └──────────────────────┘
              │
              ▼
        ( RETURN )
```

80

FIG. 43

EP 2 456 205 A1

# FIG. 44

|  | CODE WORD |
|---|---|
| A (0.6) | 0 |
| B (0.25) | 10 |
| C (0.1) | 110 |
| D (0.05) | 111 |

G (1.0), F (0.4), E (0.15)

# FIG. 45

START LEARNING PROCESSING

FIX QUANTIZATION PARAMETER AND ENCODE TRAINING IMAGE SIGNAL — S201

CALCULATE EMERGENCE PROBABILITY OF MACRO BLOCK TYPE FOR EACH QUANTIZATION PARAMETER — S202

DECIDE VLC TABLE CORRESPONDING TO EACH QUANTIZATION PARAMETER BY HUFFMAN ENCODING CORRESPONDING TO EMERGENCE PROBABILITY — S203

END

FIG. 46

EP 2 456 205 A1

## INTERNATIONAL SEARCH REPORT

| | International application No. |
|---|---|
| | PCT/JP2010/061658 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2005-516497 A (Nokia Corp.),<br>02 June 2005 (02.06.2005),<br>paragraphs [0046] to [0058], [0063], [0088]<br>& WO 2003/063501 A1 | 1-4,7-10,<br>13-16,19-20<br>5-6,11-12,<br>17-18 |
| A | JP 2004-7376 A (Matsushita Electric Industrial<br>Co., Ltd.),<br>08 January 2004 (08.01.2004),<br>entire text; all drawings<br>& US 2004/0174278 A1    & EP 1453208 A1<br>& CN 1524384 A           & KR 10-2008-0041752 A | 1-20 |
| A | WO 2004/039083 A1 (NTT Docomo Inc.),<br>06 May 2004 (06.05.2004),<br>entire text; all drawings<br>& US 2004/0234144 A1    & EP 1478190 A1<br>& CN 1545813 A | 1-20 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 September, 2010 (21.09.10) | 05 October, 2010 (05.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/061658

| C (Continuation). | DOCUMENTS CONSIDERED TO BE RELEVANT | | |
|---|---|---|
| Category* | Citation of document, with indication, where appropriate, of the relevant passages | Relevant to claim No. |
| A | JP 2004-135252 A (Sony Corp.),<br>30 April 2004 (30.04.2004),<br>entire text; all drawings<br>(Family: none) | 1-20 |

Form PCT/ISA/210 (continuation of second sheet) (July 2009)

**INTERNATIONAL SEARCH REPORT**

International application No.

PCT/JP2010/061658

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
    It is described in JP 2005-516497 A (Nokia Corp.), 2 June 2005 (02.06.2005),
paragraphs [0046] - [0058], [0063], [0088] that a VLC coding table of data
symbols concerning a prediction mode of a macro block-type or the like in
accordance to quantization parameters, and therefore, the invention in claim
1 cannot be considered to be novel in the light of the invention described
in the afore-said document and does not have a special technical feature.
                                        (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/061658 |

Continuation of Box No.III of continuation of first sheet(2)

Consequently, there is no technical relationship involving one or more same or corresponding special technical feature among the inventions in claims 1 - 20, and therefore, said inventions in claims 1 - 20 cannot be considered to be so linked one another as to form a single general inventive concept.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 7.4.2.2 Picture parameter set RBSP semantics. *ITU-T Recommendation H.264 Advanced video coding for generic audiovisual,* November 2007, 162, 164

- *H.264/AVC Software Coordination,* 10 July 2009, http://iphome.hhi.de/suehring/tml/index.htm